# EUROPEAN PATENT APPLICATION

(11) **EP 4 811 887 A1**
(43) Date of publication of application: **23.09.2026**
(21) Application number: 24895739.1
(22) Date of filing: 08.08.2024
(51) Int. Cl.: H04W 52/36

(54) **COMMUNICATION METHOD AND APPARATUS**

(30) Priority: 30.11.2023 CN 202311641673
(71) Applicant: Huawei Technologies Co., Ltd., Shenzhen, Guangdong 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN)
(74) Representative: Gill Jennings & Every LLP
(86) International application number: PCT/CN2024/110724
(87) International publication number: WO 2025/112636

(57) **Abstract**

This application relates to the field of communication technologies and provides a communication method and apparatus. The method includes: After a power headroom report PHR is triggered, a terminal device determines first information based on a first physical uplink shared channel PUSCH, and determines second information based on a second PUSCH. A first PHR of the first information is determined based on a first parameter corresponding to a first transmission occasion of the first PUSCH, the first transmission occasion includes a first time unit, and the first time unit belongs to a subband full-duplex SBFD time unit or a non-SBFD time unit. A second PHR of the second information is determined based on a second parameter corresponding to a second transmission occasion of the second PUSCH, the second transmission occasion includes a second time unit, and a time unit type to which the second time unit belongs is determined based on a time unit type to which the first time unit belongs. The terminal device sends the first information and the second information, and cancels the triggered PHR.

## Description

This application claims priority to Chinese Patent Application No. 202311641673.0, filed with the China National Intellectual Property Administration on November 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a terminal device sends uplink signals in a subband full-duplex (subband full-duplex, SBFD) time unit and a non-SBFD time unit by using different power control parameters. Therefore, the terminal device separately sends power headroom reports (power headroom report, PHR) in the SBFD time unit and the non-SBFD time unit through physical uplink shared channels (physical uplink shared channels, PUSCHs). The PHR may provide a network device with information used for power control and scheduling.

However, in a typical SBFD slot configuration, because a quantity of SBFD time units is greater than a quantity of non-SBFD time units, there is a low probability that the terminal device reports the PHR in the non-SBFD time unit, affecting uplink transmission performance of the non-SBFD time unit.

### SUMMARY

To resolve the foregoing technical problem, this application provides a communication method and apparatus, to ensure uplink transmission performance of a non-SBFD time unit. To achieve the foregoing objective, this application uses the following technical solutions.

According to a first aspect, a communication method is provided. The method may be performed by a terminal device. Unless otherwise specified, the "terminal device" in this application may be the terminal device, or may be a component (for example, a processor, a chip, or a chip system) in the terminal device, or may be a logical module or software that can implement all or some functions of the terminal device. The following uses an example in which the method is performed by the terminal device for description. The method includes:

After a power headroom report PHR is triggered, the terminal device determines first information based on a first physical uplink shared channel PUSCH, and determines second information based on a second PUSCH.

The first information includes a first PHR, the first PHR is determined based on a first parameter corresponding to a first transmission occasion of the first PUSCH, the first transmission occasion includes a first time unit, the first time unit belongs to a first type of time unit, the first type of time unit is a subband full-duplex SBFD time unit or a non-SBFD time unit, and the first parameter is used to determine a transmit power of the first PUSCH on the first transmission occasion.

For example, that the first transmission occasion includes the first time unit may be understood as that the first transmission occasion includes only the first time unit.

The second information includes a second PHR, the second PHR is determined based on a second parameter corresponding to a second transmission occasion of the second PUSCH, the second transmission occasion includes a second time unit, the second time unit is determined based on a second type of time unit, the second type of time unit is determined based on the first type of time unit, the second type of time unit is different from the first type of time unit, and the second parameter is used to determine a transmit power of the second PUSCH on the second transmission occasion.

For example, that the second transmission occasion includes the second time unit may be understood as that the second transmission occasion includes only the second time unit.

The terminal device sends the first information. The first information is carried on the first PUSCH. For example, the first information is carried on the first transmission occasion of the first PUSCH, or the first information is carried on another transmission occasion of the first PUSCH.

The terminal device sends the second information. The second information is carried on the second PUSCH. For example, the second information is carried on the second transmission occasion of the second PUSCH, or the second information is carried on another transmission occasion of the second PUSCH.

The terminal device cancels the triggered PHR. Optionally, another triggered PHR is also canceled.

In this way, after the PHR is triggered once, the terminal device determines the first information and the second information, and then sends the first information and the second information. Only after determining the first information and the second information, the terminal device cancels the triggered PHR, to complete one PHR process. The first information and the second information are reported through different PUSCHs, the first PHR is determined based on the first parameter corresponding to the first transmission occasion of the first PUSCH, the second PHR is determined based on the second parameter corresponding to the second transmission occasion of the second PUSCH, and types of time units in which the first transmission occasion and the second transmission occasion are located are different. Therefore, in one PHR process, the terminal device reports PHRs corresponding to two time unit types, so that a reporting probability of an actual PH in the SBFD time unit is the same as that of an actual PH in the non-SBFD time unit, thereby helping ensure uplink performance of the non-SBFD time unit.

In a possible design, the first information further includes time unit type information of the first type of time unit, to indicate a time unit type to which the first time unit belongs.

For example, if the first time unit is an SBFD time unit, the first type of time unit is an SBFD time unit.

For another example, if the first time unit is a non-SBFD time unit, the first type of time unit is a non-SBFD time unit.

In a possible design, the second information further includes time unit type information of the second type of time unit, to indicate a time unit type to which the second time unit belongs.

For example, when the first time unit is a non-SBFD time unit, if the second time unit is an SBFD time unit, the second type of time unit is an SBFD time unit.

For another example, when the first time unit is an SBFD time unit, if the second time unit is a non-SBFD time unit, the second type of time unit is a non-SBFD time unit.

In a possible design, the first information further includes first power information, and the first power information indicates a maximum transmit power of the first PUSCH on the first transmission occasion.

In a possible design, the second information further includes second power information, and the second power information indicates a maximum transmit power of the second PUSCH on the second transmission occasion.

In a possible design, the first transmission occasion is the 1^{st} transmission occasion of the first PUSCH.

In a possible design, the second transmission occasion is the 1^{st} transmission occasion of the second PUSCH.

In a possible design, the first PUSCH is a PUSCH with dynamic grant, the first PUSCH belongs to a PUSCH scheduled by using first DCI, and the first DCI is the 1^{st} piece of DCI that satisfies a first condition after the PHR is triggered.

The first condition includes at least one of the following:
the first DCI is DCI used to schedule a transport block for initial transmission after the PHR is triggered, the transport block scheduled by using the first DCI includes a first transport block, and the first transport block includes the first information; or
the PUSCH scheduled by using the first DCI can accommodate (accommodate) the first information, which may be understood as that a time-frequency resource of the PUSCH scheduled by using the first DCI is sufficient for transmitting the first information.

Initial transmission may be understood as first transmission instead of retransmission.

In other words, if the first PUSCH is a PUSCH with dynamic grant, when the first DCI used to schedule the first PUSCH satisfies the first condition, the first PHR is determined based on the first PUSCH.

In a possible design, the first PUSCH is a PUSCH with configured grant, and the first PUSCH is the 1^{st} PUSCH that satisfies a second condition after the PHR is triggered.

The second condition includes at least one of the following:
first duration corresponding to the first PUSCH is greater than or equal to first PUSCH preparation duration, and the first duration is a time interval between triggering of the PHR and the 1^{st} symbol of the first PUSCH; or the first PUSCH can accommodate the first information.

In other words, if the first PUSCH is a PUSCH with configured grant, when the first PUSCH satisfies the second condition, the first PHR is determined based on the first PUSCH.

In a possible design, the second PUSCH is a PUSCH with dynamic grant, the second PUSCH belongs to a PUSCH scheduled by using second DCI, and the second DCI is the 1^{st} piece of DCI that satisfies a third condition after the PHR is triggered.

The third condition includes at least one of the following:
the second DCI is DCI used to schedule a transport block for initial transmission after the PHR is triggered, the transport block scheduled by using the second DCI includes a second transport block, and the second transport block includes the second information; or
the PUSCH scheduled by using the second DCI can accommodate (accommodate) the second information, which may be understood as that a time-frequency resource of the PUSCH scheduled by using the second DCI is sufficient for transmitting the second information.

In other words, if the second PUSCH is a PUSCH with dynamic grant, when the second DCI used to schedule the second PUSCH satisfies the third condition, the second PHR is determined based on the second PUSCH.

In a possible design, the second PUSCH is a PUSCH with configured grant, and the second PUSCH is the 1^{st} PUSCH that satisfies a fourth condition after the PHR is triggered.

The fourth condition includes at least one of the following:
second duration corresponding to the second PUSCH is greater than or equal to the first PUSCH preparation duration, and the second duration is a time interval between triggering of the PHR and the 1^{st} symbol of the second PUSCH; or the second PUSCH can accommodate the second information.

In other words, if the second PUSCH is a PUSCH with configured grant, when the second PUSCH satisfies the fourth condition, the second PHR is determined based on the second PUSCH.

In a possible design, the first PUSCH is a first actual PUSCH.

In this case, that the first PHR is determined based on the first parameter corresponding to the first transmission occasion of the first PUSCH may be understood as that the first PHR is determined based on the first parameter corresponding to the first transmission occasion of the first actual PUSCH.

That the first information is carried on the first PUSCH may be understood as that the first information is carried on the first actual PUSCH.

In a possible design, the second PUSCH is a second actual PUSCH.

In this case, that the second PHR is determined based on the second parameter corresponding to the second transmission occasion of the second PUSCH may be understood as that the second PHR is determined based on the second parameter corresponding to the second transmission occasion of the second actual PUSCH.

That the second information is carried on the second PUSCH may be understood as that the second information is carried on the second actual PUSCH.

In a possible design, the first PUSCH is first actual PUSCH transmission.

In this case, that the first PHR is determined based on the first parameter corresponding to the first transmission occasion of the first PUSCH may be understood as that the first PHR is determined based on the first parameter corresponding to the first transmission occasion of the first actual PUSCH transmission.

That the first information is carried on the first PUSCH may be understood as that the first information is carried on the first actual PUSCH transmission.

In a possible design, the second PUSCH is second actual PUSCH transmission.

In this case, that the second PHR is determined based on the second parameter corresponding to the second transmission occasion of the second PUSCH may be understood as that the second PHR is determined based on the second parameter corresponding to the second transmission occasion of the second actual PUSCH transmission.

That the second information is carried on the second PUSCH may be understood as that the second information is carried on the second actual PUSCH transmission.

According to a second aspect, a communication method is provided. The method may be performed by a terminal device. Unless otherwise specified, the "terminal device" in this application may be the terminal device, or may be a component (for example, a processor, a chip, or a chip system) in the terminal device, or may be a logical module or software that can implement all or some functions of the terminal device. The following uses an example in which the method is performed by the terminal device for description. The method includes:

After a power headroom report PHR is triggered, the terminal device determines first information based on at least one of a first physical uplink shared channel PUSCH, a third PUSCH, or a first reference PUSCH, and determines second information based on at least one of a second PUSCH, a fourth PUSCH, and a second reference PUSCH.

The first information includes a first PHR and a third PHR.

The first PHR is determined based on a first parameter corresponding to a first transmission occasion of the first PUSCH, the first transmission occasion includes a first time unit, the first time unit belongs to a first type of time unit, the first type of time unit is a subband full-duplex SBFD time unit or a non-SBFD time unit, and the first parameter is used to determine a transmit power of the first PUSCH on the first transmission occasion. It may be understood that the first PHR is determined neither based on the third PUSCH nor based on the first reference PUSCH.

The third PHR is determined based on the third PUSCH or the first reference PUSCH. The first PUSCH and the third PUSCH correspond to different network devices.

The second information includes a second PHR and a fourth PHR.

The second PHR is determined based on a second parameter corresponding to a second transmission occasion of the second PUSCH, the second transmission occasion includes a second time unit, the second time unit is determined based on a second type of time unit, the second type of time unit is determined based on the first type of time unit, the second type of time unit is different from the first type of time unit, and the second parameter is used to determine a transmit power of the second PUSCH on the second transmission occasion. It may be understood that the second PHR is determined neither based on the fourth PUSCH nor based on the second reference PUSCH.

The fourth PHR is determined based on the fourth PUSCH or the second reference PUSCH. The first PUSCH and the second PUSCH correspond to a same network device. The third PUSCH and the fourth PUSCH correspond to a same network device.

The terminal device sends the first information. The first information is carried on the first PUSCH.

The terminal device sends the second information. The second information is carried on the second PUSCH.

The terminal device cancels the triggered PHR.

In this way, after the PHR is triggered once, the terminal device determines the first information and the second information, and then sends the first information and the second information. Only after determining the first information and the second information, the terminal device cancels the triggered PHR, to complete one PHR process. The first information and the second information are reported through different PUSCHs, the first PHR is determined based on the first parameter corresponding to the first transmission occasion of the first PUSCH, the second PHR is determined based on the second parameter corresponding to the second transmission occasion of the second PUSCH, and types of time units in which the first transmission occasion and the second transmission occasion are located are different. Therefore, in one PHR process, the terminal device reports PHRs corresponding to two time unit types, so that a reporting probability of an actual PH in the SBFD time unit is the same as that of an actual PH in the non-SBFD time unit, thereby helping ensure uplink performance of the non-SBFD time unit.

Further, the first information further includes the third PHR, and the second information further includes the fourth PHR. The third PHR is determined based on the third PUSCH or the first reference PUSCH. The fourth PHR is determined based on the fourth PUSCH or the second reference PUSCH. In this way, for a scenario of dual connectivity or carrier aggregation, the terminal device may also report the first information and the second information, so that a reporting probability of an actual PH in the SBFD time unit is the same as that of an actual PH in the non-SBFD time unit, thereby helping ensure uplink performance of the non-SBFD time unit.

In a possible design, the first information further includes time unit type information of the first type of time unit, to indicate a time unit type to which the first time unit belongs.

In a possible design, the second information further includes time unit type information of the second type of time unit, to indicate a time unit type to which the second time unit belongs.

In a possible design, the first information further includes first power information, and the first power information indicates a maximum transmit power on the first transmission occasion.

In a possible design, the second information further includes second power information, and the second power information indicates a maximum transmit power on the second transmission occasion.

In a possible design, the first transmission occasion is the 1^{st} transmission occasion of the first PUSCH.

In a possible design, the second transmission occasion is the 1^{st} transmission occasion of the second PUSCH.

In a possible design, the first PUSCH is a PUSCH with dynamic grant, the first PUSCH belongs to a PUSCH scheduled by using first DCI, and the first DCI is the 1^{st} piece of DCI that satisfies a first condition after the PHR is triggered.

The first condition includes at least one of the following:
the first DCI is DCI used to schedule a transport block for initial transmission after the PHR is triggered, the transport block scheduled by using the first DCI includes a first transport block, and the first transport block includes the first information; or
the PUSCH scheduled by using the first DCI can accommodate (accommodate) the first information, which may be understood as that a time-frequency resource of the PUSCH scheduled by using the first DCI is sufficient for transmitting the first information.

Initial transmission may be understood as first transmission instead of retransmission.

In other words, if the first PUSCH is a PUSCH with dynamic grant, when the first DCI used to schedule the first PUSCH satisfies the first condition, the first PHR is determined based on the first PUSCH.

In a possible design, the first PUSCH is a PUSCH with configured grant, and the first PUSCH is the 1^{st} PUSCH that satisfies a second condition after the PHR is triggered.

The second condition includes at least one of the following:
first duration corresponding to the first PUSCH is greater than or equal to first PUSCH preparation duration, and the first duration is a time interval between triggering of the PHR and the 1^{st} symbol of the first PUSCH; or the first PUSCH can accommodate the first information.

In other words, if the first PUSCH is a PUSCH with configured grant, when the first PUSCH satisfies the second condition, the first PHR is determined based on the first PUSCH.

In a possible design, the second PUSCH is a PUSCH with dynamic grant, the second PUSCH belongs to a PUSCH scheduled by using second DCI, and the second DCI is the 1^{st} piece of DCI that satisfies a third condition after the PHR is triggered.

The third condition includes at least one of the following:
the second DCI is DCI used to schedule a transport block for initial transmission after the PHR is triggered, the transport block scheduled by using the second DCI includes a second transport block, and the second transport block includes the second information; or
the PUSCH scheduled by using the second DCI can accommodate the second information, which may be understood as that a time-frequency resource of the PUSCH scheduled by using the second DCI is sufficient for transmitting the second information.

In other words, if the second PUSCH is a PUSCH with dynamic grant, when the second DCI used to schedule the second PUSCH satisfies the third condition, the second PHR is determined based on the second PUSCH.

In a possible design, the second PUSCH is a PUSCH with configured grant, and the second PUSCH is the 1^{st} PUSCH that satisfies a fourth condition after the PHR is triggered.

The fourth condition includes at least one of the following:
second duration corresponding to the second PUSCH is greater than or equal to the first PUSCH preparation duration, and the second duration is a time interval between triggering of the PHR and the 1^{st} symbol of the second PUSCH; or the second PUSCH can accommodate the second information.

In other words, if the second PUSCH is a PUSCH with configured grant, when the second PUSCH satisfies the fourth condition, the second PHR is determined based on the second PUSCH.

In a possible design, that the third PHR is determined based on the first reference PUSCH includes: If the third PUSCH belongs to a PUSCH scheduled by using third DCI, and the last symbol of a physical downlink control channel PDCCH monitoring occasion (monitoring occasion) on which the third DCI is located is later than the last symbol of a PDCCH monitoring occasion on which the first DCI is located, and/or if the third PUSCH is not in a slot in which the first transmission occasion is located, the third PHR is determined based on the first reference PUSCH.

In other words, for a case in which the first PUSCH is a PUSCH with dynamic grant, and the third PUSCH is a PUSCH with dynamic grant, if the third PUSCH belongs to the PUSCH scheduled by using the third DCI, and the last symbol of the PDCCH monitoring occasion on which the third DCI is located is later than the last symbol of the PDCCH monitoring occasion on which the first DCI is located, the third PHR is determined based on the first reference PUSCH; and/or if the third PUSCH is not in the slot in which the first transmission occasion is located, the third PHR is determined based on the first reference PUSCH.

In a possible design, that the third PHR is determined based on the first reference PUSCH includes: If first reference time is later than the last symbol of a PDCCH monitoring occasion on which the first DCI is located, and/or if the third PUSCH is not in a slot in which the first transmission occasion is located, the third PHR is determined based on the first reference PUSCH.

The first reference time is earlier than the third PUSCH, and there is an interval of second PUSCH preparation duration between the first reference time and the 1^{st} symbol of the third PUSCH. The first reference time may be understood as being earlier than the 1^{st} symbol of the third PUSCH by the second PUSCH preparation duration.

In other words, for a case in which the first PUSCH is a PUSCH with dynamic grant, and the third PUSCH is a PUSCH with configured grant, if the first reference time is later than the last symbol of the PDCCH monitoring occasion on which the first DCI is located, the third PHR is determined based on the first reference PUSCH; and/or if the third PUSCH is not in the slot in which the first transmission occasion is located, the third PHR is determined based on the first reference PUSCH.

In a possible design, that the third PHR is determined based on the first reference PUSCH includes: If the third PUSCH belongs to a PUSCH scheduled by using third DCI, and the last symbol of a PDCCH monitoring occasion on which the third DCI is located is later than second reference time, and/or if the third PUSCH is not in a slot in which the first transmission occasion is located, the third PHR is determined based on the first reference PUSCH.

The second reference time is earlier than the first PUSCH, and there is an interval of first PUSCH preparation duration between the second reference time and the 1^{st} symbol of the first PUSCH. The second reference time may be understood as being earlier than the 1^{st} symbol of the first PUSCH by the first PUSCH preparation duration.

In other words, for a case in which the first PUSCH is a PUSCH with configured grant, and the third PUSCH is a PUSCH with dynamic grant, if the third PUSCH belongs to the PUSCH scheduled by using the third DCI, and the last symbol of the PDCCH monitoring occasion on which the third DCI is located is later than the second reference time, the third PHR is determined based on the first reference PUSCH; and/or if the third PUSCH is not in the slot in which the first transmission occasion is located, the third PHR is determined based on the first reference PUSCH.

In a possible design, that the third PHR is determined based on the first reference PUSCH includes: If first reference time is later than second reference time, and/or if the third PUSCH is not in a slot in which the first transmission occasion is located, the third PHR is determined based on the first reference PUSCH.

The first reference time is earlier than the third PUSCH, and there is an interval of second PUSCH preparation duration between the first reference time and the 1^{st} symbol of the third PUSCH.

The second reference time is earlier than the first PUSCH, and there is an interval of first PUSCH preparation duration between the second reference time and the 1^{st} symbol of the first PUSCH.

The first PUSCH preparation duration may be equal to or not equal to the second PUSCH preparation duration.

If the first PUSCH preparation duration is equal to the second PUSCH preparation duration, that the first reference time is later than the second reference time may be understood as that the 1^{st} symbol of the third PUSCH is later than the 1^{st} symbol of the first PUSCH.

In other words, for a case in which the first PUSCH is a PUSCH with configured grant, and the third PUSCH is a PUSCH with configured grant, if the first reference time is later than the second reference time, the third PHR is determined based on the first reference PUSCH; and/or if the third PUSCH is not in the slot in which the first transmission occasion is located, the third PHR is determined based on the first reference PUSCH.

In a possible design, that the third PHR is determined based on the third PUSCH includes: The third PHR is determined based on a third parameter corresponding to a third transmission occasion of the third PUSCH.

The third PUSCH belongs to a PUSCH scheduled by using third DCI. In other words, the third PUSCH is a PUSCH with dynamic grant.

The last symbol of a PDCCH monitoring occasion on which the third DCI is located is not later than the last symbol of a PDCCH monitoring occasion on which the first DCI is located. It may be understood that the last symbol of the PDCCH monitoring occasion on which the third DCI is located is earlier than the last symbol of the PDCCH monitoring occasion on which the first DCI is located; or the last symbol of the PDCCH monitoring occasion on which the third DCI is located and the last symbol of the PDCCH monitoring occasion on which the first DCI is located are a same symbol.

A slot in which the first transmission occasion is located includes the third transmission occasion. The third parameter is used to determine a transmit power of the third PUSCH on the third transmission occasion.

In other words, for a case in which the first PUSCH is a PUSCH with dynamic grant, and the third PUSCH is a PUSCH with dynamic grant, if the third PUSCH belongs to the PUSCH scheduled by using the third DCI, the last symbol of the PDCCH monitoring occasion on which the third DCI is located is not later than the last symbol of the PDCCH monitoring occasion on which the first DCI is located, and the slot in which the first transmission occasion is located includes the third transmission occasion, the third PHR is determined based on the third PUSCH.

In a possible design, that the third PHR is determined based on the third PUSCH includes: The third PHR is determined based on a third parameter corresponding to a third transmission occasion of the third PUSCH.

The first reference time is not later than the last symbol of a PDCCH monitoring occasion on which the first DCI is located. It may be understood that the first reference time is earlier than the 1^{st} symbol of the PDCCH monitoring occasion on which the first DCI is located; or the first reference time is included in the PDCCH monitoring occasion on which the first DCI is located.

The first reference time is earlier than the third PUSCH, and there is an interval of second PUSCH preparation duration between the first reference time and the 1^{st} symbol of the third PUSCH. The first reference time may be understood as being earlier than the 1^{st} symbol of the third PUSCH by the second PUSCH preparation duration.

A slot in which the first transmission occasion is located includes the third transmission occasion. The third parameter is used to determine a transmit power of the third PUSCH on the third transmission occasion.

In other words, for a case in which the first PUSCH is a PUSCH with dynamic grant, and the third PUSCH is a PUSCH with configured grant, if the first reference time is not later than the last symbol of the PDCCH monitoring occasion on which the first DCI is located, and the slot in which the first transmission occasion is located includes the third transmission occasion, the third PHR is determined based on the third PUSCH.

In a possible design, that the third PHR is determined based on the third PUSCH includes: The third PHR is determined based on a third parameter corresponding to a third transmission occasion of the third PUSCH.

The third PUSCH belongs to a PUSCH scheduled by using third DCI. In other words, the third PUSCH is a PUSCH with dynamic grant.

The last symbol of a PDCCH monitoring occasion on which the third DCI is located is not later than second reference time, the second reference time is earlier than the first PUSCH, and there is an interval of first PUSCH preparation duration between the second reference time and the 1^{st} symbol of the first PUSCH.

A slot in which the first transmission occasion is located includes the third transmission occasion. The third parameter is used to determine a transmit power of the third PUSCH on the third transmission occasion.

In other words, for a case in which the first PUSCH is a PUSCH with configured grant, and the third PUSCH is a PUSCH with dynamic grant, if the third PUSCH belongs to the PUSCH scheduled by using the third DCI, the last symbol of the PDCCH monitoring occasion on which the third DCI is located is not later than the second reference time, and the slot in which the first transmission occasion is located includes the third transmission occasion, the third PHR is determined based on the third PUSCH.

In a possible design, that the third PHR is determined based on the third PUSCH includes: The third PHR is determined based on a third parameter corresponding to a third transmission occasion of the third PUSCH.

First reference time is not later than second reference time. The first reference time is earlier than the third PUSCH, and there is an interval of second PUSCH preparation duration between the first reference time and the 1^{st} symbol of the third PUSCH. The second reference time is earlier than the first PUSCH, and there is an interval of first PUSCH preparation duration between the second reference time and the 1^{st} symbol of the first PUSCH.

A slot in which the first transmission occasion is located includes the third transmission occasion. The third parameter is used to determine a transmit power of the third PUSCH on the third transmission occasion.

In other words, for a case in which the first PUSCH is a PUSCH with configured grant, and the third PUSCH is a PUSCH with configured grant, if the first reference time is not later than the second reference time, and the slot in which the first transmission occasion is located includes the third transmission occasion, the third PHR is determined based on the third PUSCH.

In a possible design, the first information further includes information about a time unit type to which a third time unit belongs. The third transmission occasion includes the third time unit, and the third time unit belongs to the first type of time unit or the second type of time unit.

In a possible design, the slot in which the first transmission occasion is located includes at least one transmission occasion of the third PUSCH. The third transmission occasion is the 1^{st} transmission occasion in the at least one transmission occasion of the third PUSCH.

In a possible design, that the fourth PHR is determined based on the second reference PUSCH includes: If the fourth PUSCH belongs to a PUSCH scheduled by using fourth DCI, and the last symbol of a PDCCH monitoring occasion on which the fourth DCI is located is later than the last symbol of a PDCCH monitoring occasion on which the second DCI is located, and/or if the fourth PUSCH is not in a slot in which the second transmission occasion is located, the fourth PHR is determined based on the second reference PUSCH.

In other words, for a case in which the second PUSCH is a PUSCH with dynamic grant, and the fourth PUSCH is a PUSCH with dynamic grant, if the fourth PUSCH belongs to the PUSCH scheduled by using the fourth DCI, and the last symbol of the PDCCH monitoring occasion on which the fourth DCI is located is later than the last symbol of the PDCCH monitoring occasion on which the second DCI is located, the fourth PHR is determined based on the second reference PUSCH; and/or if the fourth PUSCH is not in the slot in which the second transmission occasion is located, the fourth PHR is determined based on the second reference PUSCH.

In a possible design, that the fourth PHR is determined based on the second reference PUSCH includes: If third reference time is later than the last symbol of a PDCCH monitoring occasion on which the second DCI is located, and/or if the fourth PUSCH is not in a slot in which the second transmission occasion is located, the fourth PHR is determined based on the second reference PUSCH.

The third reference time is earlier than the fourth PUSCH, and there is an interval of second PUSCH preparation duration between the third reference time and the 1^{st} symbol of the fourth PUSCH. The third reference time may be understood as being earlier than the 1^{st} symbol of the fourth PUSCH by the second PUSCH preparation duration.

In other words, for a case in which the second PUSCH is a PUSCH with dynamic grant, and the fourth PUSCH is a PUSCH with configured grant, if the third reference time is later than the last symbol of the PDCCH monitoring occasion on which the second DCI is located, the fourth PHR is determined based on the second reference PUSCH; and/or if the fourth PUSCH is not in the slot in which the second transmission occasion is located, the fourth PHR is determined based on the second reference PUSCH.

In a possible design, that the fourth PHR is determined based on the second reference PUSCH includes: If the fourth PUSCH belongs to a PUSCH scheduled by using fourth DCI, and the last symbol of a PDCCH monitoring occasion on which the fourth DCI is located is later than fourth reference time, and/or if the fourth PUSCH is not in a slot in which the second transmission occasion is located, the fourth PHR is determined based on the second reference PUSCH.

The fourth reference time is earlier than the second PUSCH, and there is an interval of first PUSCH preparation duration between the fourth reference time and the 1^{st} symbol of the second PUSCH. The fourth reference time may be understood as being earlier than the 1^{st} symbol of the second PUSCH by the first PUSCH preparation duration.

In other words, for a case in which the second PUSCH is a PUSCH with configured grant, and the fourth PUSCH is a PUSCH with dynamic grant, if the fourth PUSCH belongs to the PUSCH scheduled by using the fourth DCI, and the last symbol of the PDCCH monitoring occasion on which the fourth DCI is located is later than the fourth reference time, the fourth PHR is determined based on the second reference PUSCH; and/or if the fourth PUSCH is not in the slot in which the second transmission occasion is located, the fourth PHR is determined based on the second reference PUSCH.

In a possible design, that the fourth PHR is determined based on the second reference PUSCH includes: If third reference time is later than fourth reference time, and/or if the fourth PUSCH is not in a slot in which the second transmission occasion is located, the fourth PHR is determined based on the second reference PUSCH.

The third reference time is earlier than the fourth PUSCH, and there is an interval of second PUSCH preparation duration between the third reference time and the 1^{st} symbol of the fourth PUSCH.

The fourth reference time is earlier than the second PUSCH, and there is an interval of first PUSCH preparation duration between the fourth reference time and the 1^{st} symbol of the second PUSCH.

The first PUSCH preparation duration may be equal to or not equal to the second PUSCH preparation duration.

If the first PUSCH preparation duration is equal to the second PUSCH preparation duration, that the third reference time is later than the fourth reference time may be understood as that the 1^{st} symbol of the fourth PUSCH is later than the 1^{st} symbol of the second PUSCH.

In other words, for a case in which the second PUSCH is a PUSCH with configured grant, and the fourth PUSCH is a PUSCH with configured grant, if the third reference time is later than the fourth reference time, the fourth PHR is determined based on the second reference PUSCH; and/or if the fourth PUSCH is not in the slot in which the second transmission occasion is located, the fourth PHR is determined based on the second reference PUSCH.

In a possible design, that the fourth PHR is determined based on the fourth PUSCH includes: The fourth PHR is determined based on a third parameter corresponding to a fourth transmission occasion of the fourth PUSCH.

The fourth PUSCH belongs to a PUSCH scheduled by using a fourth DCI. In other words, the fourth PUSCH is a PUSCH with dynamic grant.

The last symbol of the PDCCH monitoring occasion on which the fourth DCI is located is not later than the last symbol of the PDCCH monitoring occasion on which the second DCI is located. It may be understood that the last symbol of the PDCCH monitoring occasion on which the fourth DCI is located is earlier than the last symbol of the PDCCH monitoring occasion on which the second DCI is located; or the last symbol of the PDCCH monitoring occasion on which the fourth DCI is located and the last symbol of the PDCCH monitoring occasion on which the second DCI is located are a same symbol.

A slot in which the second transmission occasion is located includes the fourth transmission occasion. The third parameter is used to determine a transmit power of the fourth PUSCH on the fourth transmission occasion.

In other words, for a case in which the second PUSCH is a PUSCH with dynamic grant, and the fourth PUSCH is a PUSCH with dynamic grant, if the fourth PUSCH belongs to the PUSCH scheduled by using the fourth DCI, the last symbol of the PDCCH monitoring occasion on which the fourth DCI is located is not later than the last symbol of the PDCCH monitoring occasion on which the second DCI is located, and the slot in which the second transmission occasion is located includes the fourth transmission occasion, the fourth PHR is determined based on the fourth PUSCH.

In a possible design, that the fourth PHR is determined based on the fourth PUSCH includes: The fourth PHR is determined based on a third parameter corresponding to a fourth transmission occasion of the fourth PUSCH.

The third reference time is not later than the last symbol of a PDCCH monitoring occasion on which the second DCI is located. It may be understood that the third reference time is earlier than the 1^{st} symbol of the PDCCH monitoring occasion on which the second DCI is located; or the third reference time is included in the PDCCH monitoring occasion on which the second DCI is located.

The third reference time is earlier than the fourth PUSCH, and there is an interval of second PUSCH preparation duration between the third reference time and the 1^{st} symbol of the fourth PUSCH. The third reference time may be understood as being earlier than the 1^{st} symbol of the fourth PUSCH by the second PUSCH preparation duration.

A slot in which the second transmission occasion is located includes the fourth transmission occasion. The third parameter is used to determine a transmit power of the fourth PUSCH on the fourth transmission occasion.

In other words, for a case in which the second PUSCH is a PUSCH with dynamic grant, and the fourth PUSCH is a PUSCH with configured grant, if the third reference time is not later than the last symbol of the PDCCH monitoring occasion on which the second DCI is located, and the slot in which the second transmission occasion is located includes the fourth transmission occasion, the fourth PHR is determined based on the fourth PUSCH.

In a possible design, that the fourth PHR is determined based on the fourth PUSCH includes: The fourth PHR is determined based on a third parameter corresponding to a fourth transmission occasion of the fourth PUSCH.

The fourth PUSCH belongs to a PUSCH scheduled by using fourth DCI. In other words, the fourth PUSCH is a PUSCH with dynamic grant.

The last symbol of a PDCCH monitoring occasion on which the fourth DCI is located is not later than fourth reference time, the fourth reference time is earlier than the second PUSCH, and there is an interval of first PUSCH preparation duration between the fourth reference time and the 1^{st} symbol of the second PUSCH.

A slot in which the second transmission occasion is located includes the fourth transmission occasion. The third parameter is used to determine a transmit power of the fourth PUSCH on the fourth transmission occasion.

In other words, for a case in which the second PUSCH is a PUSCH with configured grant, and the fourth PUSCH is a PUSCH with dynamic grant, if the fourth PUSCH belongs to the PUSCH scheduled by using the fourth DCI, the last symbol of the PDCCH monitoring occasion on which the fourth DCI is located is not later than the fourth reference time, and the slot in which the second transmission occasion is located includes the fourth transmission occasion, the fourth PHR is determined based on the fourth PUSCH.

In a possible design, that the fourth PHR is determined based on the fourth PUSCH includes: The fourth PHR is determined based on a third parameter corresponding to a fourth transmission occasion of the fourth PUSCH.

Third reference time is not later than fourth reference time. The third reference time is earlier than the fourth PUSCH, and there is an interval of second PUSCH preparation duration between the third reference time and the 1^{st} symbol of the fourth PUSCH. The fourth reference time is earlier than the second PUSCH, and there is an interval of first PUSCH preparation duration between the fourth reference time and the 1^{st} symbol of the second PUSCH.

A slot in which the second transmission occasion is located includes the fourth transmission occasion. The third parameter is used to determine a transmit power of the fourth PUSCH on the fourth transmission occasion.

In other words, for a case in which the second PUSCH is a PUSCH with configured grant, and the fourth PUSCH is a PUSCH with configured grant, if the third reference time is not later than the fourth reference time, and the slot in which the second transmission occasion is located includes the fourth transmission occasion, the fourth PHR is determined based on the fourth PUSCH.

In a possible design, the second information further includes information about a time unit type to which a fourth time unit belongs. The fourth transmission occasion includes the fourth time unit, and the fourth time unit belongs to the first type of time unit or the second type of time unit.

In a possible design, the slot in which the second transmission occasion is located includes at least one transmission occasion of the fourth PUSCH. The fourth transmission occasion is the 1^{st} transmission occasion in the at least one transmission occasion of the fourth PUSCH.

According to a third aspect, a communication method is provided. The method may be performed by a terminal device. Unless otherwise specified, the "terminal device" in this application may be the terminal device, or may be a component (for example, a processor, a chip, or a chip system) in the terminal device, or may be a logical module or software that can implement all or some functions of the terminal device. The following uses an example in which the method is performed by the terminal device for description. The method includes:

The terminal device updates a first time unit type after a power headroom report PHR is triggered. An updated first time unit type is a subband full-duplex SBFD time unit or a non-SBFD time unit.

The terminal device determines third information based on a fifth physical uplink shared channel PUSCH. The third information includes a fifth PHR, the fifth PHR is determined based on a fifth parameter corresponding to a fifth transmission occasion of the fifth PUSCH, the fifth transmission occasion includes a fifth time unit, the fifth time unit belongs to the updated first time unit type, and the fifth parameter is used to determine a transmit power of the fifth PUSCH on the fifth transmission occasion. For example, that the fifth transmission occasion includes the fifth time unit may be understood as that the fifth transmission occasion includes only the fifth time unit.

The terminal device sends the third information. The third information is carried on the fifth PUSCH. For example, the third information is carried on the fifth transmission occasion of the fifth PUSCH, or the third information is carried on another transmission occasion of the fifth PUSCH.

The terminal device cancels the triggered PHR. Optionally, another triggered PHR is also canceled.

In this way, after the PHR is triggered once, the terminal device first updates the first time unit type, then determines first information based on the updated first time unit type, sends the first information, and cancels the triggered PHR, to complete one PHR process. Because the first information is determined based on the updated first time unit type, when the terminal device performs at least two PHR processes, the terminal device reports PHRs corresponding to two time unit types, so that a reporting probability of an actual PH in the SBFD time unit is the same as or close to that of an actual PH in the non-SBFD time unit, thereby helping ensure uplink performance of the non-SBFD time unit.

In a possible design, that the terminal device updates the first time unit type includes: updating the first time unit type based on at least one of a value of a first counter, a first pattern (pattern), or a first result. The first pattern includes at least one time unit, and the at least one time unit includes the SBFD time unit and/or the non-SBFD time unit. The first result is a time unit type after the last update of the first time unit type, and the time unit type is an SBFD time unit or a non-SBFD time unit.

In other words, the terminal device updates the first time unit type with reference to at least one of the value of the first counter, the first pattern, and the first result, thereby helping improve accuracy of updating the time unit type.

In a possible design, the first pattern includes: {SBFD, SBFD, non-SBFD, non-SBFD}. It may be understood that, in the first pattern, the 1^{st} time unit type is an SBFD time unit, the 2^{nd} time unit type is an SBFD time unit, the 3^{rd} time unit type is a non-SBFD time unit, and the 4^{th} time unit type is a non-SBFD time unit.

In this way, when the terminal device updates the first time unit type based on the first pattern, the first time unit type may change between a non-SBFD time unit and an SBFD time unit, so that the terminal device can report PHRs corresponding to different time unit types.

In a possible design, the method further includes: The terminal device updates the value of the first counter.

When the value of the first counter is not equal to a first threshold, updating the value of the first counter includes: increasing the value of the first counter by 1; or when the value of the first counter is equal to the first threshold, updating the value of the first counter includes: resetting the first counter.

In other words, the value of the first counter changes within a specific value range. If the value of the first counter is equal to the first threshold, the first time unit type is updated. Correspondingly, the terminal device may send a PHR corresponding to another time unit type. A quantity of times that the terminal device continuously sends a PHR corresponding to a same time unit type may be adjusted by using the first threshold.

In a possible design, that the terminal device updates the first time unit type based on the value of the first counter includes: when the value of the first counter is equal to the first threshold, if the first time unit type before the update is the SBFD time unit, the updated first time unit type is the non-SBFD time unit; or if the first time unit type before the update is the non-SBFD time unit, the updated first time unit type is the SBFD time unit.

In other words, when the value of the first counter is equal to the first threshold, the first time unit type is updated.

In a possible design, that the terminal device updates the first time unit type based on the value of the first counter includes: updating the first time unit type based on the value of the first counter and the first pattern.

For example, the value of the first counter is used to determine an index, the index is used to identify a time unit type in the first pattern, and the terminal device updates the first time unit type to the time unit type identified by the index, to implement update processing on the first time unit type.

In a possible design, the first threshold is equal to a quantity of time units in the first pattern.

In a possible design, the first threshold is predefined.

In a possible design, the first threshold is a parameter configured by a first network device, and the first network device is a network device corresponding to the fifth PUSCH.

In a possible design, the first threshold is 2.

In a possible design, the third information further includes information about the updated first time unit type, to indicate the time unit type to which the fifth time unit belongs.

In a possible design, the third information further includes third power information, and the third power information indicates a maximum transmit power of the fifth PUSCH on the fifth transmission occasion.

In a possible design, the fifth transmission occasion is the 1^{st} transmission occasion of the fifth PUSCH.

In a possible design, the fifth PUSCH is a PUSCH with dynamic grant, the fifth PUSCH belongs to a PUSCH scheduled by using fifth DCI, and the fifth DCI is the 1^{st} piece of DCI that satisfies a fifth condition after the PHR is triggered.

The fifth condition includes at least one of the following:
the fifth DCI is DCI used to schedule a transport block for initial transmission after the PHR is triggered, the transport block scheduled by using the fifth DCI includes a third transport block, and the third transport block includes the third information; or
the PUSCH scheduled by using the fifth DCI can accommodate (accommodate) the third information, which may be understood as that a time-frequency resource of the PUSCH scheduled by using the fifth DCI is sufficient for transmitting the third information.

In other words, if the fifth PUSCH is a PUSCH with dynamic grant, when the fifth DCI used to schedule the fifth PUSCH satisfies the fifth condition, the fifth PHR is determined based on the fifth PUSCH.

In a possible design, the fifth PUSCH is a PUSCH with configured grant, and the fifth PUSCH is the 1^{st} PUSCH that satisfies a sixth condition after the PHR is triggered.

The sixth condition includes at least one of the following:
third duration corresponding to the fifth PUSCH is greater than or equal to first PUSCH preparation duration, and the third duration is a time interval between triggering of the PHR and the 1^{st} symbol of the fifth PUSCH; or the fifth PUSCH can accommodate the third information.

In other words, if the fifth PUSCH is a PUSCH with configured grant, when the fifth PUSCH satisfies the sixth condition, the fifth PHR is determined based on the fifth PUSCH.

According to a fourth aspect, a communication method is provided. The method may be performed by a terminal device. Unless otherwise specified, the "terminal device" in this application may be the terminal device, or may be a component (for example, a processor, a chip, or a chip system) in the terminal device, or may be a logical module or software that can implement all or some functions of the terminal device. The following uses an example in which the method is performed by the terminal device for description. The method includes:

The terminal device updates a first time unit type after a power headroom report PHR is triggered. An updated first time unit type is a subband full-duplex SBFD time unit or a non-SBFD time unit.

The terminal device determines third information based on at least one of a fifth physical uplink shared channel PUSCH, a sixth PUSCH, and a third reference PUSCH. The third information includes a fifth PHR and a sixth PHR.

The fifth PHR is determined based on a fifth parameter corresponding to a fifth transmission occasion of the fifth PUSCH, the fifth transmission occasion includes a fifth time unit, the fifth time unit belongs to the updated first time unit type, and the fifth parameter is used to determine a transmit power of the fifth PUSCH on the fifth transmission occasion. It may be understood that the fifth PHR is determined neither based on the fifth PUSCH nor based on the third reference PUSCH.

The sixth PHR is determined based on the sixth PUSCH or the third reference PUSCH. The fifth PUSCH and the sixth PUSCH correspond to different network devices.

The terminal device sends the third information. The third information is carried on the fifth PUSCH.

The terminal device cancels the triggered PHR.

In this way, after the PHR is triggered once, the terminal device first updates the first time unit type, then determines the first information based on the updated first time unit type, sends the first information, and cancels the triggered PHR, to complete one PHR process. Because the first information is determined based on the updated first time unit type, when the terminal device performs at least two PHR processes, the terminal device reports PHRs corresponding to two time unit types, so that a reporting probability of an actual PH in the SBFD time unit is the same as or close to that of an actual PH in the non-SBFD time unit, thereby helping ensure uplink performance of the non-SBFD time unit.

Further, the third information further includes the sixth PHR. The sixth PHR is determined based on the sixth PUSCH or the third reference PUSCH. In this way, for a scenario of dual connectivity or carrier aggregation, the terminal device may also report the third information, so that a reporting probability of an actual PH in the SBFD time unit is the same as or close to that of an actual PH in the non-SBFD time unit, thereby helping ensure uplink performance of the non-SBFD time unit.

In a possible design, that the terminal device updates the first time unit type includes: updating the first time unit type based on at least one of a value of a first counter, a first pattern (pattern), or a first result. The first pattern includes at least one time unit, and the at least one time unit includes the SBFD time unit and/or the non-SBFD time unit. The first result is a time unit type after the last update of the first time unit type, and the time unit type is an SBFD time unit or a non-SBFD time unit.

In other words, the terminal device updates the first time unit type with reference to at least one of the value of the first counter, the first pattern, and the first result, thereby helping improve accuracy of updating the time unit type.

In a possible design, the first pattern includes: {SBFD, SBFD, non-SBFD, non-SBFD}. It may be understood that, in the first pattern, the 1^{st} time unit type is an SBFD time unit, the 2^{nd} time unit type is an SBFD time unit, the 3^{rd} time unit type is a non-SBFD time unit, and the 4^{th} time unit type is a non-SBFD time unit.

In this way, when the terminal device updates the first time unit type based on the first pattern, the first time unit type may change between a non-SBFD time unit and an SBFD time unit, so that the terminal device can report PHRs corresponding to different time unit types.

In a possible design, the method further includes: The terminal device updates the value of the first counter.

When the value of the first counter is not equal to a first threshold, updating the value of the first counter includes: increasing the value of the first counter by 1; or when the value of the first counter is equal to the first threshold, updating the value of the first counter includes: resetting the first counter.

In other words, the value of the first counter changes within a specific value range. If the value of the first counter is equal to the first threshold, the first time unit type is updated. Correspondingly, the terminal device may send a PHR corresponding to another time unit type. A quantity of times that the terminal device continuously sends a PHR corresponding to a same time unit type may be adjusted by using the first threshold.

In a possible design, that the terminal device updates the first time unit type based on the value of the first counter includes: when the value of the first counter is equal to the first threshold, if the first time unit type before the update is the SBFD time unit, the updated first time unit type is the non-SBFD time unit; or if the first time unit type before the update is the non-SBFD time unit, the updated first time unit type is the SBFD time unit.

In other words, when the value of the first counter is equal to the first threshold, the first time unit type is updated.

In a possible design, that the terminal device updates the first time unit type based on the value of the first counter includes: updating the first time unit type based on the value of the first counter and the first pattern.

For example, the value of the first counter is used to determine an index, the index is used to identify a time unit type in the first pattern, and the terminal device updates the first time unit type to the time unit type identified by the index, to implement update processing on the first time unit type.

In a possible design, the first threshold is equal to a quantity of time units in the first pattern.

In a possible design, the first threshold is predefined.

In a possible design, the first threshold is a parameter configured by a first network device, and the first network device is a network device corresponding to the fifth PUSCH.

In a possible design, the first threshold is 2.

In a possible design, the third information further includes information about the updated first time unit type, to indicate the time unit type to which the fifth time unit belongs.

In a possible design, the third information further includes third power information, and the third power information indicates a maximum transmit power on the fifth transmission occasion.

In a possible design, the fifth transmission occasion is the 1^{st} transmission occasion of the fifth PUSCH.

In a possible design, the fifth PUSCH is a PUSCH with dynamic grant, the fifth PUSCH belongs to a PUSCH scheduled by using fifth DCI, and the fifth DCI is the 1^{st} piece of DCI that satisfies a fifth condition after the PHR is triggered.

The fifth condition includes at least one of the following:
the fifth DCI is DCI used to schedule a transport block for initial transmission after the PHR is triggered, the transport block scheduled by using the fifth DCI includes a third transport block, and the third transport block includes the third information; or
the PUSCH scheduled by using the fifth DCI can accommodate (accommodate) the third information, which may be understood as that a time-frequency resource of the PUSCH scheduled by using the fifth DCI is sufficient for transmitting the third information.

In other words, if the fifth PUSCH is a PUSCH with dynamic grant, when the fifth DCI used to schedule the fifth PUSCH satisfies the fifth condition, the fifth PHR is determined based on the fifth PUSCH.

In a possible design, the fifth PUSCH is a PUSCH with configured grant, and the fifth PUSCH is the 1^{st} PUSCH that satisfies a sixth condition after the PHR is triggered.

The sixth condition includes at least one of the following:
third duration corresponding to the fifth PUSCH is greater than or equal to first PUSCH preparation duration, and the third duration is a time interval between triggering of the PHR and the 1^{st} symbol of the fifth PUSCH; or the fifth PUSCH can accommodate the third information.

In other words, if the fifth PUSCH is a PUSCH with configured grant, when the fifth PUSCH satisfies the sixth condition, the fifth PHR is determined based on the fifth PUSCH.

In a possible design, that the sixth PHR is determined based on the third reference PUSCH includes: If the sixth PUSCH belongs to a PUSCH scheduled by using sixth DCI, and the last symbol of a physical downlink control channel PDCCH monitoring occasion (monitoring occasion) on which the sixth DCI is located is later than the last symbol of a PDCCH monitoring occasion on which the fifth DCI is located, and/or if the sixth PUSCH is not in a slot in which the fifth transmission occasion is located, the sixth PHR is determined based on the third reference PUSCH.

In other words, for a case in which the fifth PUSCH is a PUSCH with dynamic grant, and the sixth PUSCH is a PUSCH with dynamic grant, if the sixth PUSCH belongs to the PUSCH scheduled by using the sixth DCI, and the last symbol of the PDCCH monitoring occasion on which the sixth DCI is located is later than the last symbol of the PDCCH monitoring occasion on which the fifth DCI is located, the sixth PHR is determined based on the third reference PUSCH; and/or if the sixth PUSCH is not in the slot in which the fifth transmission occasion is located, the sixth PHR is determined based on the third reference PUSCH.

In a possible design, that the sixth PHR is determined based on the third reference PUSCH includes: If fifth reference time is later than the last symbol of a PDCCH monitoring occasion on which the fifth DCI is located, and/or if the sixth PUSCH is not in a slot in which the fifth transmission occasion is located, the sixth PHR is determined based on the third reference PUSCH.

The fifth reference time is earlier than the sixth PUSCH, and there is an interval of second PUSCH preparation duration between the fifth reference time and the 1^{st} symbol of the sixth PUSCH. The fifth reference time may be understood as being earlier than the 1^{st} symbol of the sixth PUSCH by the second PUSCH preparation duration.

In other words, for a case in which the fifth PUSCH is a PUSCH with dynamic grant, and the sixth PUSCH is a PUSCH with configured grant, if the fifth reference time is later than the last symbol of the PDCCH monitoring occasion on which the fifth DCI is located, the sixth PHR is determined based on the third reference PUSCH; and/or if the sixth PUSCH is not in the slot in which the fifth transmission occasion is located, the sixth PHR is determined based on the third reference PUSCH.

In a possible design, that the sixth PHR is determined based on the third reference PUSCH includes: If the sixth PUSCH belongs to a PUSCH scheduled by using sixth DCI, and the last symbol of a PDCCH monitoring occasion on which the sixth DCI is located is later than sixth reference time, and/or if the sixth PUSCH is not in a slot in which the fifth transmission occasion is located, the sixth PHR is determined based on the third reference PUSCH.

The sixth reference time is earlier than the fifth PUSCH, and there is an interval of first PUSCH preparation duration between the sixth reference time and the 1^{st} symbol of the fifth PUSCH. The sixth reference time may be understood as being earlier than the 1^{st} symbol of the fifth PUSCH by the first PUSCH preparation duration.

In other words, for a case in which the fifth PUSCH is a PUSCH with configured grant, and the sixth PUSCH is a PUSCH with dynamic grant, if the sixth PUSCH belongs to the PUSCH scheduled by using the sixth DCI, the last symbol of the PDCCH monitoring occasion on which the sixth DCI is located is later than the sixth reference time, the sixth PHR is determined based on the third reference PUSCH; and/or if the sixth PUSCH is not in the slot in which the fifth transmission occasion is located, the sixth PHR is determined based on the third reference PUSCH.

In a possible design, that the sixth PHR is determined based on the third reference PUSCH includes: If fifth reference time is later than sixth reference time, and/or if the sixth PUSCH is not in the slot in which the fifth transmission occasion is located, the sixth PHR is determined based on the third reference PUSCH.

The fifth reference time is earlier than the sixth PUSCH, and there is an interval of second PUSCH preparation duration between the fifth reference time and the 1^{st} symbol of the sixth PUSCH.

The sixth reference time is earlier than the fifth PUSCH, and there is an interval of first PUSCH preparation duration between the sixth reference time and the 1^{st} symbol of the fifth PUSCH.

The first PUSCH preparation duration may be equal to or not equal to the second PUSCH preparation duration.

If the first PUSCH preparation duration is equal to the second PUSCH preparation duration, that the fifth reference time is later than the sixth reference time may be understood as that the 1^{st} symbol of the sixth PUSCH is later than the 1^{st} symbol of the fifth PUSCH.

In other words, for a case in which the fifth PUSCH is a PUSCH with configured grant, and the sixth PUSCH is a PUSCH with configured grant, if the fifth reference time is later than the sixth reference time, the sixth PHR is determined based on the third reference PUSCH; and/or if the sixth PUSCH is not in the slot in which the fifth transmission occasion is located, the sixth PHR is determined based on the third reference PUSCH.

In a possible design, that the sixth PHR is determined based on the sixth PUSCH includes: The sixth PHR is determined based on a sixth parameter corresponding to a sixth transmission occasion of the sixth PUSCH.

The sixth PUSCH belongs to a PUSCH scheduled by using sixth DCI. In other words, the sixth PUSCH is a PUSCH with dynamic grant.

The last symbol of a PDCCH monitoring occasion on which the sixth DCI is located is not later than the last symbol of a PDCCH monitoring occasion on which the fifth DCI is located. It may be understood that the last symbol of the PDCCH monitoring occasion on which the sixth DCI is located is earlier than the last symbol of the PDCCH monitoring occasion on which the fifth DCI is located; or the last symbol of the PDCCH monitoring occasion on which the sixth DCI is located and the last symbol of the PDCCH monitoring occasion on which the fifth DCI is located are a same symbol.

A slot in which the fifth transmission occasion is located includes the sixth transmission occasion. The sixth parameter is used to determine a transmit power of the sixth PUSCH on the sixth transmission occasion.

In other words, for a case in which the fifth PUSCH is a PUSCH with dynamic grant, and the sixth PUSCH is a PUSCH with dynamic grant, if the sixth PUSCH belongs to the PUSCH scheduled by using the sixth DCI, the last symbol of the PDCCH monitoring occasion on which the sixth DCI is located is not later than the last symbol of the PDCCH monitoring occasion on which the fifth DCI is located, and the slot in which the fifth transmission occasion is located includes the sixth transmission occasion, the sixth PHR is determined based on the sixth PUSCH.

In a possible design, that the sixth PHR is determined based on the sixth PUSCH includes: The sixth PHR is determined based on a sixth parameter corresponding to a sixth transmission occasion of the sixth PUSCH.

The fifth reference time is not later than the last symbol of a PDCCH monitoring occasion on which the fifth DCI is located. It may be understood that the fifth reference time is earlier than the 1^{st} symbol of the PDCCH monitoring occasion on which the fifth DCI is located; or the fifth reference time is included in the PDCCH monitoring occasion on which the fifth DCI is located.

The fifth reference time is earlier than the sixth PUSCH, and there is an interval of second PUSCH preparation duration between the fifth reference time and the 1^{st} symbol of the sixth PUSCH. The fifth reference time may be understood as being earlier than the 1^{st} symbol of the sixth PUSCH by the second PUSCH preparation duration.

A slot in which the fifth transmission occasion is located includes the sixth transmission occasion. The sixth parameter is used to determine a transmit power of the sixth PUSCH on the sixth transmission occasion.

In other words, for a case in which the fifth PUSCH is a PUSCH with dynamic grant, and the sixth PUSCH is a PUSCH with configured grant, if the fifth reference time is not later than the last symbol of the PDCCH monitoring occasion on which the fifth DCI is located, and the slot in which the fifth transmission occasion is located includes the sixth transmission occasion, the sixth PHR is determined based on the sixth PUSCH.

In a possible design, that the sixth PHR is determined based on the sixth PUSCH includes: The sixth PHR is determined based on a sixth parameter corresponding to a sixth transmission occasion of the sixth PUSCH.

The sixth PUSCH belongs to a PUSCH scheduled by using sixth DCI. The last symbol of a PDCCH monitoring occasion on which the sixth DCI is located is not later than sixth reference time, the sixth reference time is earlier than the fifth PUSCH, and there is an interval of first PUSCH preparation duration between the sixth reference time and the 1^{st} symbol of the fifth PUSCH.

A slot in which the fifth transmission occasion is located includes the sixth transmission occasion, and the sixth parameter is used to determine a transmit power of the sixth PUSCH on the sixth transmission occasion.

In other words, for a case in which the fifth PUSCH is a PUSCH with configured grant, and the sixth PUSCH is a PUSCH with dynamic grant, if the sixth PUSCH belongs to the PUSCH scheduled by using the sixth DCI, the last symbol of the PDCCH monitoring occasion on which the sixth DCI is located is not later than the sixth reference time, and the slot in which the fifth transmission occasion is located includes the sixth transmission occasion, the sixth PHR is determined based on the sixth PUSCH.

In a possible design, that the sixth PHR is determined based on the sixth PUSCH includes: The sixth PHR is determined based on a sixth parameter corresponding to a sixth transmission occasion of the sixth PUSCH.

Fifth reference time is not later than sixth reference time. The fifth reference time is earlier than the sixth PUSCH, and there is an interval of second PUSCH preparation duration between the fifth reference time and the 1^{st} symbol of the sixth PUSCH. The sixth reference time is earlier than the fifth PUSCH, and there is an interval of first PUSCH preparation duration between the sixth reference time and the 1^{st} symbol of the fifth PUSCH.

A slot in which the fifth transmission occasion is located includes the sixth transmission occasion. The sixth parameter is used to determine a transmit power of the sixth PUSCH on the sixth transmission occasion.

In other words, for a case in which the fifth PUSCH is a PUSCH with configured grant, and the sixth PUSCH is a PUSCH with configured grant, if the fifth reference time is not later than the sixth reference time, and the slot in which the fifth transmission occasion is located includes the sixth transmission occasion, the sixth PHR is determined based on the sixth PUSCH.

In a possible design, the third information further includes information about a time unit type to which a sixth time unit belongs. The sixth transmission occasion includes the sixth time unit, and the sixth time unit belongs to the SBFD time unit or the non-SBFD time unit.

In a possible design, the slot in which the fifth transmission occasion is located includes at least one transmission occasion of the sixth PUSCH. The sixth transmission occasion is the 1^{st} transmission occasion in the at least one transmission occasion of the sixth PUSCH.

According to a fifth aspect, a communication apparatus is provided, configured to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and any possible implementation thereof.

According to a sixth aspect, a communication apparatus is provided, including a processor and a memory. The processor is coupled to the memory, the memory stores program instructions, and when the program instructions stored by the memory are executed by the processor, the communication apparatus is enabled to perform the method according to any one of the foregoing aspects or the possible designs of the foregoing aspects.

According to a seventh aspect, a communication apparatus is provided, including a processor. The processor is configured to execute a computer program or instructions, to enable the communication apparatus to perform the method according to any one of the foregoing aspects. Optionally, the communication apparatus further includes a memory. The memory may be coupled to the processor. Alternatively, the memory may be independent of the processor. For example, the memory and the processor are two independent modules. The memory may be outside the communication apparatus, or may be inside the communication apparatus.

According to an eighth aspect, a computer-readable storage medium is provided. The computer-readable storage medium stores a computer program or instructions, and when the computer program or the instructions are run, the method according to any one of the foregoing aspects or the possible designs of any one of the foregoing aspects is performed.

According to a ninth aspect, a computer program product including instructions is provided. When the computer program product runs, the method according to any one of the foregoing aspects or the possible designs of any one of the foregoing aspects is performed.

The communication apparatus provided in any one of the fifth aspect to the ninth aspect may be the terminal device in the first aspect to the fourth aspect, or a component included in the terminal device, for example, a chip or a chip system. When the apparatus is a chip system, the apparatus may include a chip, or may include a chip and another discrete device.

It may be understood that, when the communication apparatus provided in any one of the fifth aspect to the ninth aspect is a chip, a sending action/function of the communication apparatus may be understood as an information output, and a receiving action/function of the communication apparatus may be understood as an information input.

According to a tenth aspect, a communication apparatus is provided, configured to implement the method according to any one of the foregoing aspects or the possible designs of any one of the foregoing aspects. Optionally, the communication apparatus includes a network device, a terminal device, a chip system, or a chip.

For technical effects brought by any design manner in the fifth aspect to the tenth aspect, refer to the technical effects brought by different design manners in the first aspect to the tenth aspect. Details are not described herein again.

### BRIEF DESCRIPTION OF DRAWINGS

FIG. 1 is a diagram of an architecture of a communication system according to an embodiment of this application;
FIG. 2 is a diagram of resource allocation according to an embodiment of this application;
FIG. 3 is another diagram of resource allocation according to an embodiment of this application;
FIG. 4a is a diagram of a power headroom reporting process according to an embodiment of this application;
FIG. 4b is a diagram of another power headroom reporting process according to an embodiment of this application;
FIG. 4c is a diagram of still another power headroom reporting process according to an embodiment of this application;
FIG. 4d is a diagram of still another power headroom reporting process according to an embodiment of this application;
FIG. 4e is a diagram of still another power headroom reporting process according to an embodiment of this application;
FIG. 4f is a diagram of still another power headroom reporting process according to an embodiment of this application;
FIG. 4g is a diagram of still another power headroom reporting process according to an embodiment of this application;
FIG. 4h is a diagram of still another power headroom reporting process according to an embodiment of this application;
FIG. 4i is a diagram of still another power headroom reporting process according to an embodiment of this application;
FIG. 5a is a diagram of a power headroom report format according to an embodiment of this application;
FIG. 5b is a diagram of another power headroom report format according to an embodiment of this application;
FIG. 5c is a diagram of still another power headroom report format according to an embodiment of this application;
FIG. 5d is a diagram of still another power headroom report format according to an embodiment of this application;
FIG. 6 is a schematic flowchart of a communication method according to an embodiment of this application;
FIG. 7a is a diagram of another power headroom reporting process according to an embodiment of this application;
FIG. 7b is a diagram of still another power headroom reporting process according to an embodiment of this application;
FIG. 8 is a diagram of still another power headroom report format according to an embodiment of this application;
FIG. 9 is a schematic flowchart of another communication method according to an embodiment of this application;
FIG. 10 is a diagram of still another power headroom reporting process according to an embodiment of this application;
FIG. 11 is a diagram of still another power headroom report format according to an embodiment of this application;
FIG. 12 is a schematic flowchart of still another communication method according to an embodiment of this application;
FIG. 13 is a diagram of still another power headroom reporting process according to an embodiment of this application;
FIG. 14 is a schematic flowchart of still another communication method according to an embodiment of this application;
FIG. 15 is a schematic flowchart of still another communication method according to an embodiment of this application;
FIG. 16 is a schematic flowchart of still another communication method according to an embodiment of this application;
FIG. 17 is a diagram of a structure of a communication apparatus according to an embodiment of this application;
FIG. 18 is a diagram of a structure of another communication apparatus according to an embodiment of this application; and
FIG. 19 is a diagram of a structure of another communication apparatus according to an embodiment of this application.

### DESCRIPTION OF EMBODIMENTS

The following describes technical solutions of this application with reference to accompanying drawings.

The terms "system" and "network" may be used interchangeably in this application. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" mean giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "of (of)", "corresponding, relevant (corresponding, relevant)", and "corresponding (corresponding)" may be interchangeably used sometimes. It should be noted that meanings expressed by the terms are consistent when differences between the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of network architectures and emergence of new service scenarios, the technical solutions provided in embodiments of this application are also applicable to similar technical problems.

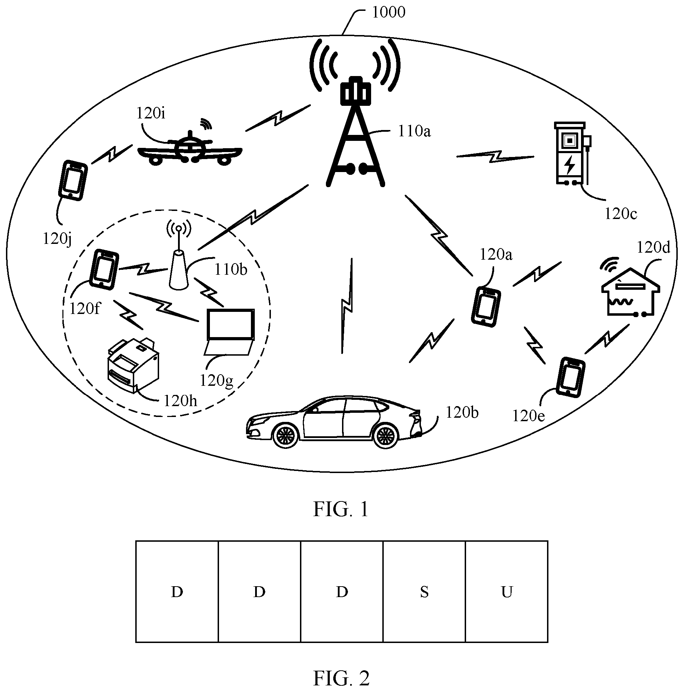

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may be further included in the communication system 1000. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different independent physical devices, functions of the core network device and logical functions of the network device may be integrated into a same physical device, or a part of functions of the core network device and a part of functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open radio access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or an access node in a wireless fidelity (wireless fidelity, Wi-Fi) system, a long-range radio (long-range radio, LoRa) system, or an internet of vehicles system. The RAN device may alternatively be a module or unit that completes a part of functions of the base station, for example, a central unit (central unit, CU), a distributed unit (distributed unit, DU), or a radio unit (radio unit, RU). The CU herein completes functions of the radio resource control protocol and the packet data convergence protocol (packet data convergence protocol, PDCP) of the base station, and may further complete functions of the service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network through the network device. The terminal device includes a device that provides voice and/or data connectivity for a user, specifically including a device that provides voice for the user, or a device that provides data connectivity for the user, or a device that provides both voice and data connectivity for the user. For example, the terminal device may include a handheld device with a wireless connection function or a processing device connected to a wireless modem. The terminal device may communicate with the core network through the radio access network, and exchange voice or data with the RAN, or interact with the RAN using voice and data. The terminal device may include user equipment (user equipment, UE), a wireless terminal device, a mobile terminal device, a D2D terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or computer built-in mobile apparatus. For example, the terminal device may be a device such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

If the foregoing terminal devices are located in a vehicle (for example, placed in the vehicle or installed in the vehicle), the terminal devices all may be considered as vehicle-mounted terminal devices. For example, the vehicle-mounted terminal devices are also referred to as on-board units (on-board unit, OBU).

In embodiments of this application, the terminal device may further include a relay (relay). Alternatively, it is understood that any device that can perform data communication with the base station may be considered as the terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is the terminal device is used for description.

It should be understood that the network device and the terminal device may be fixed, or may be mobile. The network device and the terminal device may be deployed on land, including an indoor device, an outdoor device, a handheld device, or a vehicle-mounted device; may be deployed on the water surface; or may be deployed on an airplane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network through 120i, the terminal device 120i is a network device. However, for the network device 110a, 120i is a terminal device. That is, 110a and 120i communicate with each other by using a radio air interface protocol. Certainly, 110a and 120i may alternatively communicate with each other by using an interface protocol between base stations. In this case, for 110a, 120i is also a network device. Therefore, the network device and the terminal device may be collectively referred to as a communication apparatus. 110a and 110b in FIG. 1 may be referred to as a communication apparatus having a function of a network device, and 120a to 120j in FIG. 1 may be referred to as a communication apparatus having a function of a terminal device.

Communication may be performed between the network device and the terminal device, between network devices, and between terminal devices by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection with a cell controlled by the network device. The cell that establishes the wireless connection to the terminal device is referred to as a serving cell of the terminal device. When communicating with the serving cell, the terminal device is further susceptible to interference from a signal from a neighbor cell.

It should be noted that the solutions in embodiments of this application may alternatively be applied to another communication system, and a corresponding name may alternatively be replaced with a name of a corresponding function in the another communication system.

For ease of understanding embodiments of this application, the following first briefly describes terms in embodiments of this application. It should be understood that these descriptions are merely for ease of understanding of embodiments of this application, and shall not constitute any limitation on this application.

### 1. Subband full-duplex (subband full-duplex, SBFD) and non-SBFD:

Time division duplex (time division duplex, TDD) is widely applied to deployment of a 5G new radio (new radio, NR) wireless communication system. In TDD, sending and receiving are performed separately in time domain, and time domain resources are divided into uplink resources and downlink resources. A terminal device performs sending on the uplink resource, and performs receiving on the downlink resource.

For example, as shown in FIG. 2, a possible TDD uplink/downlink slot configuration is DDDSU. D represents a downlink slot, U represents an uplink slot, and S represents a special slot. Each orthogonal frequency division multiplexing (orthogonal frequency division multiplexing, OFDM) symbol (referred to as a symbol for short below) in the downlink slot is a downlink symbol, and is used for downlink transmission. Each symbol in the uplink slot is an uplink symbol, and is used for uplink transmission. The special slot includes at least a flexible symbol, and the flexible symbol may be used for both downlink transmission and uplink transmission.

In a common TDD uplink/downlink slot configuration, there are usually few uplink time domain resources, resulting in reduced uplink coverage and increased latency in TDD.

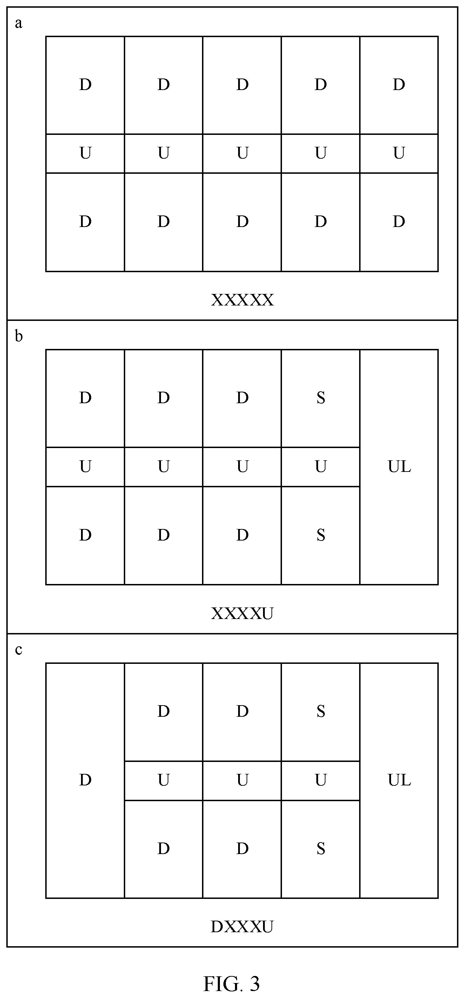

A possible uplink enhancement method is to use SBFD. In SBFD, a frequency band on a downlink symbol is divided into at least one uplink subband and at least one downlink subband, allowing the terminal device to perform uplink sending on the uplink subband of the downlink symbol, as shown in FIG. 3. Therefore, compared with TDD, SBFD has more uplink resources to improve uplink coverage performance. In addition, each slot has uplink resources for hybrid automatic repeat request acknowledgement (hybrid automatic repeat request-acknowledgement, HARQ-ACK) feedback to reduce latency.

Currently, a network device (for example, a base station) supports full-duplex (full duplex, FD) SBFD. To be specific, in one slot, the network device can simultaneously perform receiving on the uplink subband and perform sending on the downlink subband. The terminal device supports half-duplex (half duplex, HD) SBFD. To be specific, in one slot, the terminal device can only perform sending on the uplink subband, or can only perform receiving on the downlink subband.

For the purpose of convenience, a time unit in which a symbol divided into both an uplink subband and a downlink subband on a frequency band is located is referred to as an SBFD time unit, and is denoted as X (used to distinguish it from D, U, and S). In this case, an SBFD-dedicated uplink/downlink configuration generally includes the following three types: XXXXX, XXXXU, and DXXXU, as shown in FIG. 3. The SBFD time unit may be an SBFD slot, that is, a slot in which a symbol divided into both an uplink subband and a downlink subband on a frequency band is located.

It should be noted that the SBFD time unit (for example, the SBFD slot) is different from a non-SBFD time unit (for example, an uplink slot) in a channel environment and an interference environment. Specific causes include but are not limited to the following:
Cause 1: A receive antenna of the network device in the SBFD time unit (for example, the SBFD slot) is different from that in the non-SBFD time unit (for example, the uplink slot).

For example, in the SBFD time unit (for example, the SBFD slot), some antenna ports are used for uplink sending, and the other antenna ports are used for downlink receiving. Therefore, a quantity of receive antenna ports in the SBFD time unit (for example, the SBFD slot) is half of a quantity of receive antenna ports in the non-SBFD time unit (for example, the uplink slot).

For another example, a receive antenna panel in the SBFD time unit (for example, the SBFD slot) is different from a receive antenna panel in the non-SBFD time unit (for example, the uplink slot).

Due to the foregoing cause, an uplink channel in the SBFD time unit (for example, the SBFD slot) is different from an uplink channel in the non-SBFD time unit (for example, the uplink slot).

Cause 2: The network device suffers more severe self-interference (self-interference, SI) and cross-link interference (cross-link interference, CLI) in the SBFD time unit (for example, the SBFD slot) than in the non-SBFD time unit (for example, the uplink slot). This is because the network device simultaneously receives an uplink signal and sends a downlink signal in the SBFD time unit (for example, the SBFD slot).

Therefore, power control parameters used by the terminal device to send uplink signals in two types of time units (for example, the SBFD time unit and the non-SBFD time unit) are different. In addition, to accurately adjust the power control parameters of the terminal device in the SBFD time unit and the non-SBFD time unit, the terminal device needs to separately report PHRs, that is, PHs of the uplink signals, in the SBFD time unit and the non-SBFD time unit through PUSCHs.

### 2. PHR:

The PHR is carried on a medium access control control element (medium access control-control element, MAC-CE) layer.

2-1. A PHR process is used by a terminal device to provide a network device with at least one of the following information:
Type 1 PH (type 1 power headroom): indicates a difference between a maximum nominal (nominal) transmit power of the terminal device and an estimated power for uplink shared channel (uplink shared channel, UL-SCH) transmission per activated serving cell (serving cell).
Type 2 PH (type 2 power headroom): indicates a difference between a maximum nominal (nominal) transmit power of the terminal device and an estimated power for UL-SCH and physical uplink control channel (physical uplink control channel, PUCCH) transmission in a special cell (special cell, SpCell) corresponding to another MAC entity (that is, an E-UTRA MAC entity in the case of NE-DC, NE-DC, and NGEN-DC).

DC indicates dual connectivity (dual connectivity). E indicates an evolved universal terrestrial radio access (evolved universal terrestrial radio access, E-UTRA) network, that is, a 4G radio access network. N indicates new radio (new radio, NR), that is, 5G new radio. NGE indicates next generation E-UTRA (next generation E-UTRA, NGE), that is, in an NGEN-DC architecture, a master node (master node, MN) is a next generation eNB, and may be connected to a 5G core network.

Type 3 PH (type 3 power headroom): indicates a difference between a maximum nominal (nominal) transmit power of the terminal device and an estimated power for sounding reference signal (sounding reference signal, SRS) transmission per activated serving cell.

It should be noted that, in this application, the type 1 PH is described, that is, the PHR includes the type 1 PH.

### 2-2. PHR higher-layer parameter:

Higher-layer signaling (such as RRC signaling) is used to configure at least one of the following parameters for the PHR process:
phr-PeriodicTimer: indicates a parameter of a PHR periodic timer. When the PHR periodic timer expires or has expired, the PHR process is triggered. A duration unit of the PHR periodic timer is a subframe.
phr-ProhibitTimer: indicates a parameter of a PHR prohibit timer. When the PHR prohibit timer expires or has expired, and a variation of a path loss (path loss or pathloss) exceeds a threshold phr-Tx-PowerFactorChange dB, the PHR process is triggered. A duration unit of the PHR prohibit timer is a subframe.
phr-Tx-PowerFactorChange: indicates a threshold of a variation of a path loss. When the PHR prohibit timer expires or has expired, and the variation of the path loss exceeds the threshold phr-Tx-PowerFactorChange dB, the PHR process is triggered. A unit of the threshold of the variation of the path loss is dB.
phr-ModeOtherCG: indicates a PHR mode of an activated cell in another cell group when DC is configured. If the terminal device is configured with only one cell group (that is, there is no DC), this field is ignored.

The another cell group includes a master cell group (master cell group, MCG) or a secondary cell group (secondary cell group, SCG). The PHR mode includes an actual (actual) PHR or a virtual (virtual) PHR.
multiplePHR: indicates that a single-entry PHR MAC CE (Single Entry PHR MAC CE) or a multi-entry PHR MAC CE (Multiple Entry PHR MAC CE) is used for the PHR process. If multiplePHR is set to true, Multiple Entry PHR MAC CE is used. If multiplePHR is set to false, Single Entry PHR MAC CE is used. In scenarios of multi-radio access technology dual connectivity (multi-radio access technology dual connectivity, MR-DC) and uplink carrier aggregation (uplink carrier aggregation, UL CA) in NR, the network device sets this parameter to true. In another scenario, the network device sets this parameter to false.
twoPHRMode: indicates that two PHRs are reported in the PHR process, and each PHR is associated with one SRS resource set (SRS resource set).

It should be noted that, for the parameters involved in the PHR process, refer to descriptions in the 3GPP technical specification TS 38.331. Details are not described.

### 2-3. PHR trigger event (event):

The event that triggers the PHR process includes at least one of the following:
Event 1: phr-ProhibitTimer expires or has expired, and the variation of the path loss exceeds phr-Tx-PowerFactorChange dB. For a method for determining the variation of the path loss, refer to descriptions in the 3GPP technical specification TS 38.321. Details are not described.
Event 2: phr-PeriodicTimer expires or has expired.
Event 3: A higher layer configures or reconfigures the PHR higher-layer parameter (excluding disabling a PHR function by the higher layer).
Event 4: Any secondary cell (secondary cell, SCell) configured with an uplink MAC entity is activated. A parameter firstActiveDownlinkBWP-Id in an uplink configured by the higher layer cannot be set to a dormant BWP.
Event 5: One SCG is activated.
Event 6: A primary secondary cell (primary secondary cell, PSCell) is added unless the SCG is deactivated (that is, the PSCell is added or modified).
Event 7: For an SCell configured with any type of uplink MAC entity, an active BWP is switched from a dormant BWP to a non-dormant downlink BWP.

It should be noted that, for the PHR trigger event, refer to descriptions in the 3GPP technical specification TS 38.321. Details are not described.

### 2-4. PHR process:

If a first MAC entity (MAC entity) has an uplink resource allocated for new transmission (new transmission), the first MAC entity performs the following steps:

If the resource is the 1^{st} uplink resource allocated for new transmission since the last MAC reset, start *phr-PeriodicTimer.*

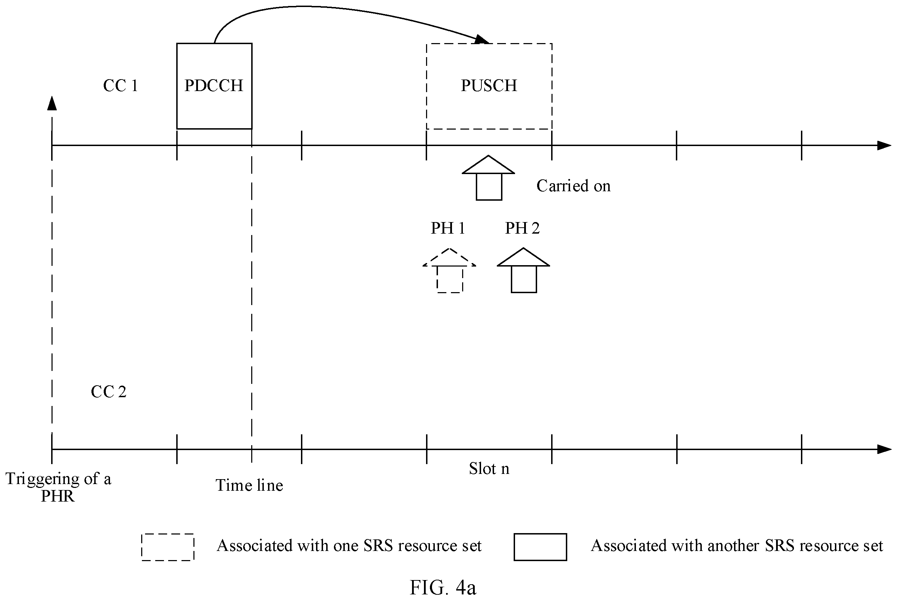

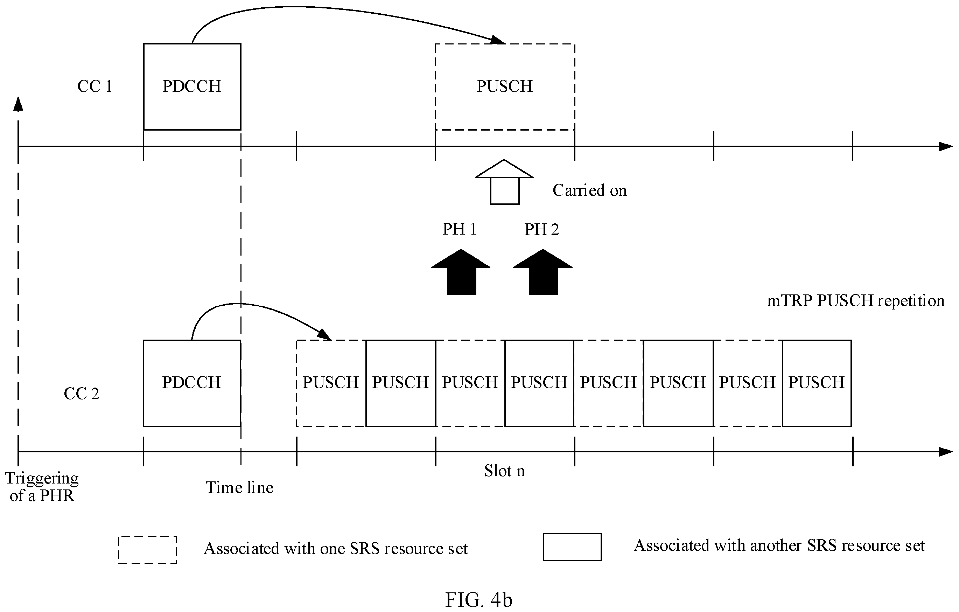

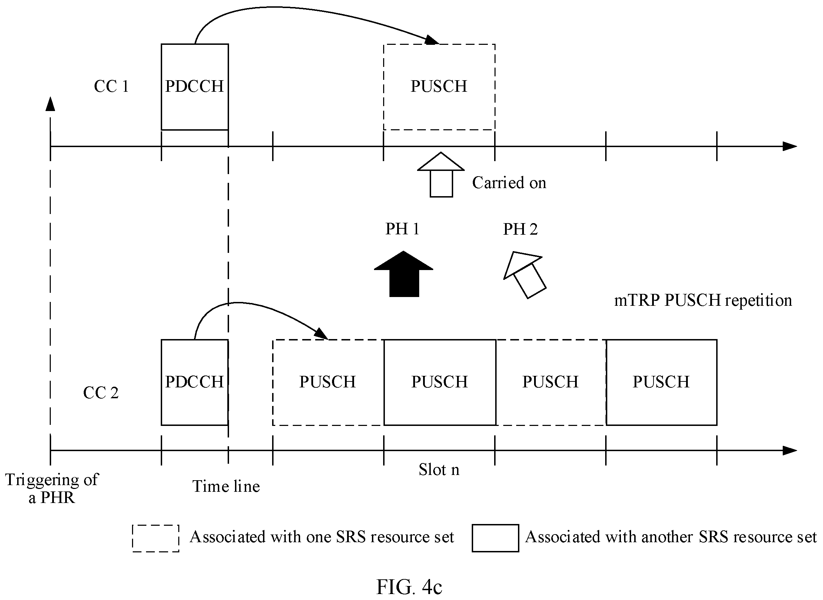

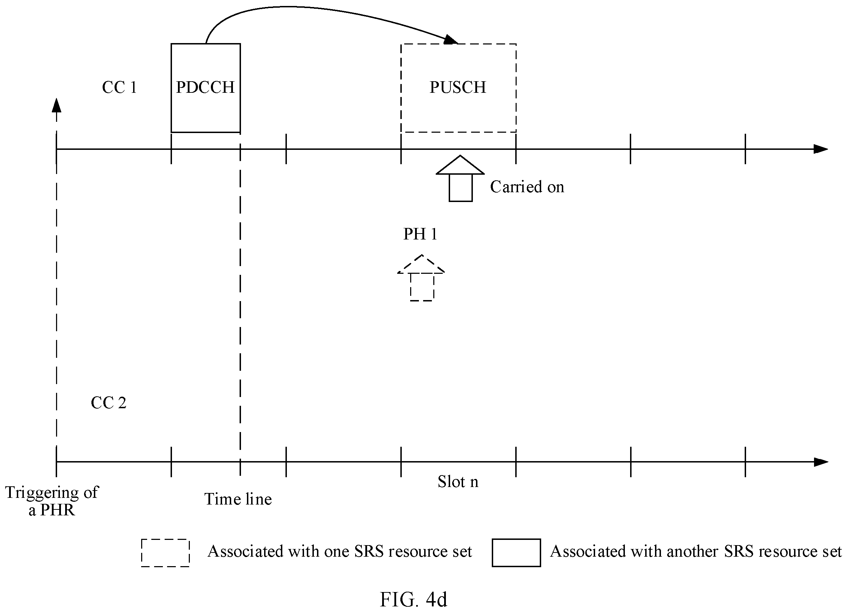

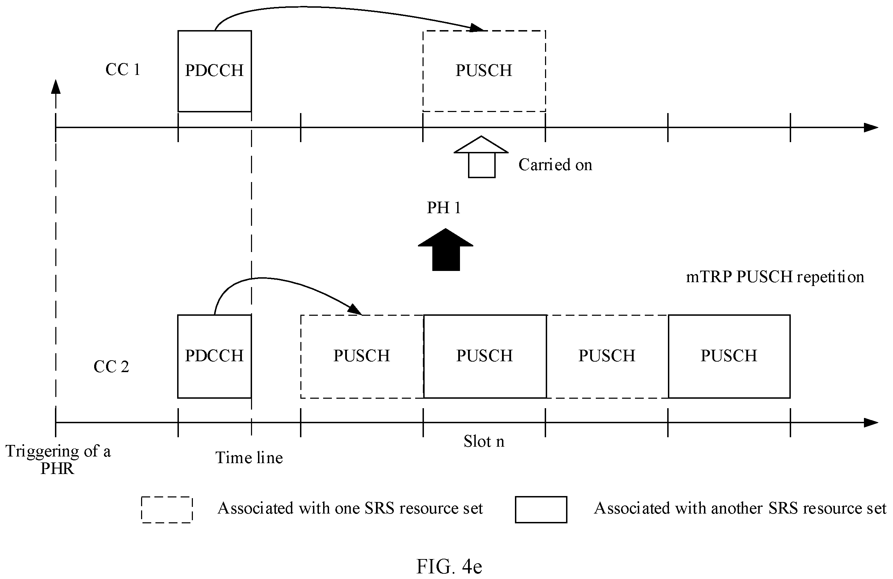

If the PHR process determines that at least one PHR has been triggered and has not been canceled, and if the allocated uplink resource can accommodate the MAC CE of the PHR, where the MAC CE of the PHR is configured to be sent by the first MAC entity:
- if *multiplePHR* is set to *true:*
   - for any activated serving cell, where the serving cell is configured with an uplink associated with any type of MAC entity, and the MAC entity is configured with an active downlink BWP instead of a dormant BWP; and
   - for any activated serving cell, where the serving cell is configured with an uplink associated with an E-UTRA MAC entity:
      ✔ if the first MAC entity is configured with *twoPHRMode:*
         - if the activated serving cell is configured with mTRP PUSCH repetition, and a second MAC entity of the serving cell is configured with *twoPHRMode:*
            ∘ obtain two type 1 PHs on an uplink carrier of the serving cell from a physical layer.
            ∘ the physical layer providing the two type 1 PHs includes:
               Case 1: Two virtual PHs (virtual PH) are provided:
                  If the second MAC entity does not have an uplink resource allocated for new transmission, the two virtual PHs are provided. The 1^{st} virtual PH is determined based on reference PUSCH transmission associated with the 1^{st} SRS resource set, and the 2^{nd} virtual PH is determined based on reference PUSCH transmission associated with the 2^{nd} SRS resource set, as shown in FIG. 4a.
               Case 2: Two actual PHs (actual PH) are provided:
                  If the second MAC entity has an uplink resource allocated for new transmission, the 1^{st} PH is an actual PH, and is determined based on the 1^{st} PUSCH actual repetition in a slot n, where the PUSCH actual repetition is associated with one SRS resource set. If a "PUSCH actual repetition associated with another SRS resource set" is further sent in the slot n, the 2^{nd} PH is an actual PH, and is determined based on the PUSCH actual repetition associated with the another SRS resource set that overlaps the slot n, as shown in FIG. 4b.
               Case 3: One actual PH and one virtual PH are provided:
                  If the second MAC entity has an uplink resource allocated for new transmission, the 1^{st} PH is an actual PH, and is determined based on the 1^{st} PUSCH actual repetition in a slot n, where the PUSCH actual repetition is associated with one SRS resource set. If a "PUSCH actual repetition associated with another SRS resource set" is not sent in the slot n, the 2^{nd} PH is a virtual PH, and is determined based on reference PUSCH transmission associated with the another SRS resource set, as shown in FIG. 4c.
                  The slot n is a slot in mTRP PUSCH repetition, and is also a slot in which the first MAC entity sends the PHR MAC CE. In a current scenario, the slot n is the 1^{st} slot in which the uplink resource of the first MAC entity and the uplink resource of the second MAC entity overlap in time domain.
                  It should be noted that *twoPHRMode* configured for the first MAC entity does not indicate that the MAC entity is configured with mTRP PUSCH repetition. Therefore, in FIG. 4a to FIG. 4c, the first MAC entity is described by using an example in which a single-slot PUSCH is configured, but a case in which the first MAC entity is configured with mTRP PUSCH repetition is not excluded.
         - else (if the activated serving cell is not configured with mTRP PUSCH repetition, or the second MAC entity of the serving cell is not configured with *twoPHRMode*):
            ∘ obtain one type 1 PH on the uplink carrier of the serving cell from the physical layer.
            ∘ the physical layer providing the one type 1 PH includes:
               Case 1: One virtual PH is provided:
                  If the second MAC entity does not have an uplink resource allocate for new transmission, one virtual PH is provided.
                  If mTRP PUSCH repetition is configured, the virtual PH is determined based on a reference PUSCH associated with the 1^{st} SRS resource set, as shown in FIG. 4d.
                  If mTRP PUSCH repetition is not configured, the virtual PH is determined based on the reference PUSCH.
               Case 2: One actual PH is provided:
                  If the second MAC entity has an uplink resource allocated for new transmission, one actual PH is provided.
                  If mTRP PUSCH repetition is configured, the actual PH is determined based on the 1^{st} PUSCH actual repetition that overlaps the slot n, and the PUSCH actual repetition is associated with the 1^{st} SRS resource set or the 2^{nd} resource set, as shown in FIG. 4e.
                  If mTRP PUSCH repetition is not configured, the actual PH is determined based on an actual PUSCH.
      ✔ if the first MAC entity is not configured with *twoPHRMode:*
         - if the serving cell is configured with mTRP PUSCH repetition, and the second MAC entity of the serving cell is configured with *twoPHRMode:*
            ∘ if the serving cell has at least one actual PUSCH transmission in a slot for sending the PHR MAC CE:
               ✧ obtain one type 1 PH on the uplink carrier of the serving cell from the physical layer, where the type 1 PH is determined based on the 1^{st} actual PUSCH transmission in the slot.
               ✧ the physical layer providing the one type 1 PH includes:
                  One actual PH is provided: The actual PH is determined based on the 1^{st} PUSCH actual repetition that overlaps the slot n, and the PUSCH (actual) repetition is associated with the 1^{st} SRS resource set or the 2^{nd} resource set, as shown in FIG. 4e.
            ∘ if the serving cell has no actual PUSCH transmission in the slot for sending the PHR MAC CE:
               ✧ obtain one type 1 PH on the uplink carrier of the serving cell from the physical layer, where the type 1 PH is determined based on reference PUSCH transmission associated with *SRS-ResourceSet* with low *SRS-resourceSetID.*
               ✧ the physical layer providing the one type 1 PH includes:
                  One virtual PH is provided: The virtual PH is determined based on a reference PUSCH associated with the 1^{st} SRS resource set, as shown in FIG. 4d.
         - else (if the serving cell is not configured with mTRP PUSCH repetition, or the second MAC entity of the serving cell is not configured with *twoPHRMode*):
            ∘ obtain one type 1 PH on the uplink carrier of the serving cell from the physical layer.
            ∘ the physical layer providing the one type 1 PH includes:
               Case 1: One virtual PH is provided:
                  If mTRP PUSCH repetition is configured, the virtual PH is determined based on a reference PUSCH associated with the 1^{st} SRS resource set, as shown in FIG. 4d.
                  If mTRP PUSCH repetition is not configured, the virtual PH is determined based on the reference PUSCH.
               Case 2: One actual PH is provided:
                  If mTRP PUSCH repetition is configured, the actual PH is determined based on the 1^{st} PUSCH actual repetition that overlaps the slot n, and the PUSCH actual repetition is associated with the 1^{st} SRS resource set or the 2^{nd} resource set, as shown in FIG. 4e.
                  If mTRP PUSCH repetition is not configured, the actual PH is determined based on an actual PUSCH.

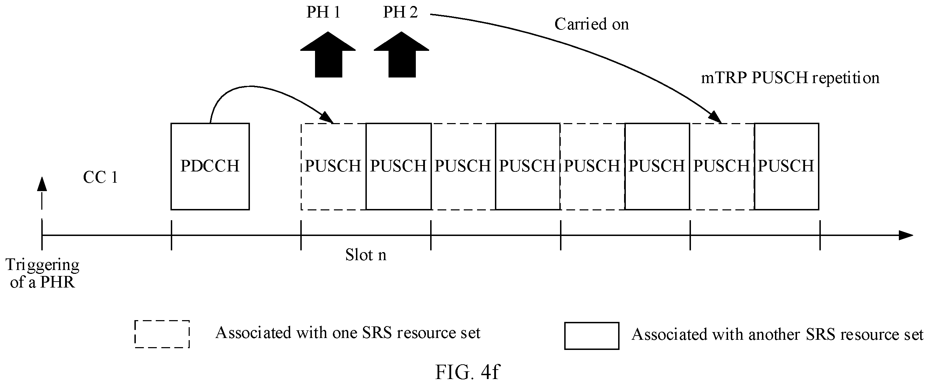

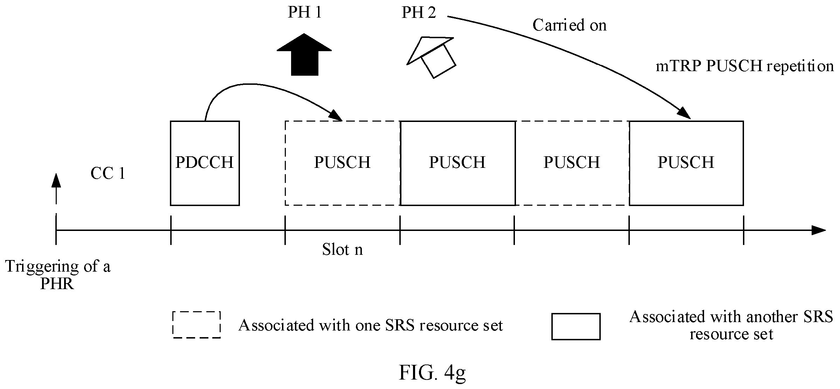

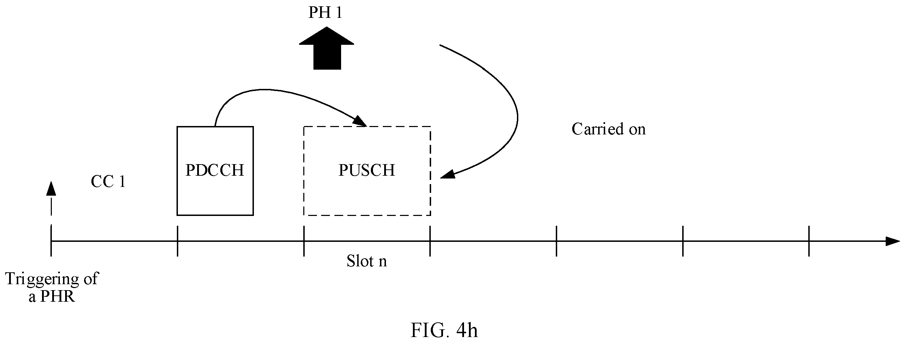

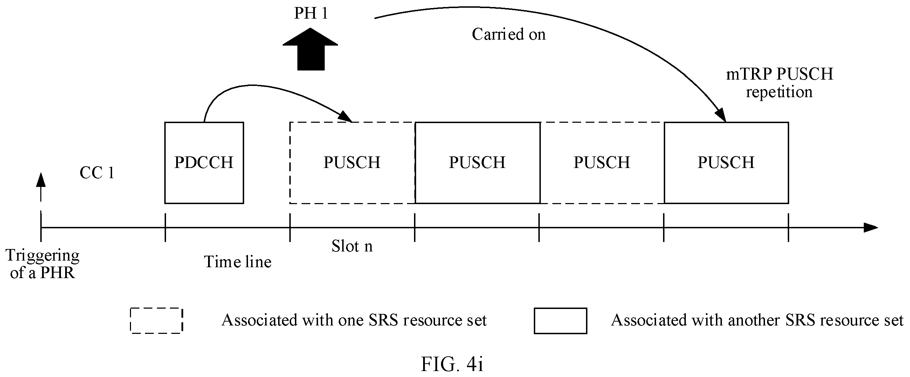

         - If *twoPHRMode* is configured, Enhanced Multiple Entry PHR for multiple TRP MAC CE is generated and sent. Otherwise, Multiple Entry PHR MAC CE is generated and sent.
- else (if *multiplePHR* of the first MAC entity is set to *false*):
   - if the first MAC entity is configured with *twoPHRMode:*
      ✔ obtain two type 1 PHs on an uplink carrier of a primary cell (Primary cell, PCell) from the physical layer.
      ✔ the physical layer providing the two type 1 PHs includes:
         Case 1: Two actual PHs are provided:
            If the second MAC entity has an uplink resource allocated for new transmission, the 1^{st} PH is an actual PH, and is determined based on the 1^{st} PUSCH actual repetition in a slot n, where the PUSCH actual repetition is associated with one SRS resource set. If a "PUSCH actual repetition associated with another SRS resource set" is further sent in the slot n, the 2^{nd} PH is an actual PH, and is determined based on the PUSCH actual repetition associated with the another SRS resource set that overlaps the slot n, as shown in FIG. 4f.
         Case 2: One actual PH and one virtual PH are provided:
            If the second MAC entity has an uplink resource allocated for new transmission, the 1^{st} PH is an actual PH, and is determined based on the 1^{st} PUSCH actual repetition in a slot n, where the PUSCH actual repetition is associated with one SRS resource set. If a "PUSCH actual repetition associated with another SRS resource set" is not sent in the slot n, the 2^{nd} PH is a virtual PH, and is determined based on reference PUSCH transmission associated with the another SRS resource set, as shown in FIG. 4g.
            The slot n is a slot allocated to the 1^{st} PUSCH actual repetition.
   - else (if the first MAC entity is not configured with *twoPHRMode*):
      ✔ obtain one type 1 PH on the uplink carrier of the PCell from the physical layer.
      ✔ the physical layer providing the one type 1 PH includes:
         If the terminal device is configured with one SRS resource set (no mTRP PUSCH repetition is configured), one actual PH is provided, where the actual PH is determined based on actual PUSCH transmission, the actual PUSCH transmission is that the first MAC entity has an uplink resource allocated for new transmission, and the first MAC entity belongs to the PCell, as shown in FIG. 4h.
         If the terminal device is configured with two SRS resource sets (mTRP PUSCH repetition is configured), one actual PH is provided, where the actual PH is determined based on the 1^{st} PUSCH actual repetition that overlaps the slot n, and the PUSCH actual repetition is associated with the 1^{st} SRS resource set or the 2^{nd} resource set, as shown in FIG. 4i.
         The slot n is the 1^{st} slot of mTRP PUSCH repetition.

If the first MAC entity is configured with *twoPHRMode,* Enhanced Single Entry PHR for multiple TRP MAC CE is generated and sent. Otherwise, Single Entry PHR MAC CE is generated and sent.

The first MAC entity further performs the following three operations:
Operation 1: Start or restart *phr-PeriodicTimer.*
Operation 2: Start or restart *phr-ProhibitTimer.*
Operation 3: Cancel all triggered PHRs.

### 2-5. PH calculation:

It can be learned from the foregoing PHR process that a MAC entity of a MAC layer obtains a value of a PH from a physical (physical, PHY) layer. There are two types of PHs: an actual PH (actual PH), corresponding to an actual PHR (actual PHR); and a virtual PH (virtual PH), corresponding to a virtual PHR (virtual PHR).

The actual PH is calculated as follows:
The actual PH is determined based on actual PUSCH transmission. For example, the actual PH is calculated as shown in formula (1): $\begin{matrix}{PH}_{type 1 , b , f , c} \left(i, j, {q}_{d}, l\right) \\ = {P}_{CMAX , f , c} \left(i\right) \\ - \left\{\begin{matrix}{P}_{O _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) \\ + {Δ}_{TF , b , f , c} \left(i\right) + {f}_{b , f , c} \left(i, l\right)\end{matrix}\right\}\end{matrix}$
*i is* an index of a PUSCH transmission occasion (transmission occasion, TO), b is an index of an active uplink BWP, *f* is a carrier index, and c is a serving cell index. *P_{CMAX,f,c}*(*i*) is *a* maximum transmit power of the terminal device, and is jointly determined by the network device and the terminal device. *P_{O_PUSCH,b,f,c}* (*j*)is a target power, and is configured by the network device. ${M}_{RB , b , f , c}^{PUSCH} \left(i\right)$ is a quantity of resource blocks (resource block, RB) used in the actual PUSCH transmission. *α*_{*b*,*f,c*} (*j*)is a path loss compensation factor. *PL_{b,f,c}* (*q*_{d} )is a path loss, and is obtained by the terminal device through measurement. Δ_{TF,*b,f,c*}(*i*)is an adjustment amount related to a transport format, and is configured by the network device. *f_{b,f,c}*(*i, l*)is a closed-loop power control parameter, and is configured by the network device.

For calculation of the actual PH, refer to descriptions in the 3GPP technical specification TS 38.213. Details are not described.

The virtual PH is calculated as follows:
The virtual PH is determined based on reference PUSCH transmission. For example, the virtual PH is calculated as shown in formula (2): ${PH}_{type 1 , b , f , c} \left(i, j, {q}_{d}, l\right) = {{P}^{˜}}_{CMAX , f , c} \left(i\right) - \left\{{P}_{O _ PUSCH , b , f , c}\left(j\right)+{α}_{b , f , c}\left(j\right)⋅{PL}_{b , f , c}\left({q}_{d}\right)+{f}_{b , f , c}\left(i, l\right)\right\}$
*i* is an index of a PUSCH transmission occasion, *b* is an index of an active uplink BWP, *f* is a carrier index, and *c* is a serving cell index. *P̃_{CMAX,f,c}* (i) is calculated by assuming that MPR=0 dB, A-MPR=0 dB, and P-MPR=0 dB. *P_{O_PUSCH,b,f,c}* (*j*)is a target power, and is configured by the network device. ${M}_{RB , b , f , c}^{PUSCH} \left(i\right)$ is a quantity of RBs used in the actual PUSCH transmission. *α_{b,f,c}*(*j*) is a path loss compensation factor. *PL*_{*b*,*f*,*c*}(*q_{d}*) is a path loss, and is obtained by the terminal device through measurement. *f*_{*b*,*f*,*c*}(*i*, *l*)is a closed-loop power control parameter, and is configured by the network device.

For calculation of the virtual PH, refer to descriptions in the 3GPP technical specification TS 38.213. Details are not described.

A time line condition used to determine the actual PH and the virtual PH is as follows:
A case in which the PHR is reported on a PUSCH triggered by using DCI is as follows:
   For an activated serving cell, the terminal device determines, based on the following parameters, whether the PHR is an actual PHR or a virtual PHR:
   higher-layer signaling with configured grant, periodic/semi-persistent SRS signal transmission, and downlink control information during the period from triggering of the PHR to (and including) the last symbol of a first PDCCH monitoring occasion.
   The first PDCCH monitoring occasion is a PDCCH monitoring occasion when the terminal device detects the 1^{st} piece of DCI used to schedule a transport block for initial transmission, and the transport block scheduled by using the DCI for initial transmission includes the PHR.
   In other words, the PUSCH belongs to a PUSCH scheduled by using first DCI, where the first DCI is the 1^{st} piece of DCI used to schedule a transport block for initial transmission after the PHR is triggered, and the transport block scheduled by using the first DCI includes the PHR.
A case in which the PHR is reported on a PUSCH configured by using configured grant is as follows:
   For an activated serving cell, the terminal device determines, based on the following parameters, whether the PHR is an actual PHR or a virtual PHR:
   higher-layer signaling with configured grant, periodic/semi-persistent SRS signal transmission, and downlink control information during the period from triggering of the PHR to the 1^{st} symbol of PUSCH transmission with configured grant minus ${T}_{proc , 2}^{′} = {T}_{proc , 2}$.
   For T_{proc,2}, refer to TS 38.214, which is irrelevant to the present invention.
   In other words, the PUSCH is the 1^{st} PUSCH that satisfies the following description after the PHR is triggered: First duration corresponding to the PUSCH is greater than or equal to first PUSCH preparation duration. The first duration is a time interval between triggering of the PHR and the 1^{st} symbol of the PUSCH. The first PUSCH preparation duration may be denoted as T_{proc,2}.

It should be understood that the foregoing provides the time line condition. If the PUSCH scheduled by using the DCI or configured by using the configured grant satisfies the time line condition, the actual PH is used. On the contrary, if the PUSCH scheduled by using the DCI or configured by using the configured grant does not satisfy the time line condition, the virtual PH is used. The time line condition is mainly used in scenarios of carrier aggregation and dual connectivity.

### 2-6. PHR MAC CE:

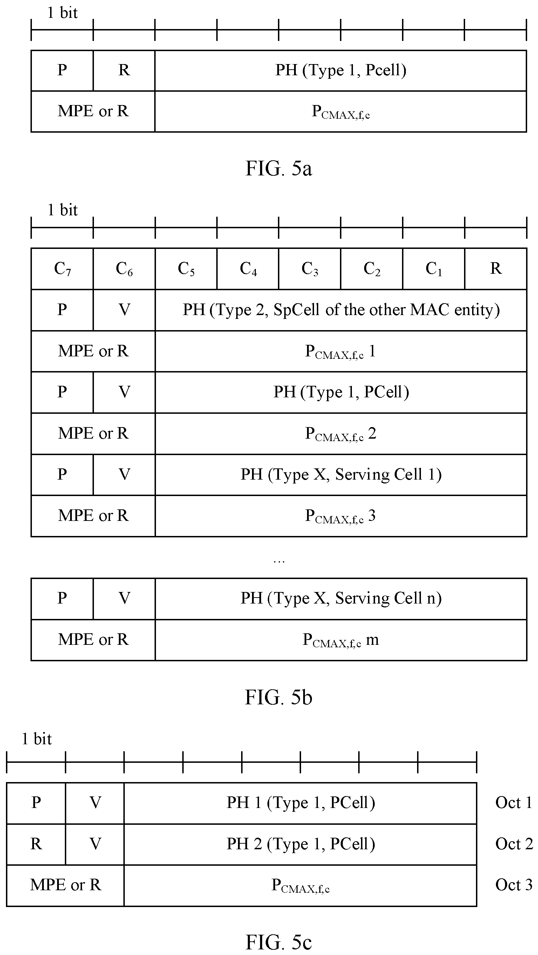

A first type is Single Entry PHR MAC CE, as shown in FIG. 5a.

In FIG. 5a, Single Entry PHR MAC CE has a fixed length of two bytes.

R: indicates a reserved bit, and is set to "0".

PH: indicates a PH level, which has a length of 6 bits (bits). A relationship (Power Headroom levels for PHR) between a reported PH and a PH level is shown in Table 1, and a relationship (Power headroom report mapping) between a PH level (reported value) and a PH measured quantity value (unit: dB) is shown in Table 2.

For a P or MPE related parameter, refer to a related technology. Details are not described.

P_{CMAX,f,c}: indicates P_{CMAX,f,c} for calculating a PH, and is based on a nominal (nominal) terminal device transmit power level (Nominal UE transmit power level for PHR), as shown in Table 3.

**Table 1**

| PH | PH level (Power Headroom Level) |
|---|---|
| 0 | POWER_HEADROOM_0 |
| 1 | POWER_HEADROOM_1 |
| 2 | POWER_HEADROOM_2 |
| 3 | POWER_HEADROOM_3 |
| ... | ... |
| 60 | POWER_HEADROOM_60 |
| 61 | POWER_HEADROOM_61 |
| 62 | POWER_HEADROOM_62 |
| 63 | POWER_HEADROOM_63 |

**Table 2**

| PH level (Reported value) | PH measured quantity value (Measured quantity value) (dB) |
|---|---|
| POWER_HEADROOM_0 | PH < -32 |
| POWER_HEADROOM_1 | -32 ≤ PH < -31 |
| POWER_HEADROOM_2 | -31 ≤ PH < -30 |
| POWER_HEADROOM_3 | -30 ≤ PH < -29 |
| ... | ... |
| POWER_HEADROOM_53 | 20 ≤ PH < 21 |
| POWER_HEADROOM_54 | 21 ≤ PH < 22 |
| POWER_HEADROOM_55 | 22 ≤ PH < 24 |
| POWER_HEADROOM_56 | 24 ≤ PH < 26 |
| POWER_HEADROOM_57 | 26 ≤ PH < 28 |
| POWER_HEADROOM_58 | 28 ≤ PH < 30 |
| POWER_HEADROOM_59 | 30 ≤ PH < 32 |
| POWER_HEADROOM_60 | 32 ≤ PH < 34 |
| POWER_HEADROOM_61 | 34 ≤ PH < 36 |
| POWER_HEADROOM_62 | 36 ≤ PH < 38 |
| POWER_HEADROOM_63 | PH ≥ 38 |

**Table 3**

| P_{CMAX,f,c} | Nominal terminal device transmit power level (Nominal UE transmit power level) |
|---|---|
| 0 | PCMAX_C_00 |
| 1 | PCMAX_C_01 |
| 2 | PCMAX_C_02 |
| ... | ... |
| 61 | PCMAX_C_61 |
| 62 | PCMAX_C_62 |
| 63 | PCMAX_C_63 |

A second type is Multiple Entry PHR MAC CE, as shown in FIG. 5b.

In FIG. 5b, a length of Multiple Entry PHR MAC CE is variable.

Cᵢ: indicates whether a serving cell whose serving cell index is ServCellIndex i reports a PH. "1" indicates that the PH is reported, and "0" indicates that the PH is not reported.

R: indicates a reserved bit, and is set to 0.

V: indicates whether the corresponding PH is an actual PH or a virtual PH, that is, whether the PH is determined based on actual transmission (actual transmission) (that is, actual PUSCH transmission) or based on a reference format (reference format) (that is, a reference PUSCH). "0" indicates that the corresponding PH is the actual PH, and "1" indicates that the corresponding PH is the virtual PH. In addition, "0" further indicates that a P_{CMAX,f,c} field and an MPE field are included, and "1" indicates that the field P_{CMAX,f,c} and the MPE field are not included.

PH: indicates a PH level, which has a length of 6 bits. A relationship between a reported PH and a PH level is shown in Table 1, and a relationship between a PH level and a PH measured quantity value (unit: dB) is shown in Table 2.

For a P or MPE related parameter, refer to a related technology. Details are not described.

P_{CMAX,f,c}: indicates P_{CMAX,f,c} for calculating a PH, and is based on a nominal terminal device transmit power level, as shown in Table 3.

A third type is an enhanced single-entry PHR for a plurality of TRP MAC CEs (Enhanced Single Entry PHR for multiple TRP MAC CE), as shown in FIG. 5c.

In FIG. 5c, Enhanced Single Entry PHR for multiple TRP MAC CE has a fixed length of three bytes.

R: indicates a reserved bit, and is set to "0".

PH i: indicates a PH level. PH 1 is associated with an SRS resource set (SRS-ResourceSet) with a small SRS resource set identifier (srs-ResourceSetId), and PH 2 is associated with SRS-ResourceSet with large srs-ResourceSetId. The PH levels are filled into the PHR MAC CE in ascending order of i, with a length of 6 bits. The reported PH and the PH level are shown in Table 1, and the PH level and the PH measured quantity value (dB) are shown in Table 2.

For a P or MPE related parameter, refer to a related technology. Details are not described.

V: indicates whether the corresponding PH is an actual PH or a virtual PH, that is, whether the PH is determined based on actual transmission (actual transmission) or based on a reference format (reference format). "0" indicates that the corresponding PH is the actual PH, and "1" indicates that the corresponding PH is the virtual PH.

P_{CMAX,f,c}: indicates P_{CMAX,f,c} for calculating a PH, and is based on a nominal terminal device transmit power level, as shown in Table 3.

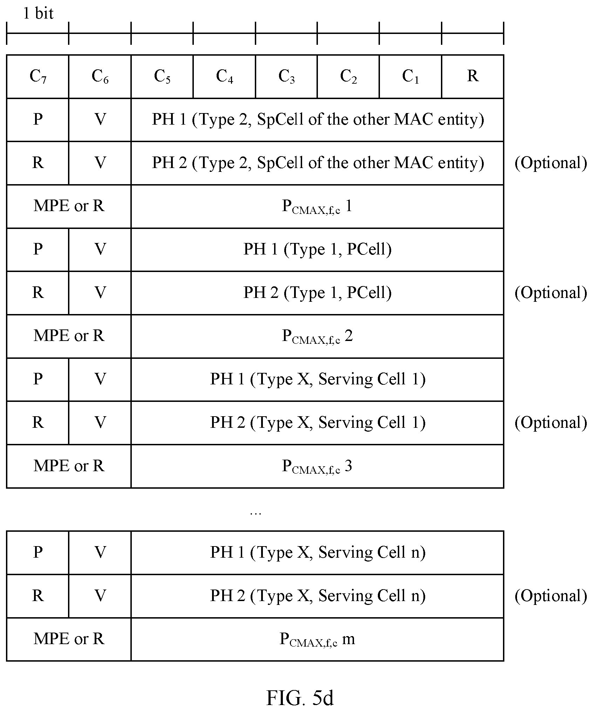

A fourth type is an enhanced multi-entry PHR for a plurality of TRP MAC CEs (Enhanced Multiple Entry PHR for multiple TRP MAC CE), as shown in FIG. 5d.

In FIG. 5d, a length of Enhanced Multiple Entry PHR for multiple TRP MAC CE is variable.

Cᵢ: indicates whether a serving cell whose serving cell index is ServCellIndex i reports a PH. "1" indicates that the PH is reported, and "0" indicates that the PH is not reported.

R: indicates a reserved bit, and is set to 0.

V: indicates whether the corresponding PH is an actual PH or a virtual PH, that is, whether the PH is determined based on actual transmission (actual transmission) or based on a reference format (reference format). "0" indicates that the corresponding PH is the actual PH, and "1" indicates that the corresponding PH is the virtual PH. In addition, "0" further indicates that a P_{CMAX,f,c} field and an MPE field are included, and "1" indicates that the field P_{CMAX,f,c} and the MPE field are not included.

PH i: indicates a PH level. PH 1 is associated with SRS-ResourceSet with small srs-ResourceSetId, and PH 2 is associated with SRS-ResourceSet with large srs-ResourceSetId. The PH levels are filled into the PHR MAC CE in ascending order of i, with a length of 6 bits. The reported PH and the PH level are shown in Table 1, and the PH level and the PH measured quantity value (dB) are shown in Table 2.

For a P or MPE related parameter, refer to a related technology. Details are not described.

P_{CMAX,f,c}: indicates P_{CMAX,f,c} for calculating a PH, and is based on a nominal terminal device transmit power level, as shown in Table 3.

In FIG. 5a to FIG. 5d, Serving Cell n indicates a serving cell n. SpCell of the other MAC entity indicates a special cell corresponding to another MAC entity (that is, an E-UTRA MAC entity in the case of NE-DC, NE-DC, and NGEN-DC).

It can be learned from the foregoing descriptions that the SBFD time unit and the non-SBFD time unit use different power control parameters. Therefore, power headrooms (power headroom, PH) in the SBFD time unit and the non-SBFD time unit are different, and need to be separately reported. In other words, the terminal device separately sends PHRs in the SBFD time unit and the non-SBFD time unit through PUSCHs. However, in a current typical SBFD slot configuration, a quantity of SBFD time units is far greater than a quantity of non-SBFD time units, for example, XXXXU and DXXXU. In this way, there is a high probability that the terminal device reports the PH in the SBFD time unit instead of the PH in the non-SBFD time unit, affecting uplink performance of the non-SBFD time unit.

In addition, even if a dual-PHR mode (twoPHRMode) is used, two actual PHs can be reported only in the case of PUSCH repetition type B, and only one actual PH and one virtual PH can be reported in other cases.

However, for a case in which two actual PHs are reported, because the quantity of SBFD time units is far greater than the quantity of non-SBFD time units, there is a high probability that the two reported actual PHs are PHs in the SBFD time unit.

For a case in which a virtual PH is reported, the virtual PH does not include a real power control parameter of the terminal device, for example, MPR=0 dB, A-MPR=0 dB, and P-MPR=0 dB. As a result, the network device cannot correctly understand the PH of the terminal device based on the virtual PH.

Therefore, even if the dual-PHR mode is used, a problem of uplink performance deterioration in the non-SBFD time unit cannot be resolved.

In conclusion, in the typical SBFD slot configuration, because the quantity of SBFD time units is far greater than the quantity of non-SBFD time units, there is a low probability that the terminal device reports the PHR in the non-SBFD time unit, affecting uplink transmission performance of the non-SBFD time unit.

In view of this, this application provides the following communication method. The communication method provided in this application may be applied to the system shown in FIG. 1.

Using a scenario in which multiplePHR is false as an example, the communication method in embodiments of this application includes: After a PHR is triggered, a terminal device determines first information based on a first PUSCH, and determines second information based on a second PUSCH. The first information includes a first PHR, the first PHR is determined based on a first parameter corresponding to a first transmission occasion of the first PUSCH, the first transmission occasion includes a first time unit, the first time unit belongs to a first type of time unit, the first type of time unit is an SBFD time unit or a non-SBFD time unit, and the first parameter is used to determine a transmit power of the first PUSCH on the first transmission occasion. The second information includes a second PHR, the second PHR is determined based on a second parameter corresponding to a second transmission occasion of the second PUSCH, the second transmission occasion includes a second time unit, the second time unit is determined based on a second type of time unit, the second type of time unit is determined based on the first type of time unit, the second type of time unit is different from the first type of time unit, and the second parameter is used to determine a transmit power of the second PUSCH on the second transmission occasion. The terminal device sends the first information. The first information is carried on the first PUSCH. The terminal device sends the second information. The second information is carried on the second PUSCH. The terminal device cancels the triggered PHR.

In this way, after the PHR is triggered once, the terminal device determines the first information and the second information, and then sends the first information and the second information. Only after determining the first information and the second information, the terminal device cancels the triggered PHR, to complete one PHR process. The first information and the second information are reported through different PUSCHs, the first PHR is determined based on the first parameter corresponding to the first transmission occasion of the first PUSCH, the second PHR is determined based on the second parameter corresponding to the second transmission occasion of the second PUSCH, and types of time units in which the first transmission occasion and the second transmission occasion are located are different. Therefore, in one PHR process, the terminal device reports PHRs corresponding to two time unit types, so that a reporting probability of an actual PH in the SBFD time unit is the same as that of an actual PH in the non-SBFD time unit, thereby helping ensure uplink performance of the non-SBFD time unit.

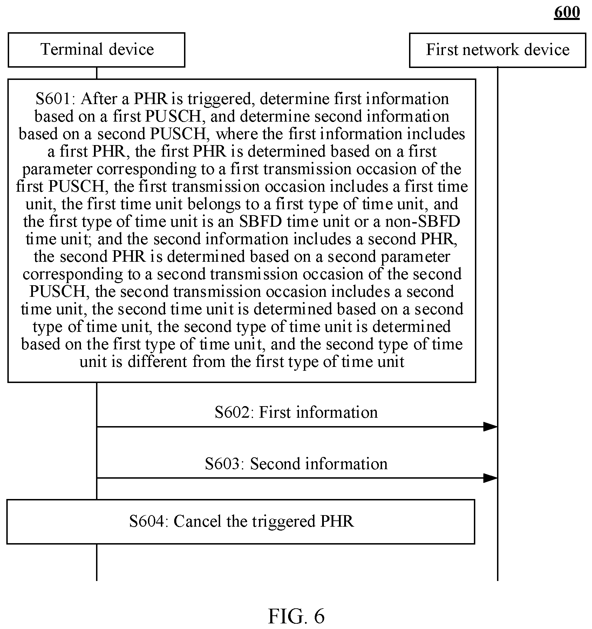

The following describes in detail the communication method provided in embodiments of this application with reference to FIG. 6. The communication method 600 provided in embodiments of this application includes the following operations.

S601: After a PHR is triggered, a terminal device determines first information based on a first PUSCH, and determines second information based on a second PUSCH.

The terminal device is described as follows:
The method may be performed by a terminal device. Unless otherwise specified, the "terminal device" in this application may be the terminal device, or may be a component (for example, a processor, a chip, or a chip system) in the terminal device, or may be a logical module or software that can implement all or some functions of the terminal device.

For a PHR trigger event, refer to the descriptions in the term explanation part. Details are not described again.

S601 includes S601a and S601b:
S601a: After the PHR is triggered, the terminal device determines the first information based on the first PUSCH.
S601b: After the PHR is triggered, the terminal device determines the second information based on the second PUSCH.

In this application, an example in which the terminal device first performs S601a and then performs S601b is used for description.

In S601a, the first information is described as follows:
The first information includes a first PHR, the first PHR is determined based on a first parameter corresponding to a first transmission occasion of the first PUSCH, the first transmission occasion includes a first time unit, the first time unit belongs to a first type of time unit, the first type of time unit is an SBFD time unit or a non-SBFD time unit, and the first parameter is used to determine a transmit power of the first PUSCH on the first transmission occasion.

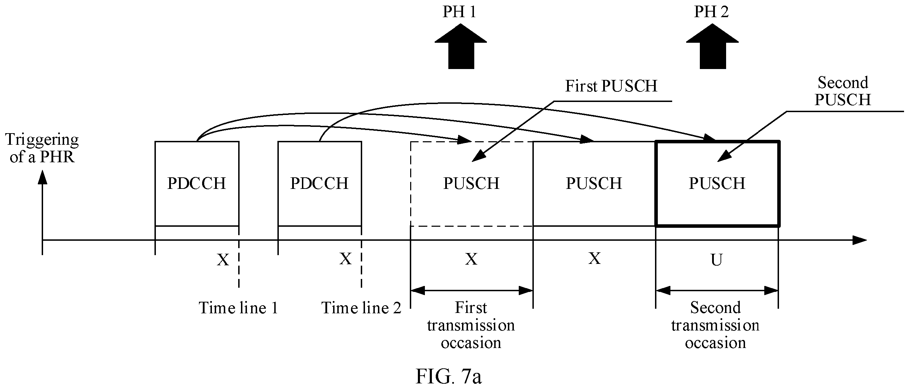

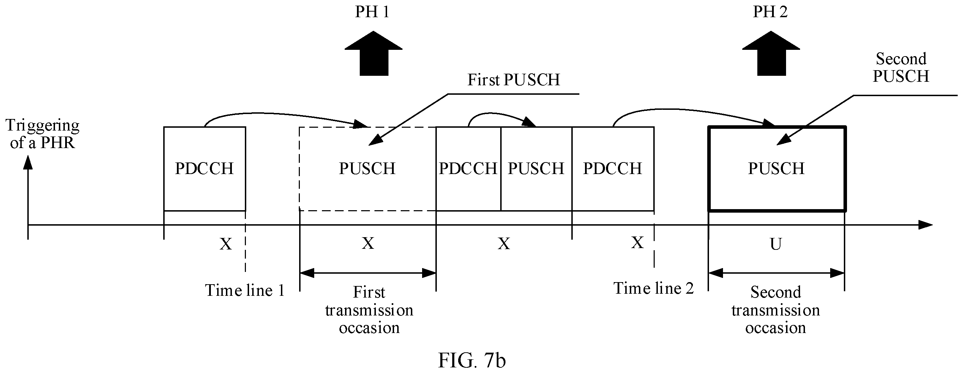

Using FIG. 7a (or FIG. 7b) as an example, the first PHR includes PH 1. PH 1 is an actual PH. For details, refer to the descriptions of formula (1). The first PUSCH is shown in a dashed box. The first time unit may include one X slot. The first type of time unit is an SBFD time unit.

The first parameter may include parameters involved in formula (1), for example, an index of a PUSCH transmission occasion, an index of an active uplink BWP, a carrier index, a serving cell index, and a maximum transmit power of the terminal device.

It should be noted that, in this application, that the first transmission occasion includes the first time unit means that the first transmission occasion includes only the first time unit. For example, the first time unit may include one or more symbols or one or more slots. Using FIG. 7a as an example, if the first transmission occasion of the first PUSCH includes one X slot, the first time unit is the X slot.

It should be noted that, in this application, the first PUSCH may include one or more transmission occasions, and each transmission occasion includes one or more symbols or one or more slots. In FIG. 7a, an example in which each transmission occasion includes one slot is used for description. This should not be construed as a limitation on this application. In this application, the first transmission occasion is the 1^{st} transmission occasion of the first PUSCH.

It should be noted that, in this application, the first PUSCH is indicated by a first network device.

For example, the first network device sends first indication information to the terminal device. Correspondingly, the terminal device receives the first indication information from the first network device. The first indication information indicates the terminal device to send the first PUSCH.

Optionally, if the first PUSCH is a PUSCH with type 1 configured grant (PUSCH with Type 1 configured grant), the first indication information is carried in a higher-layer message (for example, an RRC message).

Optionally, if the first PUSCH is a PUSCH with type 2 configured grant (PUSCH with Type 2 configured grant), the first indication information is DCI, and before the first network device sends the first indication information to the terminal device, the first network device further sends a higher-layer message (for example, an RRC message) to the terminal device. The RRC message is used to configure the first PUSCH for the terminal device.

Optionally, if the first PUSCH is a PUSCH with dynamic grant (PUSCH with dynamic grant), the first indication information is DCI.

Optionally, the first PUSCH and a condition that the first PUSCH satisfies are described as follows:
A case in which the first PUSCH is a PUSCH with dynamic grant is as follows:
The first PUSCH belongs to a PUSCH scheduled by using first DCI. The first DCI is the 1^{st} piece of DCI that satisfies a first condition after the PHR is triggered.

The first condition includes at least one of the following:
Condition A1: The first DCI is DCI used to schedule a transport block for initial transmission after the PHR is triggered. The transport block scheduled by using the first DCI includes a first transport block, and the first transport block includes the first information.
In this application, initial transmission refers to first transmission instead of retransmission. In this application, the initial transmission may also be described as new transmission. The initial transmission and the new transmission have a same meaning and may be used interchangeably.
Using FIG. 7a as an example, the first PUSCH is scheduled by using the first DCI, and the last symbol of a PDCCH monitoring occasion (monitoring occasion) (or an end moment of the PDCCH monitoring occasion) on which the first DCI is located is a time line 1. DCI received before the time line 1 corresponds to an actual PHR, and DCI received after the time line 1 corresponds to a virtual PHR. In FIG. 7a, the first DCI is received before the time line 1, and the first DCI is the 1^{st} piece of DCI used to schedule the first transport block for initial transmission since the PHR is triggered. Therefore, PH 1 is an actual PH.
Condition A2: The PUSCH scheduled by using the first DCI can accommodate (accommodate) the first information.
That the PUSCH scheduled by using the first DCI can accommodate the first information may be understood as that a time-frequency resource of the PUSCH scheduled by using the first DCI is sufficient for transmitting the first information.

It should be noted that the first condition includes the condition A1 and/or the condition A2. That the first DCI is the 1^{st} piece of DCI that satisfies the first condition after the PHR is triggered may be understood as that the first DCI is the 1^{st} piece of DCI that satisfies the condition A1 and/or the condition A2 after the PHR is triggered.

A case in which the first PUSCH is a PUSCH with configured grant is as follows:
The first PUSCH is the 1^{st} PUSCH that satisfies a second condition after the PHR is triggered.

The second condition includes at least one of the following:
Condition B1: First duration corresponding to the first PUSCH is greater than or equal to first PUSCH preparation duration. The first duration is a time interval between triggering of the PHR and the 1^{st} symbol of the first PUSCH. The first PUSCH preparation duration may be denoted as T_{proc,2}. For details, refer to a related 3GPP technical specification. Details are not described.
Condition B2: The first PUSCH can accommodate the first information.
For the condition B2, refer to the descriptions of the condition A2. Details are not described again.

It should be noted that the second condition includes the condition B1 and/or the condition B2. That the first PUSCH is the 1^{st} PUSCH that satisfies the second condition after the PHR is triggered may be understood as that the first PUSCH is the 1^{st} PUSCH that satisfies the condition B1 and/or the condition B2 after the PHR is triggered.

It should be noted that determining on the first condition or the second condition is performed at a PHY layer of the terminal device.

In some embodiments, the first information further includes time unit type information of the first type of time unit, to indicate a time unit type to which the first time unit belongs.

For example, if the first time unit is an SBFD time unit, the first type of time unit is an SBFD time unit.

For another example, if the first time unit is a non-SBFD time unit, the first type of time unit is a non-SBFD time unit.

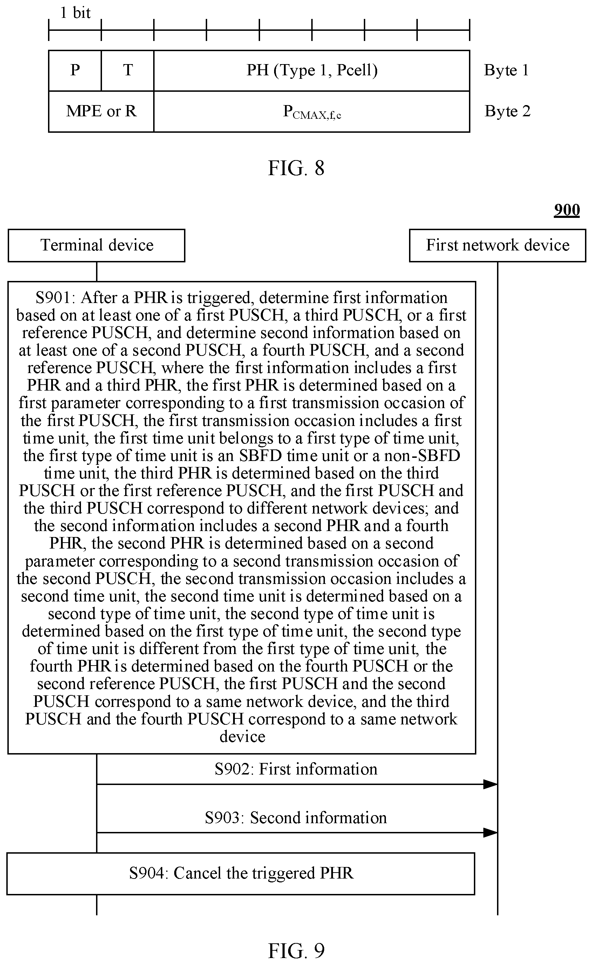

Using FIG. 8 as an example, the first information is included in a PHR MAC CE. In the PHR MAC CE shown in FIG. 8, a T field indicates the time unit type information of the first type of time unit. In FIG. 8, the T field is the 7^{th} bit in a byte 1.

It should be noted that, in this application, each byte includes eight bits. The rightmost bit is the least significant bit, and the leftmost bit is the most significant bit. The 1^{st} bit in each byte is the least significant bit, that is, the rightmost bit. The 8^{th} bit in each byte is the most significant bit, that is, the leftmost bit.

In some embodiments, the first information further includes first power information. The first power information indicates a maximum transmit power of the first PUSCH on the first transmission occasion. For example, the maximum transmit power indicated by the first power information is *P_{Cmax,f,c}*(i). For details, refer to the descriptions in the term explanation part. Details are not described again.

The following describes S601a by using a PHY layer and a MAC layer in a communication protocol layer as an example.

The first network device further configures a first MAC entity (entity) for the terminal device.

Only when the PHR is triggered or has been triggered and has not been canceled, the first MAC entity performs a PHR process only after receiving the 1^{st} uplink resource used for initial transmission. If the first PUSCH is the 1^{st} uplink resource used for initial transmission after the PHR is triggered, the first MAC entity performs the PHR process.

Operations performed by the PHY layer and the first MAC entity of the MAC layer include:
Step a1: The PHY layer provides the first MAC entity with the first PHR. Correspondingly, the first MAC entity obtains the first PHR from the PHY layer.

For the first PHR, refer to the descriptions in the foregoing paragraphs. Details are not described again.

Step a2 (optional): The PHY layer provides the first MAC entity with the time unit type information of the first type of time unit. Correspondingly, the first MAC entity obtains the time unit type information of the first type of time unit from the PHY layer.

For the time unit type information of the first type of time unit, refer to the descriptions in the foregoing paragraphs. Details are not described again.

For example, if the first type of time unit is a non-SBFD time unit, the time unit type information of the first type of time unit is "0". If the first type of time unit is an SBFD time unit, the time unit type information of the first type of time unit is "1".

Alternatively, on the contrary, if the first type of time unit is a non-SBFD time unit, the time unit type information of the first type of time unit is "1". If the first type of time unit is an SBFD time unit, the time unit type information of the first type of time unit is "0".

Step a3 (optional): The PHY layer provides the first MAC entity with the first power information. Correspondingly, the first MAC entity obtains the first power information from the PHY layer.

For the first power information, refer to the descriptions in the foregoing paragraphs. Details are not described again.

For the first MAC entity, after obtaining the first PHR, the time unit type information of the first type of time unit (optional), and the first power information (optional), the first MAC entity performs step a4:
Step a4: The first MAC entity generates a first MAC CE based on the first PHR, the time unit type information of the first type of time unit (optional), and the first power information (optional).
Step a5: The first MAC entity sends the first MAC CE to the PHY layer. Correspondingly, the PHY layer receives the first MAC CE from the first MAC entity.

The first MAC CE includes the first information.

It should be noted that, in this application, after the first MAC entity sends the first MAC CE to the PHY layer, the first MAC entity does not perform the following three operations: starting or restarting phr-PeriodicTimer; starting or restarting phr-ProhibitTimer; and canceling all triggered PHRs.

In S601b, the second information is described as follows:
The second information includes a second PHR, the second PHR is determined based on a second parameter corresponding to a second transmission occasion of the second PUSCH, the second transmission occasion includes a second time unit, the second time unit is determined based on a second type of time unit, the second type of time unit is determined based on the first type of time unit, the second type of time unit is different from the first type of time unit, and the second parameter is used to determine a transmit power of the second PUSCH on the second transmission occasion.

Using FIG. 7a (or FIG. 7b) as an example, the second PHR includes PH 2. PH 2 is an actual PH. For details, refer to the descriptions of formula (1). The second PUSCH is shown in a thick solid line box. The second time unit may include one U slot. The second type of time unit is a non-SBFD time unit.

The second parameter may include parameters involved in formula (1), for example, an index of a PUSCH transmission occasion, an index of an active uplink BWP, a carrier index, a serving cell index, and a maximum transmit power of the terminal device.

It should be noted that, in this application, that the second transmission occasion includes the second time unit means that the second transmission occasion includes only the second time unit. For example, the second time unit may include one or more symbols or one or more slots. Using FIG. 7a as an example, if the second transmission occasion of the second PUSCH includes one U slot, the second time unit is the U slot.

It should be noted that, in this application, that the second type of time unit is determined based on the first type of time unit, and the second type of time unit is different from the first type of time unit may be understood as that, when the first type of time unit is an SBFD time unit, the second type of time unit is a non-SBFD time unit. Alternatively, on the contrary, when the first type of time unit is a non-SBFD time unit, the second type of time unit is an SBFD time unit.

Using FIG. 7a as an example, the first time unit is the 1^{st} X slot. When the time unit type to which the first time unit belongs is an SBFD time unit (for example, the 1^{st} X slot), a time unit type to which the second time unit belongs is a non-SBFD time unit. In this case, even if there is an uplink resource (for example, a PUSCH shown in a solid box) in the 4^{th} X slot, the terminal device does not report the PHR, but waits for an uplink resource in a non-SBFD time unit (for example, the 1^{st} U slot), and reports the second PHR through the PUSCH shown in the thick solid line box. For details, refer to the descriptions of the second PHR.

It should be noted that, in this application, the second PUSCH may include one or more transmission occasions, and each transmission occasion includes one or more symbols or one or more slots. In FIG. 7a, an example in which each transmission occasion includes one slot is used for description. This should not be construed as a limitation on this application. In this application, the second transmission occasion is the 1^{st} transmission occasion of the second PUSCH.

It should be noted that, in this application, the second PUSCH is indicated by the first network device.

For example, the first network device sends second indication information to the terminal device. Correspondingly, the terminal device receives the second indication information from the first network device. The second indication information indicates the terminal device to send the second PUSCH.

Optionally, if the second PUSCH is a PUSCH with type 1 configured grant (PUSCH with Type 1 configured grant), the second indication information is carried in a higher-layer message (for example, an RRC message).

Optionally, if the second PUSCH is a PUSCH with type 2 configured grant (PUSCH with Type 2 configured grant), the second indication information is DCI, and before the first network device sends the second indication information to the terminal device, the first network device further sends a higher-layer message (for example, an RRC message) to the terminal device. The RRC message is used to configure the second PUSCH for the terminal device.

Optionally, if the second PUSCH is a PUSCH with dynamic grant (PUSCH with dynamic grant), the second indication information is DCI.

Optionally, the second PUSCH and a condition that the second PUSCH satisfies are described as follows:
A case in which the second PUSCH is a PUSCH with dynamic grant is as follows:
The second PUSCH belongs to a PUSCH scheduled by using second DCI. The second DCI is the 1^{st} piece of DCI that satisfies a third condition after the PHR is triggered.
The third condition includes at least one of the following:
   Condition C1: The second DCI is DCI used to schedule a transport block for initial transmission after the PHR is triggered. The transport block scheduled by using the second DCI includes a second transport block, and the second transport block includes the second information.
   Using FIG. 7a as an example, the second PUSCH is scheduled by using the second DCI, and the last symbol of a PDCCH monitoring occasion (monitoring occasion) (or an end moment of the PDCCH monitoring occasion) on which the second DCI is located is a time line 2. DCI received before the time line 2 corresponds to an actual PHR, and DCI received after the time line 2 corresponds to a virtual PHR. In FIG. 7a, the second DCI is received before the time line 2, and the second DCI is the 1^{st} piece of DCI used to schedule the second transport block for initial transmission since the PHR is triggered. Therefore, PH 2 is an actual PH.
   Condition C2: The PUSCH scheduled by using the second DCI can accommodate (accommodate) the second information.
   That the PUSCH scheduled by using the second DCI can accommodate the second information may be understood as that a time-frequency resource of the PUSCH scheduled by using the second DCI is sufficient for transmitting the second information.

It should be noted that the third condition includes the condition C1 and/or the condition C2. That the second DCI is the 1^{st} piece of DCI that satisfies the third condition after the PHR is triggered may be understood as that the second DCI is the 1^{st} piece of DCI that satisfies the condition C1 and/or the condition C2 after the PHR is triggered.

A case in which the second PUSCH is a PUSCH with configured grant is as follows:
The second PUSCH is the 1^{st} PUSCH that satisfies a fourth condition after the PHR is triggered.
The fourth condition includes at least one of the following:
   Condition D1: Second duration corresponding to the second PUSCH is greater than or equal to second PUSCH preparation duration. The second duration is a time interval between triggering of the PHR and the 1^{st} symbol of the second PUSCH. The second PUSCH preparation duration may be denoted as T_{proc,2}. For details, refer to a related 3GPP technical specification. Details are not described.
   Condition D2: The second PUSCH can accommodate the second information.
   For the condition D2, refer to the descriptions of the condition C2. Details are not described again.

It should be noted that the fourth condition includes the condition D1 and/or the condition D2. That the second PUSCH is the 1^{st} PUSCH that satisfies the fourth condition after the PHR is triggered may be understood as that the second PUSCH is the 1^{st} PUSCH that satisfies the condition D1 and/or the condition D2 after the PHR is triggered.

In some embodiments, the second information further includes time unit type information of the second type of time unit, to indicate a time unit type to which the second time unit belongs.

For example, if the second time unit is an SBFD time unit, the second type of time unit is an SBFD time unit.

For another example, if the second time unit is a non-SBFD time unit, the second type of time unit is a non-SBFD time unit.

Using FIG. 8 as an example, the second information is included in a PHR MAC CE. In the PHR MAC CE shown in FIG. 8, a T field indicates the time unit type information of the second type of time unit. In FIG. 8, the T field is the 7^{th} bit in a byte 1. For details, refer to the descriptions in S601a. Details are not described again.

In some embodiments, the second information further includes second power information. The second power information indicates a maximum transmit power of the second PUSCH on the second transmission occasion. For example, the maximum transmit power indicated by the second power information is *P*_{*CMAX*,f,c}(i). For details, refer to the descriptions in the term explanation part. Details are not described again.

The following describes S601b by using a PHY layer and a MAC layer in a communication protocol layer as an example.

For a first MAC entity of the terminal device, the first MAC entity continues to perform a PHR process.

When the PHR is triggered or has been triggered and has not been canceled, the first MAC entity receives the 1^{st} uplink resource used for initial transmission in another type of time unit (that is, the foregoing second type of time unit), and continues to perform the PHR process. If the second PUSCH is the 1^{st} uplink resource used for initial transmission in the second type of time unit after the PHR is triggered, the first MAC entity continues to perform the PHR process.

Operations performed by the PHY layer and the first MAC entity of the MAC layer include:
Step b1: The PHY layer provides the first MAC entity with the second PHR. Correspondingly, the first MAC entity obtains the second PHR from the PHY layer.

For the second PHR, refer to the descriptions in the foregoing paragraphs. Details are not described again.

Step b2 (optional): The PHY layer provides the first MAC entity with the time unit type information of the second type of time unit. Correspondingly, the first MAC entity obtains the time unit type information of the second type of time unit from the PHY layer.

For the time unit type information of the second type of time unit, refer to the descriptions in the foregoing paragraphs. Details are not described again.

For example, if the second type of time unit is a non-SBFD time unit, the time unit type information of the second type of time unit is "0". If the second type of time unit is an SBFD time unit, the time unit type information of the second type of time unit is "1".

Alternatively, on the contrary, if the second type of time unit is a non-SBFD time unit, the time unit type information of the second type of time unit is "1". If the second type of time unit is an SBFD time unit, the time unit type information of the second type of time unit is "0".

Step b3 (optional): The PHY layer provides the first MAC entity with the second power information. Correspondingly, the first MAC entity obtains the second power information from the PHY layer.

For the second power information, refer to the descriptions in the foregoing paragraphs. Details are not described again.

For the first MAC entity, after obtaining the second PHR, the time unit type information of the second type of time unit (optional), and the second power information (optional), the first MAC entity performs step b4:

Step b4: The first MAC entity generates a second MAC CE based on the second PHR, the time unit type information of the second type of time unit (optional), and the second power information (optional).

Step b5: The first MAC entity sends the second MAC CE to the PHY layer. Correspondingly, the PHY layer receives the second MAC CE from the first MAC entity.

The second MAC CE includes the second information.

For the terminal device, after determining the first information, the terminal device performs S602, and after determining the second information, the terminal device performs S603. S602 and S603 are described as follows:
S602: The terminal device sends the first information.

The first information is carried on the first PUSCH.

For example, the terminal device sends the first information to the first network device. Correspondingly, the first network device receives the first information from the terminal device, as shown in FIG. 6.

For example, the terminal device sends the first information on the first transmission occasion of the first PUSCH, as shown in FIG. 7a.

For another example, the terminal device sends the first information on another transmission occasion of the first PUSCH, which is not shown in FIG. 7a.

It should be understood that, using the PHY layer of the terminal device as an example, after the PHY layer receives the first MAC CE, the PHY layer sends the first PUSCH based on the first MAC CE. The first MAC CE includes the first information. Therefore, the first information (or the first PHR) is carried on the first PUSCH.

It should be noted that, in this application, the terminal device may first perform S601b, and then perform S602, as shown in FIG. 7a. Alternatively, the terminal device may first perform S602, and then perform S601b, as shown in FIG. 7b. Alternatively, the terminal device may simultaneously perform S601b and S602. This is not limited in this application.

S603: The terminal device sends the second information.

The second information is carried on the second PUSCH.

For example, the terminal device sends the second information to the first network device. Correspondingly, the first network device receives the second information from the terminal device, as shown in FIG. 6.

For example, the terminal device sends the second information on the second transmission occasion of the second PUSCH, as shown in FIG. 7a.

For another example, the terminal device sends the second information on another transmission occasion of the second PUSCH, which is not shown in FIG. 7a.

It should be understood that, using the PHY layer of the terminal device as an example, after the PHY layer receives the second MAC CE, the PHY layer sends the second PUSCH based on the second MAC CE. The second MAC CE includes the second information. Therefore, the second information (or the second PHR) is carried on the second PUSCH.

It should be noted that, in this application, the terminal device first performs S602, and then performs S603, as shown in FIG. 7a or FIG. 7b.

S604: The terminal device cancels the triggered PHR and/or resets a first timer.

It should be understood that, after S604 is performed, another triggered PHR is also canceled. It may be understood that all triggered PHRs during the period from time when the PHR in S601 is triggered to time when the PHR MAC CE (that is, the PHR MAC CE including the first information and the PHR MAC CE including the second information) is generated are canceled.

The first timer may include phr-PeriodicTimer and/or phr-ProhibitTimer. For example, the terminal device resets phr-PeriodicTimer and phr-ProhibitTimer. For phr-PeriodicTimer and phr-ProhibitTimer, refer to the descriptions in the term explanation part. Details are not described again.

It should be noted that, in this application, for the first MAC entity of the terminal device, after the first MAC entity sends the second MAC CE to the PHY layer (that is, performs step b5), the first MAC entity performs the following three operations: starting or restarting phr-PeriodicTimer; starting or restarting phr-ProhibitTimer; and canceling all triggered PHRs.

Using a scenario in which multiplePHR is true as an example, the communication method in embodiments of this application includes: After a PHR is triggered, a terminal device determines first information based on at least one of a first PUSCH, a third PUSCH, or a first reference PUSCH, and determines second information based on at least one of a second PUSCH, a fourth PUSCH, and a second reference PUSCH. The first information includes a first PHR and a third PHR, the first PHR is determined based on a first parameter corresponding to a first transmission occasion of the first PUSCH, the first transmission occasion includes a first time unit, the first time unit belongs to a first type of time unit, the first type of time unit is an SBFD time unit or a non-SBFD time unit, and the first parameter is used to determine a transmit power of the first PUSCH on the first transmission occasion. The third PHR is determined based on the third PUSCH or the first reference PUSCH. The first PUSCH and the third PUSCH correspond to different network devices. The second information includes a second PHR and a fourth PHR, the second PHR is determined based on a second parameter corresponding to a second transmission occasion of the second PUSCH, the second transmission occasion includes a second time unit, the second time unit is determined based on a second type of time unit, the second type of time unit is determined based on the first type of time unit, the second type of time unit is different from the first type of time unit, and the second parameter is used to determine a transmit power of the second PUSCH on the second transmission occasion. The fourth PHR is determined based on the fourth PUSCH or the second reference PUSCH. The first PUSCH and the second PUSCH correspond to a same network device. The third PUSCH and the fourth PUSCH correspond to a same network device. The terminal device sends the first information. The first information is carried on the first PUSCH. The terminal device sends the second information. The second information is carried on the second PUSCH. The terminal device cancels the triggered PHR.

In this way, after the PHR is triggered once, the terminal device determines the first information and the second information, and then sends the first information and the second information. Only after determining the first information and the second information, the terminal device cancels the triggered PHR, to complete one PHR process. The first information and the second information are reported through different PUSCHs, the first PHR is determined based on the first parameter corresponding to the first transmission occasion of the first PUSCH, the second PHR is determined based on the second parameter corresponding to the second transmission occasion of the second PUSCH, and types of time units in which the first transmission occasion and the second transmission occasion are located are different. Therefore, in one PHR process, the terminal device reports PHRs corresponding to two time unit types, so that a reporting probability of an actual PH in the SBFD time unit is the same as that of an actual PH in the non-SBFD time unit, thereby helping ensure uplink performance of the non-SBFD time unit.

Further, the first information further includes the third PHR, and the second information further includes the fourth PHR. The third PHR is determined based on the third PUSCH or the first reference PUSCH. The fourth PHR is determined based on the fourth PUSCH or the second reference PUSCH. In this way, for the scenario in which multiplePHR is true, the terminal device may also report the first information and the second information, so that a reporting probability of an actual PH in the SBFD time unit is the same as that of an actual PH in the non-SBFD time unit, thereby helping ensure uplink performance of the non-SBFD time unit.

The following describes in detail the communication method provided in embodiments of this application with reference to FIG. 9. The communication method 900 provided in embodiments of this application includes the following operations.

S901: After a PHR is triggered, a terminal device determines first information based on at least one of a first PUSCH, a third PUSCH, or a first reference PUSCH, and determines second information based on at least one of a second PUSCH, a fourth PUSCH, and a second reference PUSCH.

For the terminal device and a PHR trigger event, refer to the descriptions in S601. Details are not described again.

S901 includes S901a and S901b:
S901a: After the PHR is triggered, the terminal device determines the first information based on at least one of the first PUSCH, the third PUSCH, or the first reference PUSCH.
S901b: After the PHR is triggered, the terminal device determines the second information based on at least one of the second PUSCH, the fourth PUSCH, and the second reference PUSCH.

In this application, an example in which the terminal device first performs S901a and then performs S901b is used for description.

In S901a, a first PHR of the first information is described as follows:
The first information includes the first PHR, the first PHR is determined based on a first parameter corresponding to a first transmission occasion of the first PUSCH, the first transmission occasion includes a first time unit, the first time unit belongs to a first type of time unit, the first type of time unit is an SBFD time unit or a non-SBFD time unit, and the first parameter is used to determine a transmit power of the first PUSCH on the first transmission occasion.

For the first PHR, the first PUSCH, the first transmission occasion, the first parameter, the first time unit, and the first type of time unit, refer to the descriptions in S601a. Details are not described again.

It should be noted that, in S901a, the first PHR is determined neither based on the third PUSCH nor based on the first reference PUSCH.

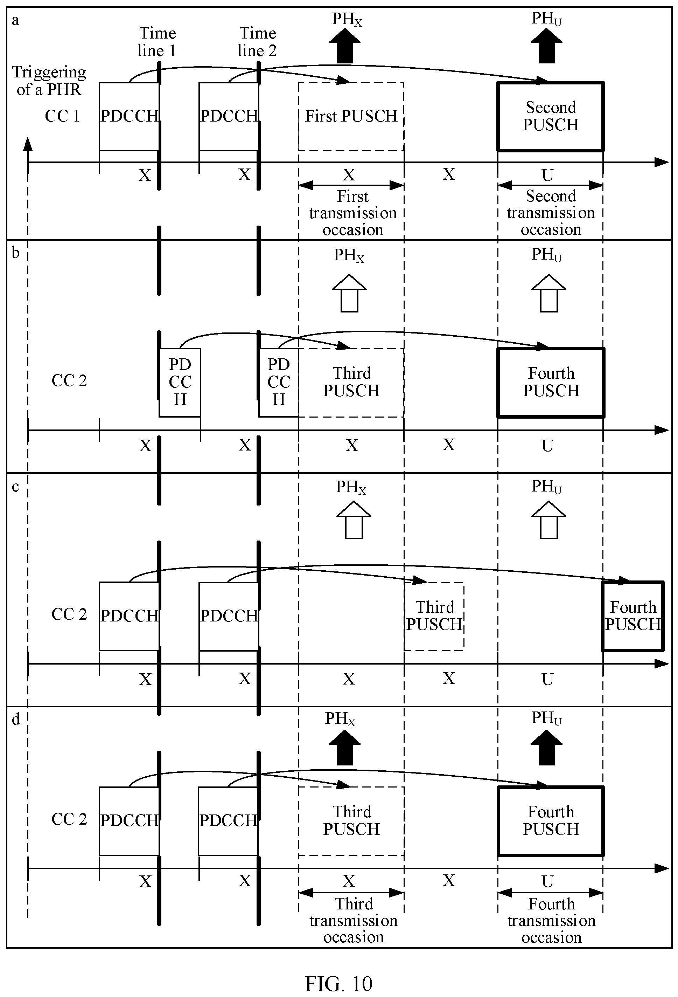

In S901a, a third PHR of the first information is described as follows:
The third PHR is determined based on the third PUSCH or the first reference PUSCH. The first PUSCH and the third PUSCH correspond to different network devices. Using FIG. 10 as an example, the first PUSCH may be a PUSCH sent by the terminal device to a first network device on a first carrier (for example, CC 1). The third PUSCH may be a PUSCH sent by the terminal device to a second network device on a second carrier (for example, CC 2).

If the third PHR is determined based on the third PUSCH, the third PHR is an actual PHR. If the third PHR is determined based on the first reference PUSCH, the third PHR is a virtual PHR. The following describes eight cases (Case 1 to Case 8):
Case 1: The third PHR is determined based on the first reference PUSCH. For example, the first PUSCH is a PUSCH with dynamic grant, and the third PUSCH is a PUSCH with dynamic grant.

In this case, if the third PUSCH belongs to a PUSCH scheduled by using third DCI, and the last symbol of a PDCCH monitoring occasion (monitoring occasion) on which the third DCI is located is later than the last symbol of a PDCCH monitoring occasion on which first DCI is located, the third PHR is determined based on the first reference PUSCH; and/or if the third PUSCH is not in a slot in which the first transmission occasion is located, the third PHR is determined based on the first reference PUSCH.

Using a box in which a letter b in FIG. 10 is located as an example, the third PHR includes PH_{X}. PH_{X} is a virtual PHR. For details, refer to the descriptions of formula (2). The third PUSCH is shown in a dashed box. The last symbol of the PDCCH monitoring occasion on which the third DCI is located is later than the last symbol of the PDCCH monitoring occasion on which the first DCI is located. In this case, the third PHR is determined based on the first reference PUSCH, that is, the third PHR is a virtual PHR.

Using a box in which a letter c in FIG. 10 is located as an example, the third PHR includes PH_{X}. PH_{X} is a virtual PHR. For details, refer to the descriptions of formula (2). The third PUSCH is shown in a dashed box. Although the last symbol of the PDCCH monitoring occasion on which the third DCI is located is not later than the last symbol of the PDCCH monitoring occasion on which the first DCI is located, the third PUSCH is not in the slot in which the first transmission occasion is located, that is, the 3^{rd} X slot does not include the third PUSCH. In this case, the third PHR is determined based on the first reference PUSCH, that is, the third PHR is a virtual PHR.

Case 2: The third PHR is determined based on the first reference PUSCH. For example, the first PUSCH is a PUSCH with dynamic grant, and the third PUSCH is a PUSCH with configured grant.

In this case, if first reference time is later than the last symbol of a PDCCH monitoring occasion on which first DCI is located, the third PHR is determined based on the first reference PUSCH, where the first reference time is earlier than the third PUSCH, and there is an interval of second PUSCH preparation duration between the first reference time and the 1^{st} symbol of the third PUSCH; and/or if the third PUSCH is not in a slot in which the first transmission occasion is located, the third PHR is determined based on the first reference PUSCH.

It should be noted that, in this application, the first reference time may be understood as being earlier than the 1^{st} symbol of the third PUSCH by the second PUSCH preparation duration. The second PUSCH preparation duration may be T_{proc,2}. For details, refer to a related 3GPP technical specification. Details are not described.

Case 3: The third PHR is determined based on the first reference PUSCH. For example, the first PUSCH is a PUSCH with configured grant, and the third PUSCH is a PUSCH with dynamic grant.

In this case, if the third PUSCH belongs to a PUSCH scheduled by using third DCI, and the last symbol of a PDCCH monitoring occasion on which the third DCI is located is later than second reference time, the third PHR is determined based on the first reference PUSCH, where the second reference time is earlier than the first PUSCH, and there is an interval of first PUSCH preparation duration between the second reference time and the 1^{st} symbol of the first PUSCH; and/or if the third PUSCH is not in a slot in which the first transmission occasion is located, the third PHR is determined based on the first reference PUSCH.

It should be noted that, in this application, the second reference time may be understood as being earlier than the 1^{st} symbol of the first PUSCH by the first PUSCH preparation duration. The first PUSCH preparation duration may be T_{proc,2}. For details, refer to a related 3GPP technical specification. Details are not described.

Case 4: The third PHR is determined based on the first reference PUSCH. For example, the first PUSCH is a PUSCH with configured grant, and the third PUSCH is a PUSCH with configured grant.

In this case, if first reference time is later than second reference time, the third PHR is determined based on the first reference PUSCH, where the first reference time is earlier than the third PUSCH, and there is an interval of second PUSCH preparation duration between the first reference time and the 1^{st} symbol of the third PUSCH; and the second reference time is earlier than the first PUSCH, and there is an interval of first PUSCH preparation duration between the second reference time and the 1^{st} symbol of the first PUSCH; and/or if the third PUSCH is not in a slot in which the first transmission occasion is located, the third PHR is determined based on the first reference PUSCH.

It should be noted that, in this application, for the first reference time, refer to the descriptions in Case 2, and for the second reference time, refer to the descriptions in Case 3. The first PUSCH preparation duration may be the same as or different from the second PUSCH preparation duration. This is not limited in this application.

It should be understood that, if the first PUSCH preparation duration is the same as the second PUSCH preparation duration, that the first reference time is later than the second reference time may alternatively be described as that the 1^{st} symbol of the third PUSCH is later than the 1^{st} symbol of the first PUSCH.

Case 5: The third PHR is determined based on the third PUSCH. For example, the first PUSCH is a PUSCH with dynamic grant, and the third PUSCH is a PUSCH with dynamic grant.

In this case, the third PHR is determined based on a third parameter corresponding to a third transmission occasion of the third PUSCH. The third PUSCH belongs to a PUSCH scheduled by using third DCI. The last symbol of a PDCCH monitoring occasion on which the third DCI is located is not later than the last symbol of a PDCCH monitoring occasion on which first DCI is located. A slot in which the first transmission occasion is located includes the third transmission occasion. The third parameter is used to determine a transmit power of the third PUSCH on the third transmission occasion.

It should be noted that, that the last symbol of the PDCCH monitoring occasion on which the third DCI is located is not later than the last symbol of the PDCCH monitoring occasion on which the first DCI is located may include the following possible implementations.

Possible implementation 5-1: The last symbol of the PDCCH monitoring occasion on which the third DCI is located is earlier than the last symbol of the PDCCH monitoring occasion on which the first DCI is located.

Possible implementation 5-2: The last symbol of the PDCCH monitoring occasion on which the third DCI is located and the last symbol of the PDCCH monitoring occasion on which the first DCI is located are a same symbol.

Using a box in which a letter d in FIG. 10 is located as an example, the third PHR includes PH_{X}. PH_{X} is an actual PH. For details, refer to the descriptions of formula (1). The third transmission occasion includes a third time unit, and the third time unit may include one X slot. The third time unit belongs to an SBFD time unit.

The third parameter may include parameters involved in formula (1), for example, an index of a PUSCH transmission occasion, an index of an active uplink BWP, a carrier index, a serving cell index, and a maximum transmit power of the terminal device.

Using a box in which a letter d in FIG. 10 is located as an example, the third PUSCH is shown in a dashed box. The last symbol of the PDCCH monitoring occasion on which the third DCI is located is not later than the last symbol (that is, a time line 1) of the PDCCH monitoring occasion on which the first DCI is located. In addition, the third PUSCH is in the slot in which the first transmission occasion is located, that is, the 3^{rd} X slot includes the third PUSCH. In this case, the third PHR is determined based on the third PUSCH, that is, the third PHR is an actual PH.

Case 6: The third PHR is determined based on the third PUSCH. For example, the first PUSCH is a PUSCH with dynamic grant, and the third PUSCH is a PUSCH with configured grant.

In this case, the third PHR is determined based on a third parameter corresponding to a third transmission occasion of the third PUSCH. First reference time is not later than the last symbol of a PDCCH monitoring occasion on which first DCI is located, the first reference time is earlier than the third PUSCH, and there is an interval of second PUSCH preparation duration between the first reference time and the 1^{st} symbol of the third PUSCH. A slot in which the first transmission occasion is located includes the third transmission occasion. The third parameter is used to determine a transmit power of the third PUSCH on the third transmission occasion.

It should be noted that, that the first reference time is not later than the last symbol of the PDCCH monitoring occasion on which the first DCI is located may include the following possible implementations.

Possible implementation 6-1: The first reference time is earlier than the 1^{st} symbol of the PDCCH monitoring occasion on which the first DCI is located.

Possible implementation 6-2: The first reference time is included in the PDCCH monitoring occasion on which the first DCI is located.

For the first reference time, refer to the descriptions in Case 2. Details are not described again.

For the third parameter, refer to the descriptions in Case 5. Details are not described again.

Case 7: The third PHR is determined based on the third PUSCH. For example, the first PUSCH is a PUSCH with configured grant, and the third PUSCH is a PUSCH with dynamic grant.

In this case, the third PHR is determined based on a third parameter corresponding to a third transmission occasion of the third PUSCH.

The third PUSCH belongs to a PUSCH scheduled by using third DCI. The last symbol of the PDCCH monitoring occasion on which the third DCI is located is not later than second reference time, the second reference time is earlier than the first PUSCH, and there is an interval of first PUSCH preparation duration between the second reference time and the 1^{st} symbol of the first PUSCH. A slot in which the first transmission occasion is located includes the third transmission occasion. The third parameter is used to determine a transmit power of the third PUSCH on the third transmission occasion.

For the second reference time, refer to the descriptions in Case 3. Details are not described again.

For the third parameter, refer to the descriptions in Case 5. Details are not described again.

Case 8: The third PHR is determined based on the third PUSCH. For example, the first PUSCH is a PUSCH with configured grant, and the third PUSCH is a PUSCH with configured grant.

In this case, the third PHR is determined based on a third parameter corresponding to a third transmission occasion of the third PUSCH. First reference time is not later than second reference time. The first reference time is earlier than the third PUSCH, and there is an interval of second PUSCH preparation duration between the first reference time and the 1^{st} symbol of the third PUSCH. The second reference time is earlier than the first PUSCH, and there is an interval of first PUSCH preparation duration between the second reference time and the 1^{st} symbol of the first PUSCH. A slot in which the first transmission occasion is located includes the third transmission occasion. The third parameter is used to determine a transmit power of the third PUSCH on the third transmission occasion.

For the first reference time and the second reference time, refer to the descriptions in Case 4.

For the third parameter, refer to the descriptions in Case 5. Details are not described again.

It should be noted that, in this application, that the third transmission occasion includes the third time unit means that the third transmission occasion includes only the third time unit. For example, the third time unit may include one or more symbols or one or more slots. Using a box in which a letter "d" in FIG. 10 is located as an example, if the third transmission occasion of the third PUSCH includes one X slot, the third time unit is the X slot.

It should be noted that, in this application, the third PUSCH may include one or more transmission occasions, and each transmission occasion includes one or more symbols or one or more slots. In this application, if the slot in which the first transmission occasion is located includes at least one transmission occasion of the third PUSCH, the third transmission occasion is the 1^{st} transmission occasion in the at least one transmission occasion of the third PUSCH.

It should be noted that, in this application, the third PUSCH is indicated by the second network device.

For example, the second network device sends third indication information to the terminal device. Correspondingly, the terminal device receives the third indication information from the second network device. The third indication information indicates the terminal device to send the third PUSCH.

Optionally, if the third PUSCH is a PUSCH with type 1 configured grant (PUSCH with Type 1 configured grant), the third indication information is carried in a higher-layer message (for example, an RRC message).

Optionally, if the third PUSCH is a PUSCH with type 2 configured grant (PUSCH with Type 2 configured grant), the third indication information is DCI, and before the second network device sends the third indication information to the terminal device, the second network device further sends a higher-layer message (for example, an RRC message) to the terminal device. The RRC message is used to configure the third PUSCH for the terminal device.

Optionally, if the third PUSCH is a PUSCH with dynamic grant (PUSCH with dynamic grant), the third indication information is DCI.

In some embodiments, the first information further includes information about a time unit type to which the third time unit belongs. The time unit type to which the third time unit belongs may be the first type of time unit, or may be the second type of time unit.

For example, if the third time unit is an SBFD time unit, the time unit type to which the third time unit belongs is an SBFD time unit.

For another example, if the third time unit is a non-SBFD time unit, the time unit type to which the third time unit belongs is a non-SBFD time unit.

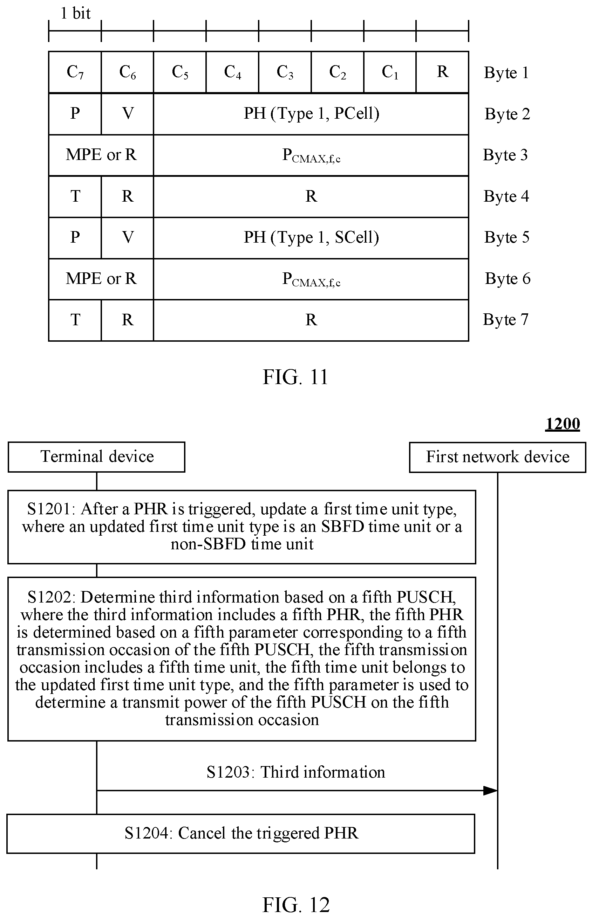

Using FIG. 11 as an example, the first information is included in a PHR MAC CE. In the PHR MAC CE shown in FIG. 11, a T field (for example, the 8^{th} bit in a byte 4) indicates information about a time unit type to which the first time unit belongs, and another T field (for example, the 8^{th} bit in a byte 7) indicates the information about the time unit type to which the third time unit belongs.

It should be noted that, in this application, each byte includes eight bits. The rightmost bit is the least significant bit, and the leftmost bit is the most significant bit. The 1^{st} bit in each byte is the least significant bit, that is, the rightmost bit. The 8^{th} bit in each byte is the most significant bit, that is, the leftmost bit.

It should be noted that the time unit type to which the third time unit belongs may be the same as or different from the time unit type to which the first time unit belongs. This is not limited in this application.

The following describes S901a by using a PHY layer and a MAC layer in a communication protocol layer as an example.

Operations performed by the PHY layer and the first MAC entity of the MAC layer include:
Step c1: The PHY layer provides the first MAC entity with the first PHR and the third PHR. Correspondingly, the first MAC entity obtains the first PHR and the third PHR from the PHY layer.

For the first PHR and the third PHR, refer to the descriptions in the foregoing paragraphs. Details are not described again.

Step c2 (optional): The PHY layer provides the first MAC entity with the information about the time unit type to which the first time unit belongs and the information about the time unit type to which the third time unit belongs. Correspondingly, the first MAC entity obtains the information about the time unit type to which the first time unit belongs and the information about the time unit type to which the third time unit belongs from the PHY layer.

For the information about the time unit type to which the first time unit belongs and the information about the time unit type to which the third time unit belongs, refer to the descriptions in the foregoing paragraphs. Details are not described again.

For example, if the first time unit is a non-SBFD time unit, the information about the time unit type to which the first time unit belongs is "0". If the first time unit is an SBFD time unit, the information about the time unit type to which the first time unit belongs is "1".

Alternatively, on the contrary, if the first time unit is a non-SBFD time unit, the information about the time unit type to which the first time unit belongs is "1". If the first time unit is an SBFD time unit, the information about the time unit type to which the first time unit belongs is "0".

For another example, if the third time unit is a non-SBFD time unit, the information about the time unit type to which the third time unit belongs is "0". If the third time unit is an SBFD time unit, the information about the time unit type to which the third time unit belongs is "1".

Alternatively, on the contrary, if the third time unit is a non-SBFD time unit, the information about the time unit type to which the third time unit belongs is "1". If the third time unit is an SBFD time unit, the information about the time unit type to which the third time unit belongs is "0".

It should be noted that, if the third PHR is determined based on the third PUSCH, the first MAC entity obtains the "information about the time unit type to which the third time unit belongs". If the third PHR is determined based on the first reference PUSCH, the first MAC entity does not obtain the "information about the time unit type to which the third time unit belongs".

Step c3 (optional): The PHY layer provides the first MAC entity with first power information. Correspondingly, the first MAC entity obtains the first power information from the PHY layer.

For the first power information, refer to the descriptions of the scenario in which multiplePHR is false (that is, the communication method 600). Details are not described again.

It should be noted that, in the scenario in which multiplePHR is false, the first power information may be understood as a maximum transmit power of the first PUSCH on the first transmission occasion. In a scenario in which multiplePHR is true, the first power information may be understood as a maximum transmit power on the first transmission occasion.

For the first MAC entity, after obtaining the first PHR, the third PHR, the information about the time unit type to which the first time unit belongs, the information about the time unit type to which the third time unit belongs (optional), and the first power information (optional), the first MAC entity performs step c4:

Step c4: The first MAC entity generates a first MAC CE based on the first PHR, the third PHR, the information about the time unit type to which the first time unit belongs, the information about the time unit type to which the third time unit belongs (optional), and the first power information (optional).

Step c5: The first MAC entity sends the first MAC CE to the PHY layer. Correspondingly, the PHY layer receives the first MAC CE from the first MAC entity.

The first MAC CE includes the first information.

It should be noted that, in this application, after the first MAC entity sends the first MAC CE to the PHY layer, the first MAC entity does not perform the following three operations: starting or restarting phr-PeriodicTimer; starting or restarting phr-ProhibitTimer; and canceling all triggered PHRs.

In S901b, a second PHR of the second information is described as follows:
The second information includes the second PHR, the second PHR is determined based on a second parameter corresponding to a second transmission occasion of the second PUSCH, the second transmission occasion includes a second time unit, the second time unit is determined based on a second type of time unit, the second type of time unit is determined based on the first type of time unit, the second type of time unit is different from the first type of time unit, and the second parameter is used to determine a transmit power of the second PUSCH on the second transmission occasion.

For the second PHR, the second PUSCH, the second transmission occasion, the second parameter, the second time unit, and the second type of time unit, refer to the descriptions in S601b. Details are not described again.

It should be noted that, in S901b, the second PHR is determined neither based on the fourth PUSCH nor based on the second reference PUSCH.

In S901a, a fourth PHR of the second information is described as follows:
The fourth PHR is determined based on the fourth PUSCH or the second reference PUSCH. The first PUSCH and the second PUSCH correspond to a same network device, and the third PUSCH and the fourth PUSCH correspond to a same network device. Using FIG. 10 as an example, the first PUSCH and the second PUSCH may be PUSCHs sent by the terminal device to a first network device on a first carrier (for example, CC 1). The third PUSCH and the fourth PUSCH may be PUSCHs sent by the terminal device to a second network device on a second carrier (for example, CC 2).

If the fourth PHR is determined based on the fourth PUSCH, the fourth PHR is an actual PHR. If the fourth PHR is determined based on the second reference PUSCH, the fourth PHR is a virtual PHR. The following describes eight cases (Case 9 to Case 16):
Case 9: The fourth PHR is determined based on the second reference PUSCH. For example, the second PUSCH is a PUSCH with dynamic grant, and the fourth PUSCH is a PUSCH with dynamic grant.

In this case, if the fourth PUSCH belongs to a PUSCH scheduled by using fourth DCI, and the last symbol of a PDCCH monitoring occasion (monitoring occasion) on which the fourth DCI is located is later than the last symbol of a PDCCH monitoring occasion on which second DCI is located, the fourth PHR is determined based on the second reference PUSCH; and/or if the fourth PUSCH is not in a slot in which the second transmission occasion is located, the fourth PHR is determined based on the second reference PUSCH.

Using a box in which a letter b in FIG. 10 is located as an example, the fourth PHR includes PH_{U}. PH_{U} is a virtual PHR. For details, refer to the descriptions of formula (2). The fourth PUSCH is shown in a thick solid line box. The last symbol of the PDCCH monitoring occasion on which the fourth DCI is located is later than the last symbol of the PDCCH monitoring occasion on which the second DCI is located. In this case, the fourth PHR is determined based on the second reference PUSCH, that is, the fourth PHR is a virtual PHR.

Using a box in which a letter c in FIG. 10 is located as an example, the fourth PHR includes PH_{U}. PH_{U} is a virtual PHR. For details, refer to the descriptions of formula (2). The fourth PUSCH is shown in a thick solid line box. Although the last symbol of the PDCCH monitoring occasion on which the fourth DCI is located is not later than the last symbol of the PDCCH monitoring occasion on which the second DCI is located, the fourth PUSCH is not in the slot in which the second transmission occasion is located, that is, the U slot does not include the fourth PUSCH. In this case, the fourth PHR is determined based on the second reference PUSCH, that is, the fourth PHR is a virtual PHR.

Case 10: The fourth PHR is determined based on the second reference PUSCH. For example, the second PUSCH is a PUSCH with dynamic grant, and the fourth PUSCH is a PUSCH with configured grant.

In this case, if third reference time is later than the last symbol of a PDCCH monitoring occasion on which second DCI is located, the fourth PHR is determined based on the second reference PUSCH, where the third reference time is earlier than the fourth PUSCH, and there is an interval of second PUSCH preparation duration between the third reference time and the 1^{st} symbol of the fourth PUSCH; and/or if the fourth PUSCH is not in a slot in which the second transmission occasion is located, the fourth PHR is determined based on the second reference PUSCH.

It should be noted that, in this application, the third reference time may be understood as being earlier than the 1^{st} symbol of the fourth PUSCH by the second PUSCH preparation duration. The second PUSCH preparation duration may be T_{proc,2}. For details, refer to a related 3GPP technical specification. Details are not described.

Case 11: The fourth PHR is determined based on the second reference PUSCH. For example, the second PUSCH is a PUSCH with configured grant, and the fourth PUSCH is a PUSCH with dynamic grant.

In this case, if the fourth PUSCH belongs to a PUSCH scheduled by using fourth DCI, and the last symbol of a PDCCH monitoring occasion on which the fourth DCI is located is later than fourth reference time, the fourth PHR is determined based on the second reference PUSCH, where the fourth reference time is earlier than the second PUSCH, and there is an interval of first PUSCH preparation duration between the fourth reference time and the 1^{st} symbol of the second PUSCH; and/or if the fourth PUSCH is not in a slot in which the second transmission occasion is located, the fourth PHR is determined based on the second reference PUSCH.

It should be noted that, in this application, the fourth reference time may be understood as being earlier than the 1^{st} symbol of the second PUSCH by the first PUSCH preparation duration. The first PUSCH preparation duration may be T_{proc,2}. For details, refer to a related 3GPP technical specification. Details are not described.

Case 12: The fourth PHR is determined based on the second reference PUSCH. For example, the second PUSCH is a PUSCH with configured grant, and the fourth PUSCH is a PUSCH with configured grant.

In this case, if third reference time is later than fourth reference time, the fourth PHR is determined based on the second reference PUSCH, where the third reference time is earlier than the fourth PUSCH, and there is an interval of second PUSCH preparation duration between the third reference time and the 1^{st} symbol of the fourth PUSCH; and the fourth reference time is earlier than the second PUSCH, and there is an interval of first PUSCH preparation duration between the fourth reference time and the 1^{st} symbol of the second PUSCH; and/or if the fourth PUSCH is not in a slot in which the second transmission occasion is located, the fourth PHR is determined based on the second reference PUSCH.

It should be noted that, in this application, for the third reference time, refer to the descriptions in Case 10, and for the fourth reference time, refer to the descriptions in Case 11. The first PUSCH preparation duration may be the same as or different from the second PUSCH preparation duration. This is not limited in this application.

It should be understood that, if the first PUSCH preparation duration is the same as the second PUSCH preparation duration, that the third reference time is later than the fourth reference time may be replaced with that the 1^{st} symbol of the fourth PUSCH is later than the 1^{st} symbol of the second PUSCH.

Case 13: The fourth PHR is determined based on the fourth PUSCH. For example, the second PUSCH is a PUSCH with dynamic grant, and the fourth PUSCH is a PUSCH with dynamic grant.

In this case, the fourth PHR is determined based on a fourth parameter corresponding to a fourth transmission occasion of the fourth PUSCH. The fourth PUSCH belongs to a PUSCH scheduled by using fourth DCI. The last symbol of a PDCCH monitoring occasion on which the fourth DCI is located is not later than the last symbol of a PDCCH monitoring occasion on which second DCI is located. A slot in which the second transmission occasion is located includes the fourth transmission occasion. The fourth parameter is used to determine a transmit power of the fourth PUSCH on the fourth transmission occasion.

It should be noted that, that the last symbol of the PDCCH monitoring occasion on which the fourth DCI is located is not later than the last symbol of the PDCCH monitoring occasion on which the second DCI is located may include the following possible implementations.

Possible implementation 13-1: The last symbol of the PDCCH monitoring occasion on which the fourth DCI is located is earlier than the last symbol of the PDCCH monitoring occasion on which the second DCI is located.

Possible implementation 13-2: The last symbol of the PDCCH monitoring occasion on which the fourth DCI is located and the last symbol of the PDCCH monitoring occasion on which the second DCI is located are a same symbol.

Using a box in which a letter d in FIG. 10 is located as an example, the fourth PHR includes PH_{U}. PH_{U} is an actual PH. For details, refer to the descriptions of formula (1). The fourth transmission occasion includes a fourth time unit, and the fourth time unit may include one U slot. The fourth time unit belongs to a non-SBFD time unit.

The fourth parameter may include parameters involved in formula (1), for example, an index of a PUSCH transmission occasion, an index of an active uplink BWP, a carrier index, a serving cell index, and a maximum transmit power of the terminal device.

Using a box in which a letter d in FIG. 10 is located as an example, the fourth PUSCH is shown in a thick solid line box. The last symbol of the PDCCH monitoring occasion on which the fourth DCI is located is not later than the last symbol (that is, a time line 2) of the PDCCH monitoring occasion on which the second DCI is located. In addition, the fourth PUSCH is in the slot in which the second transmission occasion is located, that is, the U slot includes the fourth PUSCH. In this case, the fourth PHR is determined based on the fourth PUSCH, that is, the fourth PHR is an actual PH.

Case 14: The fourth PHR is determined based on the fourth PUSCH. For example, the second PUSCH is a PUSCH with dynamic grant, and the fourth PUSCH is a PUSCH with configured grant.

In this case, the fourth PHR is determined based on a fourth parameter corresponding to a fourth transmission occasion of the fourth PUSCH. Third reference time is not later than the last symbol of a PDCCH monitoring occasion on which second DCI is located, the third reference time is earlier than the fourth PUSCH, and there is an interval of second PUSCH preparation duration between the third reference time and the 1^{st} symbol of the fourth PUSCH. A slot in which the second transmission occasion is located includes the fourth transmission occasion. The fourth parameter is used to determine a transmit power of the fourth PUSCH on the fourth transmission occasion.

It should be noted that, that the third reference time is not later than the last symbol of the PDCCH monitoring occasion on which the second DCI is located may include the following possible implementations.

Possible implementation 14-1: The third reference time is earlier than the 1^{st} symbol of the PDCCH monitoring occasion on which the second DCI is located.

Possible implementation 14-2: The third reference time is included in the PDCCH monitoring occasion on which the second DCI is located.

For the third reference time, refer to the descriptions in Case 10. Details are not described again.

For the fourth parameter, refer to the descriptions in Case 13. Details are not described again.

Case 15: The fourth PHR is determined based on the fourth PUSCH. For example, the second PUSCH is a PUSCH with configured grant, and the fourth PUSCH is a PUSCH with dynamic grant.

In this case, the fourth PHR is determined based on a fourth parameter corresponding to a fourth transmission occasion of the fourth PUSCH.

The fourth PUSCH belongs to a PUSCH scheduled by using fourth DCI. The last symbol of a PDCCH monitoring occasion on which the fourth DCI is located is not later than fourth reference time, the fourth reference time is earlier than the second PUSCH, and there is an interval of first PUSCH preparation duration between the fourth reference time and the 1^{st} symbol of the second PUSCH. A slot in which the second transmission occasion is located includes the fourth transmission occasion. The fourth parameter is used to determine a transmit power of the fourth PUSCH on the fourth transmission occasion.

For the fourth reference time, refer to the descriptions in Case 11. Details are not described again.

For the fourth parameter, refer to the descriptions in Case 13. Details are not described again.

Case 16: The fourth PHR is determined based on the fourth PUSCH. For example, the second PUSCH is a PUSCH with configured grant, and the fourth PUSCH is a PUSCH with configured grant.

In this case, the fourth PHR is determined based on a fourth parameter corresponding to a fourth transmission occasion of the fourth PUSCH. Third reference time is not later than fourth reference time. The third reference time is earlier than the fourth PUSCH, and there is an interval of second PUSCH preparation duration between the third reference time and the 1^{st} symbol of the fourth PUSCH. The fourth reference time is earlier than the second PUSCH, and there is an interval of first PUSCH preparation duration between the fourth reference time and the 1^{st} symbol of the second PUSCH. A slot in which the second transmission occasion is located includes the fourth transmission occasion. The fourth parameter is used to determine a transmit power of the fourth PUSCH on the fourth transmission occasion.

For the third reference time and the fourth reference time, refer to the descriptions in Case 12.

For the fourth parameter, refer to the descriptions in Case 13. Details are not described again.

It should be noted that, in this application, that the fourth transmission occasion includes the fourth time unit means that the fourth transmission occasion includes only the fourth time unit. For example, the fourth time unit may include one or more symbols or one or more slots. Using a box in which a letter "d" in FIG. 10 is located as an example, if the fourth transmission occasion of the fourth PUSCH includes one U slot, the fourth time unit is the U slot.

It should be noted that, in this application, the fourth PUSCH may include one or more transmission occasions, and each transmission occasion includes one or more symbols or one or more slots. In this application, if the slot in which the second transmission occasion is located includes at least one transmission occasion of the fourth PUSCH, the fourth transmission occasion is the 1^{st} transmission occasion in the at least one transmission occasion of the fourth PUSCH.

It should be noted that, in this application, the fourth PUSCH is indicated by the second network device.

For example, the second network device sends fourth indication information to the terminal device. Correspondingly, the terminal device receives the fourth indication information from the second network device. The fourth indication information indicates the terminal device to send the fourth PUSCH.

Optionally, if the fourth PUSCH is a PUSCH with type 1 configured grant (PUSCH with Type 1 configured grant), the fourth indication information is carried in a higher-layer message (for example, an RRC message).

Optionally, if the fourth PUSCH is a PUSCH with type 2 configured grant (PUSCH with Type 2 configured grant), the fourth indication information is DCI, and before the second network device sends the fourth indication information to the terminal device, the second network device further sends a higher-layer message (for example, an RRC message) to the terminal device. The RRC message is used to configure the fourth PUSCH for the terminal device.

Optionally, if the fourth PUSCH is a PUSCH with dynamic grant (PUSCH with dynamic grant), the fourth indication information is DCI.

In some embodiments, the second information further includes information about a time unit type to which the fourth time unit belongs. The time unit type to which the fourth time unit belongs may be the first type of time unit, or may be the second type of time unit.

For example, if the fourth time unit is an SBFD time unit, the time unit type to which the fourth time unit belongs is an SBFD time unit.

For another example, if the fourth time unit is a non-SBFD time unit, the time unit type to which the fourth time unit belongs is a non-SBFD time unit.

Using FIG. 11 as an example, the second information is included in a PHR MAC CE. In the PHR MAC CE shown in FIG. 11, a T field (for example, the 8^{th} bit in a byte 4) indicates information about a time unit type to which the second time unit belongs, and another T field (for example, the 8^{th} bit in a byte 7) indicates the information about the time unit type to which the fourth time unit belongs.

It should be noted that, in this application, each byte includes eight bits. The rightmost bit is the least significant bit, and the leftmost bit is the most significant bit. The 1^{st} bit in each byte is the least significant bit, that is, the rightmost bit. The 8^{th} bit in each byte is the most significant bit, that is, the leftmost bit.

It should be noted that the time unit type to which the fourth time unit belongs may be the same as or different from the time unit type to which the second time unit belongs. This is not limited in this application.

The following describes S901b by using a PHY layer and a MAC layer in a communication protocol layer as an example.

Operations performed by the PHY layer and the first MAC entity of the MAC layer include:
Step d1: The PHY layer provides the first MAC entity with the second PHR and the fourth PHR. Correspondingly, the first MAC entity obtains the second PHR and the fourth PHR from the PHY layer.

For the second PHR and the fourth PHR, refer to the descriptions in the foregoing paragraphs. Details are not described again.

Step d2 (optional): The PHY layer provides the first MAC entity with the information about the time unit type to which the second time unit belongs and the information about the time unit type to which the fourth time unit belongs. Correspondingly, the first MAC entity obtains the information about the time unit type to which the second time unit belongs and the information about the time unit type to which the fourth time unit belongs from the PHY layer.

For the information about the time unit type to which the second time unit belongs and the information about the time unit type to which the fourth time unit belongs, refer to the descriptions in the foregoing paragraphs. Details are not described again.

For example, if the second time unit is a non-SBFD time unit, the information about the time unit type to which the second time unit belongs is "0". If the second time unit is an SBFD time unit, the information about the time unit type to which the second time unit belongs is "1".

Alternatively, on the contrary, if the second time unit is a non-SBFD time unit, the information about the time unit type to which the second time unit belongs is "1". If the second time unit is an SBFD time unit, the information about the time unit type to which the second time unit belongs is "0".

For another example, if the fourth time unit is a non-SBFD time unit, the information about the time unit type to which the fourth time unit belongs is "0". If the fourth time unit is an SBFD time unit, the information about the time unit type to which the fourth time unit belongs is "1".

Alternatively, on the contrary, if the fourth time unit is a non-SBFD time unit, the information about the time unit type to which the fourth time unit belongs is "1". If the fourth time unit is an SBFD time unit, the information about the time unit type to which the fourth time unit belongs is "0".

It should be noted that, if the fourth PHR is determined based on the fourth PUSCH, the first MAC entity obtains the "information about the time unit type to which the fourth time unit belongs". If the fourth PHR is determined based on the second reference PUSCH, the first MAC entity does not obtain the "information about the time unit type to which the fourth time unit belongs".

Step d3 (optional): The PHY layer provides the first MAC entity with second power information. Correspondingly, the first MAC entity obtains the second power information from the PHY layer.

For the second power information, refer to the descriptions of the scenario in which multiplePHR is false (that is, the communication method 600). Details are not described again.

It should be noted that, in the scenario in which multiplePHR is false, the second power information may be understood as a maximum transmit power of the second PUSCH on the second transmission occasion. In a scenario in which multiplePHR is true, the second power information may be understood as a maximum transmit power on the second transmission occasion.

For the first MAC entity, after obtaining the second PHR, the fourth PHR, the information about the time unit type to which the second time unit belongs, the information about the time unit type to which the fourth time unit belongs (optional), and the second power information (optional), the first MAC entity performs step d4:
Step d4: The first MAC entity generates a second MAC CE based on the second PHR, the fourth PHR, the information about the time unit type to which the second time unit belongs, the information about the time unit type to which the fourth time unit belongs (optional), and the second power information (optional).
Step d5: The first MAC entity sends the second MAC CE to the PHY layer. Correspondingly, the PHY layer receives the second MAC CE from the first MAC entity.

The second MAC CE includes the second information.

For the terminal device, after determining the first information, the terminal device performs S902, and after determining the second information, the terminal device performs S903. S902 and S903 are described as follows:
S902: The terminal device sends the first information.

The first information is carried on the first PUSCH.

For an implementation process of S902, refer to the descriptions in S602. Details are not described again.

It should be understood that, using the PHY layer of the terminal device as an example, after the PHY layer receives the first MAC CE, the PHY layer sends the first PUSCH based on the first MAC CE. The first MAC CE includes the first information. Therefore, the first information (or described as the first PHR and the third PHR) is carried on the first PUSCH.

It should be noted that, in this application, the terminal device may first perform S901b, and then perform S902. Alternatively, the terminal device may first perform S902, and then perform S901b. Alternatively, the terminal device may simultaneously perform S901b and S902. This is not limited in this application.

S903: The terminal device sends the second information.

The second information is carried on the second PUSCH.

For an implementation process of S903, refer to the descriptions in S603. Details are not described again.

It should be understood that, using the PHY layer of the terminal device as an example, after the PHY layer receives the second MAC CE, the PHY layer sends the second PUSCH based on the second MAC CE. The second MAC CE includes the second information. Therefore, the second information (or described as the second PHR and the fourth PHR) is carried on the second PUSCH.

It should be noted that, in this application, the terminal device first performs S902, and then performs S903.

S904: The terminal device cancels the triggered PHR and/or resets a first timer.

For an implementation process of S904, refer to the descriptions in S604. Details are not described again.

It should be noted that, in this application, for the first MAC entity of the terminal device, after the first MAC entity sends the second MAC CE to the PHY layer (that is, performs step d5), the first MAC entity performs the following three operations: starting or restarting phr-PeriodicTimer; starting or restarting phr-ProhibitTimer; and canceling all triggered PHRs.

Using a scenario in which multiplePHR is false as an example, the communication method in embodiments of this application includes: A terminal device updates a first time unit type after a PHR is triggered. An updated first time unit type is an SBFD time unit or a non-SBFD time unit. The terminal device determines third information based on a fifth PUSCH. The third information includes a fifth PHR, the fifth PHR is determined based on a fifth parameter corresponding to a fifth transmission occasion of the fifth PUSCH, the fifth transmission occasion includes a fifth time unit, the fifth time unit belongs to the updated first time unit type, and the fifth parameter is used to determine a transmit power of the fifth PUSCH on the fifth transmission occasion. The terminal device sends the third information. The third information is carried on the fifth PUSCH. The terminal device cancels the triggered PHR.

In this way, after the PHR is triggered once, the terminal device first updates the first time unit type, then determines first information based on the updated first time unit type, sends the first information, and cancels the triggered PHR, to complete one PHR process. Because the first information is determined based on the updated first time unit type, according to the communication method provided in this application, when the terminal device performs at least two PHR processes, the terminal device reports PHRs corresponding to two time unit types, so that a reporting probability of an actual PH in the SBFD time unit is the same as or close to that of an actual PH in the non-SBFD time unit, thereby helping ensure uplink performance of the non-SBFD time unit.

The following describes in detail the communication method provided in embodiments of this application with reference to FIG. 12. The communication method 1200 provided in embodiments of this application includes the following operations.

S1201: A terminal device updates a first time unit type after a PHR is triggered.

For the terminal device and a PHR trigger event, refer to the descriptions in S601. Details are not described again.

An updated first time unit type is an SBFD time unit or a non-SBFD time unit.

It should be noted that, in this application, the first time unit type is introduced, so that a fifth PHR can be flexibly controlled to be determined and reported based on a PUSCH (or described as actual PUSCH transmission) of a specific time unit type.

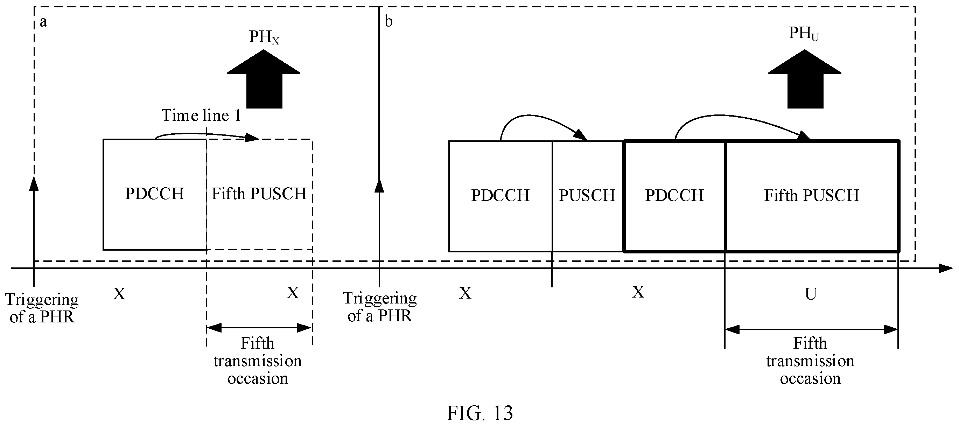

Using FIG. 13 as an example, in a box in which a letter "a" is located, after the PHR is triggered for the first time, if the updated first time unit type is an SBFD time unit, for example, an X slot, the terminal device reports the PHR, and the reported PHR is associated with the SBFD time unit type. For example, the reported PHR in FIG. 13 is denoted as PH_{X}.

Using FIG. 13 as an example, in a box in which a letter "b" is located, after the PHR is triggered for the second time, if the updated first time unit type is a non-SBFD time unit, for example, a U slot, the terminal device reports the PHR, and the reported PHR is associated with the non-SBFD time unit type. For example, the reported PHR in FIG. 13 is denoted as a PH_{U}. After the PHR is triggered for the second time, even if there is an uplink resource in an SBFD time unit, for example, there is a PUSCH in the 4^{th} X slot, the terminal device does not report the PHR through the PUSCH (that is, the PUSCH in the 4^{th} X slot).

The following describes an implementation process of S1201.

For example, after the PHR is triggered, the terminal device determines that the first time unit type is an SBFD time unit or a non-SBFD time unit. It may be understood that this manner is not affected by a protocol, and the terminal device determines to report a PHR associated with a specific type of time unit.

For another example, the terminal device updates the first time unit type based on at least one of a value of a first counter, a first pattern (pattern), or a first result.

The first pattern includes at least one time unit, and the at least one time unit includes the SBFD time unit and/or the non-SBFD time unit. For details, refer to descriptions of Manner 3.

The first result is a time unit type after the last update of the first time unit type, and the time unit type is an SBFD time unit or a non-SBFD time unit. For details, refer to descriptions of Manner 1.

The following describes the updating of the first time unit type in four manners (Manner 1 to Manner 4).

Manner 1: The terminal device updates the first time unit type based on the first result.

The first result is the time unit type after the last update of the first time unit type, and the time unit type corresponding to the first result is the SBFD time unit or the non-SBFD time unit.

For example, if the time unit type corresponding to the first result is the SBFD time unit, the updated first time unit type is the non-SBFD time unit.

For another example, if the time unit type corresponding to the first result is the non-SBFD time unit, the updated first time unit type is the SBFD time unit.

Manner 1 may be understood as follows: The terminal device alternately reports PHRs associated with two time unit types, to reduce processing complexity on the terminal device side.

Optionally, in Manner 1, after the MAC reset, the first time unit type is initialized, and the first time unit type is the SBFD time unit or the non-SBFD time unit by default.

Manner 2: The terminal device updates the first time unit type based on the value of the first counter.

For example, when the value of the first counter is equal to a first threshold, if the first time unit type before the update is the SBFD time unit, the updated first time unit type is the non-SBFD time unit. Alternatively, on the contrary, if the first time unit type before the update is the non-SBFD time unit, the updated first time unit type is the SBFD time unit.

For another example, when the value of the first counter is not equal to the first threshold, the first time unit type is updated to a same time unit type. In other words, if the first time unit type before the update is the SBFD time unit, the updated first time unit type is still the SBFD time unit. Alternatively, on the contrary, if the first time unit type before the update is the non-SBFD time unit, the updated first time unit type is still the non-SBFD time unit. It may be understood that, when the value of the first counter is not equal to the first threshold, the first time unit type does not change.

In Manner 2, the terminal device further updates the value of the first counter.

For example, when the value of the first counter is not equal to the first threshold, updating the value of the first counter may be understood as: increasing the value of the first counter by 1. For example, after the PHR is triggered and before third information is determined, the terminal device increases the value of the first counter by 1. Alternatively, after determining the third information, the terminal device increases the value of the first counter by 1.

For another example, when the value of the first counter is equal to the first threshold, updating the value of the first counter may be understood as: resetting the first counter. For example, after the PHR is triggered and before third information is determined, the terminal device resets the first counter. Alternatively, after determining the third information, the terminal device resets the first counter.

For another example, after the MAC reset, the first counter is reset.

To describe the first counter more clearly, the following provides two possible examples, which should not be construed as a limitation on this application.

In Manner 2, a first possible example is as follows:
Step 1: After the PHR is triggered, the terminal device performs the following operations:
   if the value of the first counter is equal to the first threshold, updating the first time unit type, and resetting the first counter; or
   if the value of the first counter is not equal to the first threshold, skipping updating the first time unit type, and skipping resetting the first counter.
Step 2: The terminal device determines the third information based on the first time unit type (for example, the updated first time unit type or the first time unit type before the update) determined in step 1.
Step 3: The terminal device performs the following three operations: sending the third information; canceling the triggered PHR; and increasing the value of the first counter by 1. In step 3, an execution sequence of the three operations performed by the terminal device is not limited in a time sequence.

In other words, the terminal device first updates the first time unit type based on the value of the first counter, and then updates the value of the first counter.

In Manner 2, a second possible example is as follows:
Step 1: After the PHR is triggered, the terminal device increases the value of the first counter by 1; and
   if an updated value of the first counter is equal to the first threshold, updates the first time unit type, and resets the first counter; or
   if the updated value of the first counter is not equal to the first threshold, skips updating the first time unit type, and skips resetting the first counter.
Step 2: The terminal device determines the third information based on the first time unit type (for example, the updated first time unit type or the first time unit type before the update) determined in step 1.
Step 3: The terminal device performs the following two operations: sending the third information; and canceling the triggered PHR. In step 3, an execution sequence of the two operations performed by the terminal device is not limited in a time sequence.

In other words, the terminal device first updates the value of the first counter, and then updates the first time unit type based on the updated value of the first counter.

Optionally, in Manner 2, the first threshold is a positive integer, for example, 2, 4, 6, or 8.

Optionally, in Manner 2, a manner of configuring the first threshold is as follows:
The first threshold is predefined. Alternatively, the first threshold is a parameter configured by a first network device, and the first network device is a network device corresponding to the fifth PUSCH. For example, the first network device configures the first threshold for the terminal device by using RRC signaling.

Manner 3: The terminal device updates the first time unit type based on the first pattern.

The first pattern includes at least one time unit, and the at least one time unit in the first pattern may include the SBFD time unit and/or the non-SBFD time unit.

For example, the first pattern includes: {SBFD, SBFD, non-SBFD, non-SBFD}. It may be understood that, in the first pattern, the 1^{st} time unit type is an SBFD time unit, the 2^{nd} time unit type is an SBFD time unit, the 3^{rd} time unit type is a non-SBFD time unit, and the 4^{th} time unit type is a non-SBFD time unit.

Using the first pattern including {SBFD, SBFD, non-SBFD, non-SBFD} as an example, from the 1^{st} time of PHR reporting to the 8^{th} time of PHR reporting, for each time of PHR reporting, the updated first time unit type is sequentially: SBFD, SBFD, non-SBFD, non-SBFD, SBFD, SBFD, non-SBFD, non-SBFD. It may be understood that, during the 1^{st}/2^{nd}/5^{th}/6^{th} time of PHR reporting, the terminal device determines that the updated first time unit type is an SBFD time unit type, and reports a PHR associated with the SBFD time unit type. During the 3^{rd}/4^{th}/7^{th}/8^{th} time of PHR reporting, the terminal device determines that the updated first time unit type is a non-SBFD time unit type, and reports a PHR associated with the non-SBFD time unit type.

Optionally, in Manner 3, after the MAC reset, the first time unit type is traversed starting from the 1^{st} time unit type in the first pattern. For example, still using the first pattern including {SBFD, SBFD, non-SBFD, non-SBFD} as an example, after the MAC reset, from the 1^{st} time of PHR reporting to the 4^{th} time of PHR reporting, for each time of PHR reporting, the updated first time unit type is sequentially: SBFD, SBFD, non-SBFD, non-SBFD. It may be understood that, during the 1^{st}/2^{nd} time of PHR reporting, the terminal device determines that the updated first time unit type is an SBFD time unit type, and reports a PHR associated with the SBFD time unit type. During the 3^{rd}/4^{th} time of PHR reporting, the terminal device determines that the updated first time unit type is a non-SBFD time unit type, and reports a PHR associated with the non-SBFD time unit type.

Optionally, in Manner 3, after the MAC reset, the first time unit type is traversed starting from an n^{th} time unit type (or a time unit type whose index is n) in the first pattern. The parameter n is predefined, or the parameter n is a parameter configured by the first network device. For example, a value of the parameter n is configured for the terminal device by using RRC signaling.

Corresponding to the n^{th} time unit type, the value of the parameter n is as follows: n=1, 2, ..., N. N is a quantity of time units included in the first pattern, for example, N=2, 4, 8.

Corresponding to the time unit type whose index is n, the value of the parameter n is as follows: n=0, 1, 2, ..., N-1. N is a quantity of time units included in the first pattern, for example, N=2, 4, 8.

For example, still using the first pattern including {SBFD, SBFD, non-SBFD, non-SBFD} as an example, N=4. After the MAC reset, the traversal starts from the 3^{rd} (that is, n=3) time unit type in the first pattern. It may be understood that, after the MAC reset, during the 1^{st}/2^{nd} time of PHR reporting, the terminal device determines that the updated first time unit type is a non-SBFD time unit type, and reports a PHR associated with the non-SBFD time unit type. After the MAC reset, during the 3^{rd}/4^{th} time of PHR reporting, the terminal device determines that the updated first time unit type is an SBFD time unit type, and reports a PHR associated with the SBFD time unit type.

Manner 4: The terminal device updates the first time unit type based on the value of the first counter and the first pattern.

In Manner 4, the first threshold is equal to the quantity of time units included in the first pattern. For example, still using the first pattern including {SBFD, SBFD, non-SBFD, non-SBFD} as an example, if the first pattern includes four time units, the first threshold is equal to 4.

In Manner 4, the terminal device further updates the value of the first counter.

For example, when the value of the first counter is not equal to the first threshold, updating the value of the first counter may be understood as: increasing the value of the first counter by 1. For details, refer to the descriptions in Manner 2. Details are not described again.

For another example, when the value of the first counter is equal to the first threshold, updating the value of the first counter may be understood as: resetting the first counter. For details, refer to the descriptions in Manner 2. Details are not described again.

Optionally, in Manner 4, that the terminal device updates the first time unit type based on the value of the first counter and the first pattern may include: The terminal device determines an index based on the value of the first counter, and updates the first time unit type based on a time unit type corresponding to the index.

For example, still using the first pattern including {SBFD, SBFD, non-SBFD, non-SBFD} as an example, a time unit type corresponding to an index "0" is an SBFD time unit, a time unit type corresponding to an index "1" is an SBFD time unit, a time unit type corresponding to an index "2" is a non-SBFD time unit, and a time unit type corresponding to an index "3" is a non-SBFD time unit. In this case, if the index determined by the terminal device based on the value of the first counter is "0" or "1", the updated first time unit type is the SBFD time unit. If the index determined by the terminal device based on the value of the first counter is "2" or "3", the updated first time unit type is the non-SBFD time unit.

It should be noted that, for the terminal device, S1201 may be performed by a first MAC entity of the terminal device.

For the terminal device, after updating the first time unit type, the terminal device performs S1202:

S1202: The terminal device determines the third information based on the fifth PUSCH.

The third information is described as follows:
The third information includes a fifth PHR, the fifth PHR is determined based on a fifth parameter corresponding to a fifth transmission occasion of the fifth PUSCH, the fifth transmission occasion includes a fifth time unit, the fifth time unit belongs to the updated first time unit type, and the fifth parameter is used to determine a transmit power of the fifth PUSCH on the fifth transmission occasion.

Using FIG. 13 as an example, in a box in which a letter "a" is located, the fifth PHR may include PH_{X}. PH_{X} is an actual PH. For details, refer to the descriptions of formula (1). The fifth PUSCH is shown in a dashed box. The fifth time unit may include one or more symbols in one X slot. A time unit type to which the fifth time unit belongs is an SBFD time unit.

Using FIG. 13 as an example, in a box in which a letter "b" is located, the fifth PHR may include PH_{U}. PH_{U} is an actual PH. For details, refer to the descriptions of formula (1). The fifth PUSCH is shown in a thick solid line box. The fifth time unit may include one U slot. A time unit type to which the fifth time unit belongs is a non-SBFD time unit.

The fifth parameter may include parameters involved in formula (1), for example, an index of a PUSCH transmission occasion, an index of an active uplink BWP, a carrier index, a serving cell index, and a maximum transmit power of the terminal device.

It should be noted that, in this application, that the fifth transmission occasion includes the fifth time unit means that the fifth transmission occasion includes only the fifth time unit. For example, the fifth time unit may include one or more symbols or one or more slots.

Using FIG. 13 as an example, in a box in which a letter "a" is located, if the fifth PUSCH is a PUSCH shown in a dashed box, the fifth time unit includes one or more symbols in one X slot.

Using FIG. 13 as an example, in a box in which a letter "b" is located, if the fifth PUSCH is a PUSCH shown in a thick solid line box, the fifth time unit includes one U slot.

It should be noted that, in this application, the fifth PUSCH may include one or more transmission occasions, and each transmission occasion includes one or more symbols or one or more slots. In this application, the fifth transmission occasion is the 1^{st} transmission occasion of the fifth PUSCH.

It should be noted that, in this application, the fifth PUSCH is indicated by the first network device.

For example, the first network device sends fifth indication information to the terminal device. Correspondingly, the terminal device receives the fifth indication information from the first network device. The fifth indication information indicates the terminal device to send the fifth PUSCH.

Optionally, if the fifth PUSCH is a PUSCH with type 1 configured grant (PUSCH with Type 1 configured grant), the fifth indication information is carried in a higher-layer message (for example, an RRC message).

Optionally, if the fifth PUSCH is a PUSCH with type 2 configured grant (PUSCH with Type 2 configured grant), the fifth indication information is DCI, and before the first network device sends the fifth indication information to the terminal device, the first network device further sends a higher-layer message (for example, an RRC message) to the terminal device. The RRC message is used to configure the fifth PUSCH for the terminal device.

Optionally, if the fifth PUSCH is a PUSCH with dynamic grant (PUSCH with dynamic grant), the fifth indication information is DCI.

Optionally, the fifth PUSCH and a condition that the fifth PUSCH satisfies are described as follows:
A case in which the fifth PUSCH is a PUSCH with dynamic grant is as follows:
The fifth PUSCH belongs to a PUSCH scheduled by using fifth DCI. The fifth DCI is the 1^{st} piece of DCI that satisfies a fifth condition after the PHR is triggered.
The fifth condition includes at least one of the following:
   Condition E1: The fifth DCI is DCI used to schedule a transport block for initial transmission after the PHR is triggered. The transport block scheduled by using the fifth DCI includes a third transport block, and the third transport block includes the third information.
   In this application, initial transmission refers to first transmission instead of retransmission.
   For the condition E1, refer to the descriptions of the condition A1. Details are not described again.
   Condition E2: The PUSCH scheduled by using the fifth DCI can accommodate (accommodate) the third information.
   That the PUSCH scheduled by using the fifth DCI can accommodate the third information may be understood as that a time-frequency resource of the PUSCH scheduled by using the fifth DCI is sufficient for transmitting the third information.

It should be noted that the fifth condition includes the condition E1 and/or the condition E2. That the fifth DCI is the 1^{st} piece of DCI that satisfies the fifth condition after the PHR is triggered may be understood as that the fifth DCI is the 1^{st} piece of DCI that satisfies the condition E1 and/or the condition E2 after the PHR is triggered.

A case in which the fifth PUSCH is a PUSCH with configured grant is as follows:

The fifth PUSCH is the 1^{st} PUSCH that satisfies a sixth condition after the PHR is triggered.

The sixth condition includes at least one of the following:
Condition F1: Third duration corresponding to the fifth PUSCH is greater than or equal to first PUSCH preparation duration. The third duration is a time interval between triggering of the PHR and the 1^{st} symbol of the fifth PUSCH. The first PUSCH preparation duration may be denoted as T_{proc,2}. For details, refer to a related 3GPP technical specification. Details are not described.
Condition F2: The fifth PUSCH can accommodate the third information.
For the condition F2, refer to the descriptions of the condition E2. Details are not described again.

It should be noted that the sixth condition includes the condition F1 and/or the condition F2. That the fifth PUSCH is the 1^{st} PUSCH that satisfies the sixth condition after the PHR is triggered may be understood as that the fifth PUSCH is the 1^{st} PUSCH that satisfies the condition F1 and/or the condition F2 after the PHR is triggered.

It should be noted that determining on the fifth condition or the sixth condition is performed at a PHY layer of the terminal device.

In some embodiments, the third information further includes information about the updated first time unit type, to indicate the time unit type to which the fifth time unit belongs.

For example, if the updated first time unit type is the SBFD time unit, the time unit type to which the fifth time unit belongs is the SBFD time unit.

For another example, if the updated first time unit type is the non-SBFD time unit, the time unit type to which the fifth time unit belongs is the non-SBFD time unit.

Using FIG. 8 as an example, the third information is included in a PHR MAC CE. In the PHR MAC CE shown in FIG. 8, a T field indicates the updated first time unit type. For the T field in FIG. 8, refer to the descriptions of the communication method 600. Details are not described again.

In some embodiments, the third information further includes third power information. The third power information indicates a maximum transmit power of the fifth PUSCH on the fifth transmission occasion. For example, the maximum transmit power indicated by the third power information is *P*_{*CMAX*,f,c}(i). For details, refer to the descriptions in the term explanation part. Details are not described again.

The following describes S1202 by using a PHY layer and a MAC layer in a communication protocol layer as an example.

The first network device further configures a first MAC entity for the terminal device.

When the PHR is triggered or has been triggered and has not been canceled, the first MAC entity determines whether there is an uplink resource in the first time unit type, and if yes, performs a PHR process, or otherwise, does not perform a PHR process, but continues to wait for an uplink resource in the first time unit type. If the fifth PUSCH is the 1^{st} uplink resource used for initial transmission in the first time unit type after the PHR is triggered, the first MAC entity performs the PHR process.

Operations performed by the PHY layer and the first MAC entity of the MAC layer include:
Step e1: The PHY layer provides the first MAC entity with the fifth PHR. Correspondingly, the first MAC entity obtains the fifth PHR from the PHY layer.

For the fifth PHR, refer to the descriptions in the foregoing paragraphs. Details are not described again.

Step e2 (optional): The PHY layer provides the first MAC entity with the information about the updated first time unit type. Correspondingly, the first MAC entity obtains the information about the updated first time unit type from the PHY layer.

For the information about the updated first time unit type, refer to the descriptions in the foregoing paragraphs. Details are not described again.

For example, if the updated first time unit type is the non-SBFD time unit, the information about the updated first time unit type is "0". If the updated first time unit type is the SBFD time unit, the information about the updated first time unit type is "1".

Alternatively, on the contrary, if the updated first time unit type is the non-SBFD time unit, the information about the updated first time unit type is "1". If the updated first time unit type is the SBFD time unit, the information about the updated first time unit type is "0".

Step e3 (optional): The PHY layer provides the first MAC entity with the third power information. Correspondingly, the first MAC entity obtains the third power information from the PHY layer.

For the third power information, refer to the descriptions in the foregoing paragraphs. Details are not described again.

For the first MAC entity, after obtaining the fifth PHR, the information about the updated first time unit type (optional), and the third power information (optional), the first MAC entity performs step e4:
Step e4: The first MAC entity generates a third MAC CE based on the fifth PHR, the information about the updated first time unit type (optional), and the third power information (optional).
Step e5: The first MAC entity sends the third MAC CE to the PHY layer. Correspondingly, the PHY layer receives the third MAC CE from the first MAC entity.

The third MAC CE includes the third information.

For the terminal device, after determining the third information, the terminal device performs S1203:
S1203: The terminal device sends the third information.

The third information is carried on the fifth PUSCH.

For example, the terminal device sends the third information to the first network device. Correspondingly, the first network device receives the third information from the terminal device, as shown in FIG. 12.

For example, the terminal device sends the third information on the fifth transmission occasion of the fifth PUSCH, as shown in FIG. 13.

For another example, the terminal device sends the third information on another transmission occasion of the fifth PUSCH, which is not shown in FIG. 13.

It should be understood that, using the PHY layer of the terminal device as an example, after the PHY layer receives the third MAC CE, the PHY layer sends the fifth PUSCH based on the third MAC CE. The third MAC CE includes the third information. Therefore, the third information (or the fifth PHR) is carried on the fifth PUSCH.

S1204: The terminal device cancels the triggered PHR and/or resets a first timer.

It should be understood that, after S1204 is performed, another triggered PHR is also canceled. It may be understood that all triggered PHRs during the period from triggering of the PHR in S1201 to generation of the PHR MAC CE (that is, the PHR MAC CE including the third information) are canceled.

The first timer may include phr-PeriodicTimer and/or phr-ProhibitTimer. For example, the terminal device resets phr-PeriodicTimer and phr-ProhibitTimer. For phr-PeriodicTimer and phr-ProhibitTimer, refer to the descriptions in the term explanation part. Details are not described again.

It should be noted that, in this application, for the first MAC entity of the terminal device, after the first MAC entity sends the third MAC CE to the PHY layer (that is, performs step e5), the first MAC entity performs the following three operations: starting or restarting phr-PeriodicTimer; starting or restarting phr-ProhibitTimer; and canceling all triggered PHRs.

It should be noted that an execution sequence of S1201 to S1204 in a time sequence is described as follows:
The terminal device first performs S1201, then performs S1202, and next performs S1203 and S1204. An execution sequence of S1203 and S1204 is not limited. Specifically, the terminal device may first perform S1203 and then perform S1204, or may first perform S1204 and then perform S1203, or may simultaneously perform S1203 and S1204. This is not limited in this application.

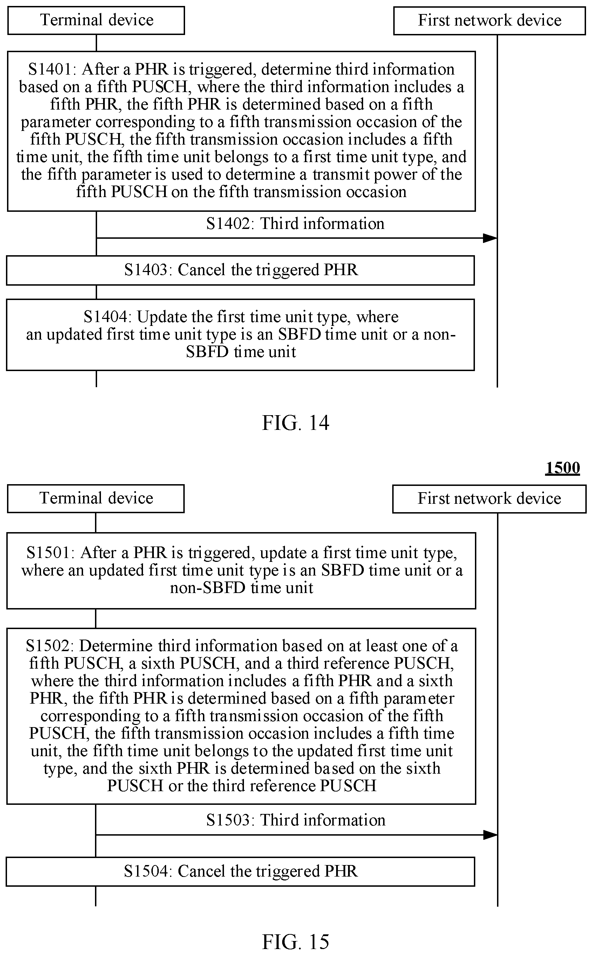

It should be added that, in a possible alternative, as shown in FIG. 14, this application further includes the following steps:
S1401: After a PHR is triggered, a terminal device determines third information based on a fifth PUSCH.

The third information includes a fifth PHR, the fifth PHR is determined based on a fifth parameter corresponding to a fifth transmission occasion of the fifth PUSCH, the fifth transmission occasion includes a fifth time unit, the fifth time unit belongs to a first time unit type, the first time unit type is an SBFD time unit or a non-SBFD time unit, and the fifth parameter is used to determine a transmit power of the fifth PUSCH on the fifth transmission occasion.

For an implementation process of S1401, refer to the descriptions in S1202. Details are not described again.

S1402: The terminal device sends the third information.

The third information is carried on the fifth PUSCH.

For an implementation process of S1402, refer to the descriptions in S1203. Details are not described again.

S1403: The terminal device cancels the triggered PHR.

For an implementation process of S1403, refer to the descriptions in S1204. Details are not described again.

S1404: The terminal device updates the first time unit type.

An updated first time unit type is an SBFD time unit or a non-SBFD time unit.

For example, if the first time unit type in S1401 is the SBFD time unit, the updated first time unit type in S1404 is the non-SBFD time unit.

For another example, if the first time unit type in S1401 is the non-SBFD time unit, the updated first time unit type in S1404 is the SBFD time unit.

For an implementation process of S1404, refer to the descriptions in S1201. Details are not described again.

It should be noted that an execution sequence of S1401 to S1404 in a time sequence is described as follows:
The terminal device first performs S1401, and then performs S1402 to S1404. An execution sequence of S1402 to S1404 is not limited. Details are as follows:
For example, the terminal device may first perform S1402 and then perform S1403, or may first perform S1403 and then perform S1402, or may simultaneously perform S1402 and S1403. This is not limited in this application.

For another example, the terminal device may first perform S1402 and then perform S1404, or may first perform S1404 and then perform S1402, or may simultaneously perform S1402 and S1404. This is not limited in this application.

For still another example, the terminal device may first perform S1403 and then perform S1404, or may first perform S1404 and then perform S1403, or may simultaneously perform S1403 and S1404. This is not limited in this application.

Using a scenario in which multiplePHR is true as an example, the communication method in embodiments of this application includes: A terminal device updates a first time unit type after a PHR is triggered. An updated first time unit type is an SBFD time unit or a non-SBFD time unit. The terminal device determines third information based on at least one of a fifth PUSCH, a sixth PUSCH, and a third reference PUSCH. The third information includes a fifth PHR and a sixth PHR, the fifth PHR is determined based on a fifth parameter corresponding to a fifth transmission occasion of the fifth PUSCH, the fifth transmission occasion includes a fifth time unit, the fifth time unit belongs to the updated first time unit type, and the fifth parameter is used to determine a transmit power of the fifth PUSCH on the fifth transmission occasion. The sixth PHR is determined based on the sixth PUSCH or the third reference PUSCH. The fifth PUSCH and the sixth PUSCH correspond to different network devices. The terminal device sends the third information. The third information is carried on the fifth PUSCH. The terminal device cancels the triggered PHR.

In this way, after the PHR is triggered once, the terminal device first updates the first time unit type, then determines first information based on the updated first time unit type, sends the first information, and cancels the triggered PHR, to complete one PHR process. Because the first information is determined based on the updated first time unit type, when the terminal device performs at least two PHR processes, the terminal device reports PHRs corresponding to two time unit types, so that a reporting probability of an actual PH in the SBFD time unit is the same as or close to that of an actual PH in the non-SBFD time unit, thereby helping ensure uplink performance of the non-SBFD time unit.

Further, the third information further includes the sixth PHR. The sixth PHR is determined based on the sixth PUSCH or the third reference PUSCH. In this way, for the scenario in which multiplePHR is true, the terminal device may also report the third information, so that a reporting probability of an actual PH in the SBFD time unit is the same as that of an actual PH in the non-SBFD time unit, thereby helping ensure uplink performance of the non-SBFD time unit.

The following describes in detail the communication method provided in embodiments of this application with reference to FIG. 15. The communication method 1500 provided in embodiments of this application includes the following operations.

S1501: A terminal device updates a first time unit type after a PHR is triggered.

An updated first time unit type is an SBFD time unit or a non-SBFD time unit.

For an implementation process of S1501, refer to the descriptions in S1201. Details are not described again.

S1502: The terminal device determines third information based on at least one of a fifth PUSCH, a sixth PUSCH, or a third reference PUSCH.

A fifth PHR of the third information is described as follows:
The fifth PHR is determined based on a fifth parameter corresponding to a fifth transmission occasion of the fifth PUSCH, the fifth transmission occasion includes a fifth time unit, the fifth time unit belongs to the updated first time unit type, and the fifth parameter is used to determine a transmit power of the fifth PUSCH on the fifth transmission occasion.

For the fifth PHR, the fifth PUSCH, the fifth transmission occasion, the fifth parameter, the fifth time unit, and the first time unit type, refer to the descriptions in S1201. Details are not described again.

It should be noted that, in S1502, the fifth PHR is determined neither based on the fifth PUSCH nor based on the third reference PUSCH.

A sixth PHR of the third information is described as follows:
The sixth PHR is determined based on the sixth PUSCH or the third reference PUSCH. The fifth PUSCH and the sixth PUSCH correspond to different network devices. The fifth PUSCH may be a PUSCH sent by the terminal device to a first network device on a first carrier (for example, CC 1). The sixth PUSCH may be a PUSCH sent by the terminal device to a second network device on a second carrier (for example, CC 2).

If the sixth PHR is determined based on the sixth PUSCH, the sixth PHR is an actual PHR. If the sixth PHR is determined based on the third reference PUSCH, the sixth PHR is a virtual PHR. The following describes eight cases (Case 17 to Case 24):

Case 17: The sixth PHR is determined based on the third reference PUSCH. For example, the fifth PUSCH is a PUSCH with dynamic grant, and the sixth PUSCH is a PUSCH with dynamic grant.

In this case, if the sixth PUSCH belongs to a PUSCH scheduled by using sixth DCI, and the last symbol of a PDCCH monitoring occasion (monitoring occasion) on which the sixth DCI is located is later than the last symbol of a PDCCH monitoring occasion on which fifth DCI is located, the sixth PHR is determined based on the third reference PUSCH; and/or if the sixth PUSCH is not in a slot in which the fifth transmission occasion is located, the sixth PHR is determined based on the third reference PUSCH.

For Case 17, refer to the descriptions in Case 1. Details are not described again.

Case 18: The sixth PHR is determined based on the third reference PUSCH. For example, the fifth PUSCH is a PUSCH with dynamic grant, and the sixth PUSCH is a PUSCH with configured grant.

In this case, if fifth reference time is later than the last symbol of a PDCCH monitoring occasion on which fifth DCI is located, the sixth PHR is determined based on the third reference PUSCH, where the fifth reference time is earlier than the sixth PUSCH, and there is an interval of second PUSCH preparation duration between the fifth reference time and the 1^{st} symbol of the sixth PUSCH; and/or if the sixth PUSCH is not in a slot in which the fifth transmission occasion is located, the sixth PHR is determined based on the third reference PUSCH.

It should be noted that, in this application, the fifth reference time may be understood as being earlier than the 1^{st} symbol of the sixth PUSCH by the second PUSCH preparation duration. The second PUSCH preparation duration may be T_{proc,2}. For details, refer to a related 3GPP technical specification. Details are not described.

Case 19: The sixth PHR is determined based on the third reference PUSCH. For example, the fifth PUSCH is a PUSCH with configured grant, and the sixth PUSCH is a PUSCH with dynamic grant.

In this case, if the sixth PUSCH belongs to a PUSCH scheduled by using sixth DCI, and the last symbol of a PDCCH monitoring occasion on which the sixth DCI is located is later than sixth reference time, the sixth PHR is determined based on the third reference PUSCH, where the sixth reference time is earlier than the fifth PUSCH, and there is an interval of first PUSCH preparation duration between the sixth reference time and the 1^{st} symbol of the fifth PUSCH; and/or if the sixth PUSCH is not in a slot in which the fifth transmission occasion is located, the sixth PHR is determined based on the third reference PUSCH.

It should be noted that, in this application, the sixth reference time may be understood as being earlier than the 1^{st} symbol of the fifth PUSCH by the first PUSCH preparation duration. The first PUSCH preparation duration may be T_{proc,2}. For details, refer to a related 3GPP technical specification. Details are not described.

Case 20: The sixth PHR is determined based on the third reference PUSCH. For example, the fifth PUSCH is a PUSCH with configured grant, and the sixth PUSCH is a PUSCH with configured grant.

In this case, if fifth reference time is later than sixth reference time, the sixth PHR is determined based on the third reference PUSCH, where the fifth reference time is earlier than the sixth PUSCH, and there is an interval of second PUSCH preparation duration between the fifth reference time and the 1^{st} symbol of the sixth PUSCH; and the sixth reference time is earlier than the fifth PUSCH, and there is an interval of first PUSCH preparation duration between the sixth reference time and the 1^{st} symbol of the fifth PUSCH; and/or if the sixth PUSCH is not in a slot in which the fifth transmission occasion is located, the sixth PHR is determined based on the third reference PUSCH.

It should be noted that, in this application, for the fifth reference time, refer to the descriptions in Case 18, and for the sixth reference time, refer to the descriptions in Case 19. The first PUSCH preparation duration may be the same as or different from the second PUSCH preparation duration. This is not limited in this application.

It should be understood that, if the first PUSCH preparation duration is the same as the second PUSCH preparation duration, that the fifth reference time is later than the sixth reference time may be replaced with that the 1^{st} symbol of the sixth PUSCH is later than the 1^{st} symbol of the fifth PUSCH.

Case 21: The sixth PHR is determined based on the sixth PUSCH. For example, the fifth PUSCH is a PUSCH with dynamic grant, and the sixth PUSCH is a PUSCH with dynamic grant.

In this case, the sixth PHR is determined based on a sixth parameter corresponding to a sixth transmission occasion of the sixth PUSCH. The sixth PUSCH belongs to a PUSCH scheduled by using sixth DCI. The last symbol of a PDCCH monitoring occasion on which the sixth DCI is located is not later than the last symbol of a PDCCH monitoring occasion on which fifth DCI is located. A slot in which the fifth transmission occasion is located includes the sixth transmission occasion. The sixth parameter is used to determine a transmit power of the sixth PUSCH on the sixth transmission occasion.

It should be noted that, that the last symbol of the PDCCH monitoring occasion on which the sixth DCI is located is not later than the last symbol of the PDCCH monitoring occasion on which the fifth DCI is located may include the following possible implementations.

Possible implementation 21-1: The last symbol of the PDCCH monitoring occasion on which the sixth DCI is located is earlier than the last symbol of the PDCCH monitoring occasion on which the fifth DCI is located.

Possible implementation 21-2: The last symbol of the PDCCH monitoring occasion on which the sixth DCI is located and the last symbol of the PDCCH monitoring occasion on which the fifth DCI is located are a same symbol.

The sixth parameter may include parameters involved in formula (1), for example, an index of a PUSCH transmission occasion, an index of an active uplink BWP, a carrier index, a serving cell index, and a maximum transmit power of the terminal device.

For Case 21, refer to the descriptions in Case 5. Details are not described again.

Case 22: The sixth PHR is determined based on the sixth PUSCH. For example, the fifth PUSCH is a PUSCH with dynamic grant, and the sixth PUSCH is a PUSCH with configured grant.

In this case, the sixth PHR is determined based on a sixth parameter corresponding to a sixth transmission occasion of the sixth PUSCH. Fifth reference time is not later than the last symbol of a PDCCH monitoring occasion on which fifth DCI is located, the fifth reference time is earlier than the sixth PUSCH, and there is an interval of second PUSCH preparation duration between the fifth reference time and the 1^{st} symbol of the sixth PUSCH. A slot in which the fifth transmission occasion is located includes the sixth transmission occasion. The sixth parameter is used to determine a transmit power of the sixth PUSCH on the sixth transmission occasion.

It should be noted that, that the fifth reference time is not later than the last symbol of the PDCCH monitoring occasion on which the fifth DCI is located may include the following possible implementations.

Possible implementation 22-1: The fifth reference time is earlier than the 1^{st} symbol of the PDCCH monitoring occasion on which the fifth DCI is located.

Possible implementation 22-2: The fifth reference time is included in the PDCCH monitoring occasion on which the fifth DCI is located.

For the fifth reference time, refer to the descriptions in Case 18. Details are not described again.

For the sixth parameter, refer to the descriptions in Case 21. Details are not described again.

Case 23: The sixth PHR is determined based on the sixth PUSCH. For example, the fifth PUSCH is a PUSCH with configured grant, and the sixth PUSCH is a PUSCH with dynamic grant.

In this case, the sixth PHR is determined based on a sixth parameter corresponding to a sixth transmission occasion of the sixth PUSCH.

The sixth PUSCH belongs to a PUSCH scheduled by using sixth DCI. The last symbol of the PDCCH monitoring occasion on which the sixth DCI is located is not later than sixth reference time, the sixth reference time is earlier than the fifth PUSCH, and there is an interval of first PUSCH preparation duration between the sixth reference time and the 1^{st} symbol of the fifth PUSCH. A slot in which the fifth transmission occasion is located includes the sixth transmission occasion. The sixth parameter is used to determine a transmit power of the sixth PUSCH on the sixth transmission occasion.

For the sixth reference time, refer to the descriptions in Case 19. Details are not described again.

For the sixth parameter, refer to the descriptions in Case 21. Details are not described again.

Case 24: The sixth PHR is determined based on the sixth PUSCH. For example, the fifth PUSCH is a PUSCH with configured grant, and the sixth PUSCH is a PUSCH with configured grant.

In this case, the sixth PHR is determined based on a sixth parameter corresponding to a sixth transmission occasion of the sixth PUSCH. Fifth reference time is not later than sixth reference time. The fifth reference time is earlier than the sixth PUSCH, and there is an interval of second PUSCH preparation duration between the fifth reference time and the 1^{st} symbol of the sixth PUSCH. The sixth reference time is earlier than the fifth PUSCH, and there is an interval of first PUSCH preparation duration between the sixth reference time and the 1^{st} symbol of the fifth PUSCH. A slot in which the fifth transmission occasion is located includes the sixth transmission occasion. The sixth parameter is used to determine a transmit power of the sixth PUSCH on the sixth transmission occasion.

For the fifth reference time and the sixth reference time, refer to the descriptions in Case 20.

For the sixth parameter, refer to the descriptions in Case 21. Details are not described again.

It should be noted that, in this application, that the sixth transmission occasion includes the sixth time unit means that the sixth transmission occasion includes only the sixth time unit. For example, the sixth time unit may include one or more symbols or one or more slots.

It should be noted that, in this application, the sixth PUSCH may include one or more transmission occasions, and each transmission occasion includes one or more symbols or one or more slots. In this application, if the slot in which the fifth transmission occasion is located includes at least one transmission occasion of the sixth PUSCH, the sixth transmission occasion is the 1^{st} transmission occasion in the at least one transmission occasion of the sixth PUSCH.

It should be noted that, in this application, the sixth PUSCH is indicated by the second network device.

For example, the second network device sends sixth indication information to the terminal device. Correspondingly, the terminal device receives the sixth indication information from the second network device. The sixth indication information indicates the terminal device to send the sixth PUSCH.

Optionally, if the sixth PUSCH is a PUSCH with type 1 configured grant (PUSCH with Type 1 configured grant), the sixth indication information is carried in a higher-layer message (for example, an RRC message).

Optionally, if the sixth PUSCH is a PUSCH with type 2 configured grant (PUSCH with Type 2 configured grant), the sixth indication information is DCI, and before the second network device sends the sixth indication information to the terminal device, the second network device further sends a higher-layer message (for example, an RRC message) to the terminal device. The RRC message is used to configure the sixth PUSCH for the terminal device.

Optionally, if the sixth PUSCH is a PUSCH with dynamic grant (PUSCH with dynamic grant), the sixth indication information is DCI.

In some embodiments, the third information further includes information about a time unit type to which the sixth time unit belongs.

For example, if the sixth time unit is an SBFD time unit, the time unit type to which the sixth time unit belongs is an SBFD time unit.

For another example, if the sixth time unit is a non-SBFD time unit, the time unit type to which the sixth time unit belongs is a non-SBFD time unit.

Using FIG. 11 as an example, the third information is included in a PHR MAC CE. In the PHR MAC CE shown in FIG. 11, a T field (for example, the 8^{th} bit in a byte 4) indicates information about a time unit type to which the fifth time unit belongs (that is, the information about the first time unit type), and another T field (for example, the 8^{th} bit in a byte 7) indicates the information about the time unit type to which the sixth time unit belongs.

It should be noted that, in this application, each byte includes eight bits. The rightmost bit is the least significant bit, and the leftmost bit is the most significant bit. The 1^{st} bit in each byte is the least significant bit, that is, the rightmost bit. The 8^{th} bit in each byte is the most significant bit, that is, the leftmost bit.

It should be noted that the time unit type to which the sixth time unit belongs may be the same as or different from the time unit type to which the fifth time unit belongs. This is not limited in this application.

The following describes S1502 by using a PHY layer and a MAC layer in a communication protocol layer as an example.

Operations performed by the PHY layer and the first MAC entity of the MAC layer include:
Step f1: The PHY layer provides the first MAC entity with the fifth PHR and the sixth PHR. Correspondingly, the first MAC entity obtains the fifth PHR and the sixth PHR from the PHY layer.

For the fifth PHR and the sixth PHR, refer to the descriptions in the foregoing paragraphs. Details are not described again.

Step f2 (optional): The PHY layer provides the first MAC entity with the information about the time unit type to which the fifth time unit belongs and the information about the time unit type to which the sixth time unit belongs. Correspondingly, the first MAC entity obtains the information about the time unit type to which the fifth time unit belongs and the information about the time unit type to which the sixth time unit belongs from the PHY layer.

For the information about the time unit type to which the fifth time unit belongs and the information about the time unit type to which the sixth time unit belongs, refer to the descriptions in the foregoing paragraphs. Details are not described again.

For example, if the fifth time unit is a non-SBFD time unit, the information about the time unit type to which the fifth time unit belongs is "0". If the fifth time unit is an SBFD time unit, the information about the time unit type to which the fifth time unit belongs is "1".

Alternatively, on the contrary, if the fifth time unit is a non-SBFD time unit, the information about the time unit type to which the fifth time unit belongs is "1". If the fifth time unit is an SBFD time unit, the information about the time unit type to which the fifth time unit belongs is "0".

For another example, if the sixth time unit is a non-SBFD time unit, the information about the time unit type to which the sixth time unit belongs is "0". If the sixth time unit is an SBFD time unit, the information about the time unit type to which the sixth time unit belongs is "1".

Alternatively, on the contrary, if the sixth time unit is a non-SBFD time unit, the information about the time unit type to which the sixth time unit belongs is "1". If the sixth time unit is an SBFD time unit, the information about the time unit type to which the sixth time unit belongs is "0".

It should be noted that, if the sixth PHR is determined based on the sixth PUSCH, the first MAC entity obtains the "information about the time unit type to which the sixth time unit belongs". If the sixth PHR is determined based on the third reference PUSCH, the first MAC entity does not obtain the "information about the time unit type to which the sixth time unit belongs".

Step f3 (optional): The PHY layer provides the first MAC entity with third power information. Correspondingly, the first MAC entity obtains the third power information from the PHY layer.

For the third power information, refer to the descriptions of the scenario in which multiplePHR is false (that is, the communication method 1200). Details are not described again.

It should be noted that, in the scenario in which multiplePHR is false, the third power information may be understood as a maximum transmit power of the fifth PUSCH on the fifth transmission occasion. In a scenario in which multiplePHR is true, the third power information may be understood as a maximum transmit power on the fifth transmission occasion.

For the first MAC entity, after obtaining the fifth PHR, the sixth PHR, the information about the time unit type to which the fifth time unit belongs, the information about the time unit type to which the sixth time unit belongs (optional), and the third power information (optional), the first MAC entity performs step f4:
Step f4: The first MAC entity generates a third MAC CE based on the fifth PHR, the sixth PHR, the information about the time unit type to which the fifth time unit belongs, the information about the time unit type to which the sixth time unit belongs (optional), and the third power information (optional).
Step f5: The first MAC entity sends the third MAC CE to the PHY layer. Correspondingly, the PHY layer receives the third MAC CE from the first MAC entity.

The third MAC CE includes the third information.

For the terminal device, after determining the third information, the terminal device performs S1503:
S1503: The terminal device sends the third information.

The third information is carried on the fifth PUSCH.

For an implementation process of S1503, refer to the descriptions in S1203. Details are not described again.

It should be understood that, using the PHY layer of the terminal device as an example, after the PHY layer receives the third MAC CE, the PHY layer sends the third PUSCH based on the third MAC CE. The third MAC CE includes the third information. Therefore, the third information (or described as the fifth PHR and the sixth PHR) is carried on the fifth PUSCH.

S1504: The terminal device cancels the triggered PHR and/or resets a first timer.

For an implementation process of S1504, refer to the descriptions in S1204. Details are not described again.

It should be noted that, in this application, for the first MAC entity of the terminal device, after the first MAC entity sends the third MAC CE to the PHY layer (that is, performs step f5), the first MAC entity performs the following three operations: starting or restarting phr-PeriodicTimer; starting or restarting phr-ProhibitTimer; and canceling all triggered PHRs.

It should be noted that an execution sequence of S1501 to S1504 in a time sequence is described as follows:
The terminal device first performs S1501, then performs S1502, and next performs S1503 and S1504. An execution sequence of S1503 and S1504 is not limited. Specifically, the terminal device may first perform S1503 and then perform S1504, or may first perform S1504 and then perform S1503, or may simultaneously perform S1503 and S1504. This is not limited in this application.

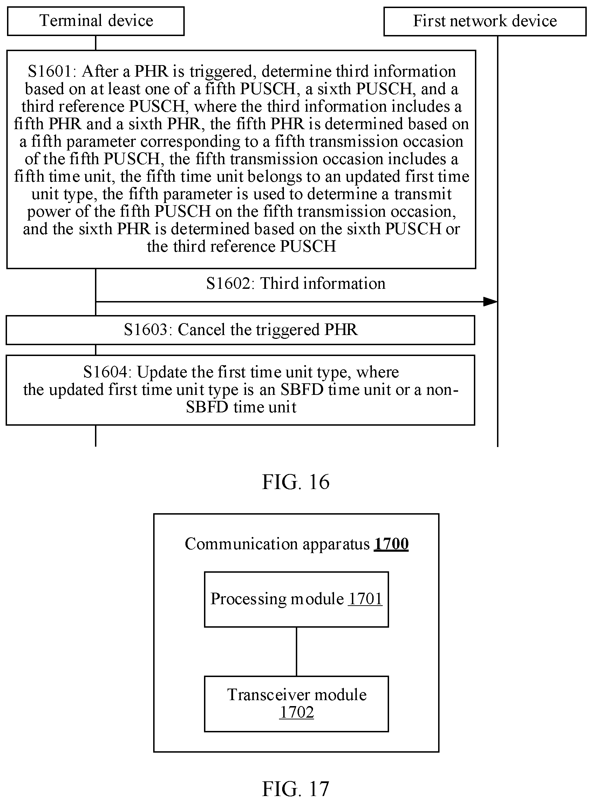

It should be added that, in a possible alternative, as shown in FIG. 16, this application further includes the following steps:
S1601: After a PHR is triggered, a terminal device determines third information based on at least one of a fifth PUSCH, a sixth PUSCH, and a third reference PUSCH.

The third information includes a fifth PHR and a sixth PHR, the fifth PHR is determined based on a fifth parameter corresponding to a fifth transmission occasion of the fifth PUSCH, the fifth transmission occasion includes a fifth time unit, the fifth time unit belongs to the updated first time unit type, and the fifth parameter is used to determine a transmit power of the fifth PUSCH on the fifth transmission occasion. The sixth PHR is determined based on the sixth PUSCH or the third reference PUSCH. The fifth PUSCH and the sixth PUSCH correspond to different network devices.

For an implementation process of S1601, refer to the descriptions in S1502. Details are not described again.

S1602: The terminal device sends the third information.

The third information is carried on the fifth PUSCH.

For an implementation process of S1602, refer to the descriptions in S1503. Details are not described again.

S1603: The terminal device cancels the triggered PHR.

For an implementation process of S1603, refer to the descriptions in S1504. Details are not described again.

S1604: The terminal device updates the first time unit type.

An updated first time unit type is an SBFD time unit or a non-SBFD time unit.

For example, if the first time unit type in S1601 is the SBFD time unit, the updated first time unit type in S1604 is the non-SBFD time unit.

For another example, if the first time unit type in S1601 is the non-SBFD time unit, the updated first time unit type in S1604 is the SBFD time unit.

For an implementation process of S1604, refer to the descriptions in S1201. Details are not described again.

It should be noted that an execution sequence of S1601 to S1604 in a time sequence is described as follows:
The terminal device first performs S1601, and then performs S1602 to S1604. An execution sequence of S1602 to S1604 is not limited. Details are as follows:
For example, the terminal device may first perform S1602 and then perform S1603, or may first perform S1603 and then perform S1602, or may simultaneously perform S1602 and S1603. This is not limited in this application.

For another example, the terminal device may first perform S1602 and then perform S1604, or may first perform S1604 and then perform S1602, or may simultaneously perform S1602 and S1604. This is not limited in this application.

For still another example, the terminal device may first perform S1603 and then perform S1604, or may first perform S1604 and then perform S1603, or may simultaneously perform S1603 and S1604. This is not limited in this application.

It should be noted that, in this application, the PUSCH is described as follows:
A first possible alternative description is as follows:
The first PUSCH may be replaced with a first actual PUSCH (actual PUSCH). In this case, that the first PHR is determined based on the first parameter corresponding to the first transmission occasion of the first PUSCH may be understood as that the first PHR is determined based on the first parameter corresponding to the first transmission occasion of the first actual PUSCH. That the first information is carried on the first PUSCH may be understood as that the first information is carried on the first actual PUSCH.

Similarly, the second PUSCH may be replaced with a second actual PUSCH (actual PUSCH). In this case, that the second PHR is determined based on the second parameter corresponding to the second transmission occasion of the second PUSCH may be understood as that the second PHR is determined based on the second parameter corresponding to the second transmission occasion of the second actual PUSCH. That the second information is carried on the second PUSCH may be understood as that the second information is carried on the second actual PUSCH.

A second possible alternative description is as follows:
The first PUSCH may be replaced with first actual PUSCH transmission. In this case, that the first PHR is determined based on the first parameter corresponding to the first transmission occasion of the first PUSCH may be understood as that the first PHR is determined based on the first parameter corresponding to the first transmission occasion of the first actual PUSCH transmission. That the first information is carried on the first PUSCH may be understood as that the first information is carried on the first actual PUSCH transmission.

Similarly, the second PUSCH may be replaced with second actual PUSCH transmission. In this case, that the second PHR is determined based on the second parameter corresponding to the second transmission occasion of the second PUSCH may be understood as that the second PHR is determined based on the second parameter corresponding to the second transmission occasion of the second actual PUSCH transmission. That the second information is carried on the second PUSCH may be understood as that the second information is carried on the second actual PUSCH transmission.

It should be noted that, in this application, resetting the first timer may be understood as starting or restarting the first timer.

It may be understood that, in the foregoing embodiments, the methods and/or steps implemented by the terminal device may be alternatively implemented by a component (for example, a processor, a chip, a chip system, a circuit, a logical module, or software) that may be used in the terminal device. The chip system may include a chip, or the chip system may include a chip and another discrete component.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

FIG. 17 is a diagram of a structure of a communication apparatus 1700. The communication apparatus 1700 includes a processing module 1701 and a transceiver module 1702. The communication apparatus 1700 may be configured to implement a function of the foregoing terminal device.

In some embodiments, the communication apparatus 1700 may further include a storage module (not shown in FIG. 17), configured to store program instructions and data.

In some embodiments, the transceiver module 1702 may also be referred to as a transceiver unit, and is configured to implement a sending function and/or a receiving function. The transceiver module 1702 may include a transceiver circuit, a transceiver machine, a transceiver, or a communication interface.

In some embodiments, the transceiver module 1702 may include a receiving module and a sending module, respectively configured to perform receiving steps and sending steps performed by the terminal device in the foregoing method embodiments, and/or configured to support other processes of the technologies described in this specification. The processing module 1701 may be configured to perform processing (for example, determining) steps performed by the terminal device in the foregoing method embodiments, and/or configured to support other processes of the technologies described in this specification.

All related content of the steps in the foregoing method embodiments may be cited in function descriptions of the corresponding functional modules. Details are not described herein again.

Optionally, in this application, that a transceiver module receives/sends information may alternatively be understood as that a processing module receives/sends the information via the transceiver module. That the processing module receives/sends the information via the transceiver module may alternatively be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 1700 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 1700 in FIG. 17 is a chip or a chip system, a function/an implementation process of the transceiver module 1702 may be implemented by an input/output interface (or a communication interface) of the chip or the chip system, and a function/an implementation process of the processing module 1701 may be implemented by a processor (or a processing circuit) of the chip or the chip system.

The communication apparatus 1700 provided in this embodiment may perform the foregoing methods. Therefore, for technical effects that can be achieved by the communication apparatus 1700, refer to the foregoing method embodiments. Details are not described herein again.

In a possible product form, the terminal device in embodiments of this application may be alternatively implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

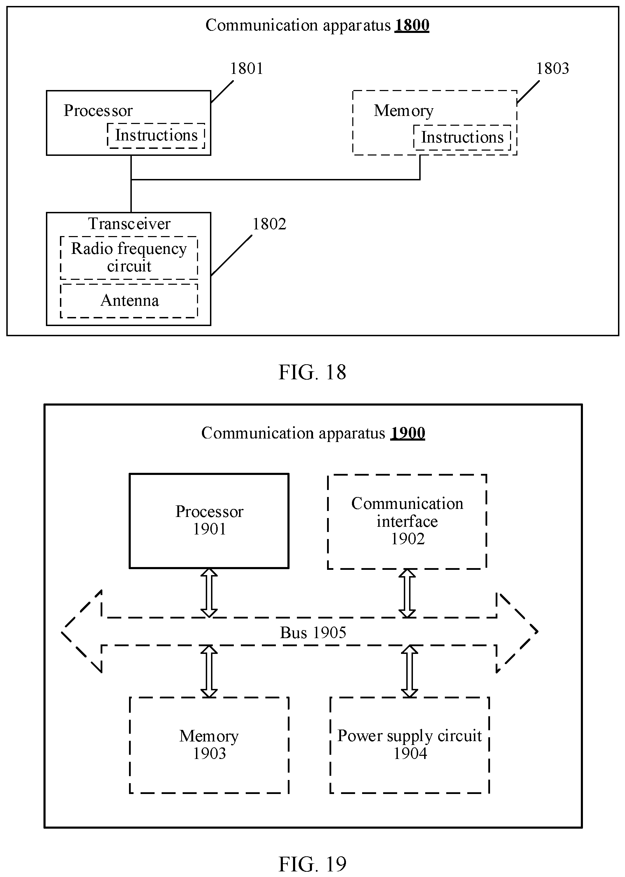

In another possible product form, the terminal device in embodiments of this application may be implemented by using a general bus architecture. For ease of description, FIG. 18 is a diagram of a structure of a communication apparatus 1800 according to an embodiment of this application. The communication apparatus 1800 includes a processor 1801 and a transceiver 1802. The communication apparatus 1800 may be a terminal device, or a chip or a module in the terminal device. FIG. 18 shows only main components of the communication apparatus 1800. In addition to the processor 1801 and the transceiver 1802, the communication apparatus 1800 may further include a memory 1803 and an input/output apparatus (not shown in the figure).

Optionally, the processor 1801 is mainly configured to process a communication protocol and communication data, and control the entire communication apparatus to execute a software program and process data of the software program. The memory 1803 is mainly configured to store the software program and the data. The transceiver 1802 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1801, the transceiver 1802, and the memory 1803 may be connected through a communication bus.

It should be noted that the memory 1803 may be independent of the processor 1801, or may be integrated with the processor 1801. The memory 1803 may be located inside the communication apparatus 1800, or may be located outside the communication apparatus 1800. This is not limited.

After the communication apparatus is powered on, the processor 1801 may read the software program in the memory 1803, interpret and execute instructions of the software program, and process the data of the software program. When data needs to be sent in a wireless manner, the processor 1801 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave via the antenna. When data is sent to the communication apparatus, the radio frequency circuit receives a radio frequency signal through the antenna, converts the radio frequency signal into a baseband signal, and outputs the baseband signal to the processor 1801; and the processor 1801 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 1700 may be in a form of the communication apparatus 1800 shown in FIG. 18.

In an example, a function/an implementation process of the processing module 1701 in FIG. 17 may be implemented by the processor 1801 in the communication apparatus 1800 shown in FIG. 18 by invoking the computer-executable instructions stored in the memory 1803. A function/an implementation process of the transceiver module 1702 in FIG. 17 may be implemented by the transceiver 1802 in the communication apparatus 1800 shown in FIG. 18.

In still another possible product form, the terminal device in this application may use a composition structure shown in FIG. 19, or include components shown in FIG. 19. FIG. 19 is a diagram of composition of a communication apparatus 1900 according to this application.

As shown in FIG. 19, the communication apparatus 1900 includes at least one processor 1901. Optionally, the communication apparatus further includes a communication interface 1902.

When related program instructions are executed in the at least one processor 1901, the apparatus 1900 may be caused to implement the method provided in any one of the foregoing embodiments and any possible design thereof. Alternatively, the processor 1901 is configured to implement the method provided in any one of the foregoing embodiments and any possible design thereof by using a logic circuit or by executing code instructions.

The communication interface 1902 may be configured to receive program instructions and transmit the program instructions to the processor. Alternatively, the communication interface 1902 may be configured to perform communication interaction between the communication apparatus 1900 and another communication device, for example, exchange control signaling and/or service data. For example, the communication interface 1902 may be configured to receive a signal from an apparatus other than the communication apparatus 1900 and transmit the signal to the processor 1901, or send a signal from the processor 1901 to a communication apparatus other than the communication apparatus 1900.

Optionally, the communication interface 1902 may be code and/or data read/write interface circuit, or the communication interface 1902 may be a signal transmission interface circuit between a communication processor and a transceiver, or may be a pin of a chip.

Optionally, the communication apparatus 1900 may further include at least one memory 1903, and the memory 1903 may be configured to store required related program instructions and/or data.

It should be noted that the memory 1903 may be independent of the processor 1901, or may be integrated with the processor 1901. The memory 1903 may be located inside the communication apparatus 1900, or may be located outside the communication apparatus 1900. This is not limited.

Optionally, the communication apparatus 1900 may further include a power supply circuit 1904, and the power supply circuit 1904 may be configured to supply power to the processor 1901. The power supply circuit 1904 may be located in a same chip as the processor 1901, or may be located in a chip other than a chip in which the processor 1901 is located.

Optionally, the communication apparatus 1900 may further include a bus 1905, and parts of the communication apparatus 1900 may be interconnected through the bus 1905.

In some embodiments, in terms of hardware implementation, a person skilled in the art may figure out that the communication apparatus 1700 shown in FIG. 17 may be in a form of the communication apparatus 1900 shown in FIG. 19.

In an example, a function/an implementation process of the processing module 1701 in FIG. 17 may be implemented by the processor 1901 in the communication apparatus 1900 shown in FIG. 19 by invoking the computer-executable instructions stored in the memory 1903. A function/an implementation process of the transceiver module 1702 in FIG. 17 may be implemented by the communication interface 1902 in the communication apparatus 1900 shown in FIG. 19.

It should be noted that the structure shown in FIG. 19 does not constitute a specific limitation on the terminal device. For example, in some other embodiments of this application, the terminal device may include more or fewer components than those shown in the figure, some components may be combined, some components may be split, or the components may be differently arranged. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in this embodiment of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the methods in any foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, that is, may be located in one position, or may be distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A communication method, comprising:
after a power headroom report PHR is triggered, determining first information based on a first physical uplink shared channel PUSCH, and determining second information based on a second PUSCH, wherein
the first information comprises a first PHR, the first PHR is determined based on a first parameter corresponding to a first transmission occasion of the first PUSCH, the first transmission occasion comprises a first time unit, the first time unit belongs to a first type of time unit, the first type of time unit is a subband full-duplex SBFD time unit or a non-SBFD time unit, and the first parameter is used to determine a transmit power of the first PUSCH on the first transmission occasion; and
the second information comprises a second PHR, the second PHR is determined based on a second parameter corresponding to a second transmission occasion of the second PUSCH, the second transmission occasion comprises a second time unit, the second time unit is determined based on a second type of time unit, the second type of time unit is determined based on the first type of time unit, the second type of time unit is different from the first type of time unit, and the second parameter is used to determine a transmit power of the second PUSCH on the second transmission occasion;
sending the first information, wherein the first information is carried on the first PUSCH;
sending the second information, wherein the second information is carried on the second PUSCH; and
canceling the triggered PHR.

2. The method according to claim 1, wherein
the first information further comprises time unit type information of the first type of time unit.

3. The method according to claim 1 or 2, wherein
the second information further comprises time unit type information of the second type of time unit.

4. The method according to any one of claims 1 to 3, wherein
the first information further comprises first power information, and the first power information indicates a maximum transmit power of the first PUSCH on the first transmission occasion.

5. The method according to any one of claims 1 to 4, wherein
the second information further comprises second power information, and the second power information indicates a maximum transmit power of the second PUSCH on the second transmission occasion.

6. The method according to any one of claims 1 to 5, wherein the first transmission occasion is the 1^{st} transmission occasion of the first PUSCH, and/or the second transmission occasion is the 1^{st} transmission occasion of the second PUSCH.

7. The method according to any one of claims 1 to 6, wherein
the first PUSCH belongs to a PUSCH scheduled by using first DCI, and the first DCI is the 1^{st} piece of DCI that satisfies a first condition after the PHR is triggered, wherein
the first condition comprises at least one of the following:
the first DCI is DCI used to schedule a transport block for initial transmission after the PHR is triggered, the transport block scheduled by using the first DCI comprises a first transport block, and the first transport block comprises the first information; or
the PUSCH scheduled by using the first DCI can accommodate the first information.

8. The method according to any one of claims 1 to 6, wherein
the first PUSCH is the 1^{st} PUSCH that satisfies a second condition after the PHR is triggered, wherein
the second condition comprises at least one of the following:
first duration corresponding to the first PUSCH is greater than or equal to first PUSCH preparation duration, and the first duration is a time interval between triggering of the PHR and the 1^{st} symbol of the first PUSCH; or
the first PUSCH can accommodate the first information.

9. The method according to any one of claims 1 to 8, wherein
the second PUSCH belongs to a PUSCH scheduled by using second DCI, and the second DCI is the 1^{st} piece of DCI that satisfies a third condition after the PHR is triggered, wherein
the third condition comprises at least one of the following:
the second DCI is DCI used to schedule a transport block for initial transmission after the PHR is triggered, the transport block scheduled by using the second DCI comprises a second transport block, and the second transport block comprises the second information; or
the PUSCH scheduled by using the second DCI can accommodate the second information.

10. The method according to any one of claims 1 to 8, wherein
the second PUSCH is the 1^{st} PUSCH that satisfies a fourth condition after the PHR is triggered, wherein
the fourth condition comprises at least one of the following:
second duration corresponding to the second PUSCH is greater than or equal to the first PUSCH preparation duration, and the second duration is a time interval between triggering of the PHR and the 1^{st} symbol of the second PUSCH; or
the second PUSCH can accommodate the second information.

11. A communication method, comprising:
updating a first time unit type after a power headroom report PHR is triggered, wherein an updated first time unit type is a subband full-duplex SBFD time unit or a non-SBFD time unit;
determining third information based on a fifth physical uplink shared channel PUSCH, wherein the third information comprises a fifth PHR, the fifth PHR is determined based on a fifth parameter corresponding to a fifth transmission occasion of the fifth PUSCH, the fifth transmission occasion comprises a fifth time unit, the fifth time unit belongs to the updated first time unit type, and the fifth parameter is used to determine a transmit power of the fifth PUSCH on the fifth transmission occasion;
sending the third information, wherein the third information is carried on the fifth PUSCH; and
canceling the triggered PHR.

12. The method according to claim 11, wherein
updating the first time unit type comprises:
updating the first time unit type based on at least one of a value of a first counter, a first pattern, or a first result, wherein
the first pattern comprises at least one time unit, and the at least one time unit comprises the SBFD time unit and/or the non-SBFD time unit; and
the first result is a time unit type after the last update of the first time unit type, and the time unit type is an SBFD time unit or a non-SBFD time unit.

13. The method according to claim 12, wherein
the first pattern comprises: {SBFD, SBFD, non-SBFD, non-SBFD}.

14. The method according to claim 12, wherein the method further comprises:
updating the value of the first counter, wherein
when the value of the first counter is not equal to a first threshold, updating the value of the first counter comprises: increasing the value of the first counter by 1; or
when the value of the first counter is equal to the first threshold, updating the value of the first counter comprises: resetting the first counter.

15. The method according to claim 12 or 14, wherein
updating the first time unit type based on the value of the first counter comprises:
when the value of the first counter is equal to the first threshold,
if the first time unit type before the update is the SBFD time unit, the updated first time unit type is the non-SBFD time unit; or
if the first time unit type before the update is the non-SBFD time unit, the updated first time unit type is the SBFD time unit.

16. The method according to claim 14 or 15, wherein
the first threshold is predefined; or the first threshold is a parameter configured by a first network device, and the first network device is a network device corresponding to the fifth PUSCH.

17. The method according to any one of claims 11 to 16, wherein
the third information further comprises information about the updated first time unit type;
and/or
the third information further comprises third power information, and the third power information indicates a maximum transmit power of the fifth PUSCH on the fifth transmission occasion.

18. The method according to any one of claims 11 to 17, wherein the fifth transmission occasion is the 1^{st} transmission occasion of the fifth PUSCH.

19. The method according to any one of claims 11 to 18, wherein
the fifth PUSCH belongs to a PUSCH scheduled by using fifth DCI, and the fifth DCI is the 1^{st} piece of DCI that satisfies a fifth condition after the PHR is triggered, wherein
the fifth condition comprises at least one of the following:
the fifth DCI is DCI used to schedule a transport block for initial transmission after the PHR is triggered, the transport block scheduled by using the fifth DCI comprises a third transport block, and the third transport block comprises the third information; or
the PUSCH scheduled by using the fifth DCI can accommodate the third information.

20. The method according to any one of claims 11 to 18, wherein
the fifth PUSCH is the 1^{st} PUSCH that satisfies a sixth condition after the PHR is triggered, wherein
the sixth condition comprises at least one of the following:
third duration corresponding to the fifth PUSCH is greater than or equal to first PUSCH preparation duration, and the third duration is a time interval between triggering of the PHR and the 1^{st} symbol of the fifth PUSCH; or
the fifth PUSCH can accommodate the third information.

21. A communication apparatus, wherein the communication apparatus is configured to implement the method according to any one of claims 1 to 10, or the communication apparatus is configured to implement the method according to any one of claims 11 to 20.

22. The communication apparatus according to claim 21, wherein the communication apparatus comprises a terminal device or a chip.

23. A computer-readable storage medium, storing a computer program or instructions, wherein when the computer program or the instructions are executed, the method according to any one of claims 1 to 10 is implemented, or the method according to any one of claims 11 to 20 is implemented.

24. A computer program product, wherein when the computer program product runs, the method according to any one of claims 1 to 10 is performed, or the method according to any one of claims 11 to 20 is performed.
